# EUROPEAN PATENT SPECIFICATION

(11) **EP 1 128 632 B1**
(45) Date of publication and mention of the grant of the patent: **26.04.2006**
(21) Application number: 01102841.2
(22) Date of filing: 13.02.2001
(51) Int. Cl.: H04L 29/06

(54) **System and method for providing mobile data service**
System und Verfahren für mobilen Datendienst
Système et procédé pour fournir un service mobile de données

(30) Priority: 21.02.2000 JP 2000043408
(43) Date of publication of application: 29.08.2001
(60) Divisional application: 05024828.5
(73) Proprietor: FUJITSU LIMITED, Kawasaki-shi, Kanagawa 211-8588 (JP)
(72) Inventor: Igarashi, Yoichiro, Fujitsu Limited, Kawasaki-shi, Kanagawa 211-8588 (JP); Yamamura, Shinya, Fujitsu Nishi-Nihon, Sawara-ku, Fukukoka-shi, Fukuoka814-8588 (JP); Kakemizu, Mitsuaki, Fujitsu Limited, Kawasaki-shi, Kanagawa 211-8588 (JP); Murata, Kazunori, Fujitsu Nishi-Nihon, Sawara-ku, Fukukoka-shi, Fukuoka814-8588 (JP); Wakamoto, Masaaki, Fujitsu Limited, Kawasaki-shi, Kanagawa 211-8588 (JP)
(74) Representative: HOFFMANN EITLE

(56) References cited:
- US-A- 5 915 220
- PERKINS C: "Mobile IP and security issue: an overview" IEEE/POPOV WORKSHOP ON INTERNET TECHNOLOGIES AND SERVICES. PROCEEDINGS. PROCEEDINGS OF IEEE-RPS JOINT CONFERENCE ON INTERNET TECHNOLOGIES AND SERVICES, XX, XX, 25 October 1999 (1999-10-25), pages 131-148, XP002175231
- RIGNEY C ET AL: "RFC 2058: Remote Authentication Dial In User Service (RADIUS)" January 1997 (1997-01) http://www.ietf.org/rfc/rfc2058.txt XP002203019
- PORTA LA T F ET AL: "MOBILE IP AND WIDE AREA WIRELESS DATA" WCNC. IEEE WIRELESS COMMUNICATIONS AND NETWORKING CONFERENCE, XX, XX, 21 September 1999 (1999-09-21), pages 1528-1532, XP002145005
- 3rd Generation Partnership Project - Technical Specification Group Services and System Aspects: "Combined GSM and MobileIP Mobility Handling in UMTS IP CN (3G TR 23.923 version 1.0.0)" 06 October 1999 (1999-10-06) ftp://ftp.3gpp.org/specs/archive/23_series /23.923/ XP002203015

## Description

### Background of the Invention

### Field of the Invention

The present invention relates to a system and a method distributing service information in a network, and more particularly, to a system and a method distributing to network devices information about a service provided by a network in the network that accommodates mobile nodes.

### Description of the Related Art

With the rapid expansion of the Internet, the volume of IP packet traffic has been sharply increasing. Also, with the popularization of cellular phones, standardization has been advancing by IMT-2000 (International Mobile Telecommunications 2000), and high-speed IP communications are expected to become widespread under a mobile environment. However, it cannot be said that the techniques for enhancing the functions of IP communications (for example, QoS (Quality of Service), a value-added service such as a network-wide load distribution of a WWW server, etc.) have not fully matured although they are likely to be in great demand.

As one method controlling an IP network, PBN (Policy-Based Networking) is proposed mainly by U.S. vendors.

With the PBN, an operation policy is set in a network device arranged on a network, and each network device operates in compliance with the policy, whereby diversified value-added services are provided. Examples of the value-added services include guarantee of a bandwidth, guarantee of a delay time, packet filtering, access restriction, etc. To provide these services, RSVP (Resource Reservation Protocol), Diff-Serv (Differentiated Services), etc. are frequently used. The Diff-Serv is a protocol for preferentially transferring a particular packet based on the priority assigned to each packet.

However, since a mobile environment is not fully considered in the normal PBN, the following problems occur. Namely, if a policy (the above described QoS, etc.) is set for each mobile terminal in the PBN, the corresponding policy must be set for all of network devices that can possibly accommodate the mobile terminal. As a result, the amount of setting the policy in the entire network increases. Additionally, because the number of network devices that can possibly accommodate the mobile terminal is very large, it is impractical to set the policy for each mobile terminal in each of the devices. Furthermore, if information notified in the PBN is applied individually to corresponding fundamental service such as a mobile IP, etc., it is necessary to prepare and review a specification for each service.

As a protocol for accommodating a mobile terminal in a network device, IP Mobility Support (hereinafter referred to as a "mobile IP" or "MIP") is issued by RFC 2002.

In an IP network where voice and data communications are integrated and terminals of various types are connected, it is essential to implement the QoS function for the purpose of protecting delay-sensitive traffic or traffic with high business priority. As a method implementing the QoS function, Int-Serv, Diff-Serv, etc. are proposed. The Diff-Serv with a small overhead is considered to be promising for a carrier or a backbone network among the proposed methods.

However, with the Diff-serv, policies must be set for all of network devices on a path. Therefore, network management is complicated only with the Diff-Serv. As a result, a concept is proposed such that a policy server is arranged on a network, and the policy server sets policies for respective devices, whereby the entire network is managed in a centralized manner (this concept is sometimes referred to as the PBN).

However, in a seamless global network configured by various providers and carriers that accommodate mobile terminals, it is necessary to allow all of local networks to determine a policy for a possibly connected user and to set information for network devices. If attempts are made to implement this with the PBN, each of the local networks must store the policy information of all of users, or policy information must be set beforehand for all of the network devices to which a user can possibly be connected. However, since the number of users is very large, it is extremely inefficient and impractical to use this method.

Furthermore, if each network device is made to continuously hold the policy information of all of users, the memory amount of a network device must be increased, leading to a deterioration of the throughput. In contrast, if a method inquiring a policy server on demand without making each network device hold policy information is adopted, the overhead of an inquiry becomes large, leading to a greater possibility that SLA (Service Level Agreement) cannot be complied.

To overcome the above described problems, the applicant of the present invention previously proposed the method distributing the information about a value-added service to network devices by using a protocol which is similar and relevant to the mobile IP. A patent application disclosing this method was filed (Patent Application Numbers in Japan are 11-276703 and 2000-101414, and Application Number in United States is 09/672, 866). Hereinafter, the mobile IP and the method proposed in that patent application will be briefly described.

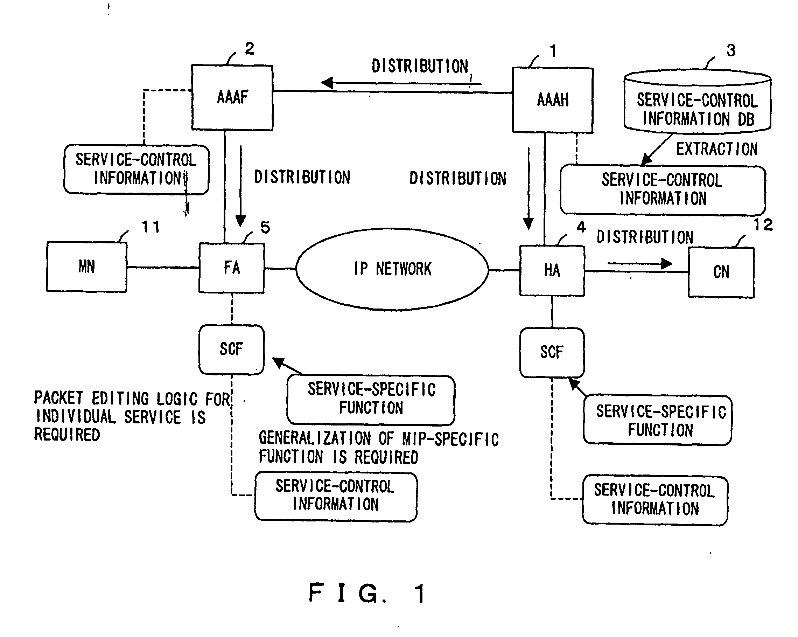

Fig. 1 is a schematic diagram for explaining the mobile IP and the previously filed invention. An AAAH (Authentication, Authorization and Accounting Home) 1 and an AAAF (Authentication, Authorization and Accounting Foreign) 2 authenticate a mobile node (MN) 11, determine whether or not to authorize an access to/from the mobile node 11, and perform an accounting process for the mobile node 11. A service control database 3 stores the information (service control information) about a service provided to each mobile node 11.

An HA (Home Agent) 4 and an FA (Foreign Agent) 5 are routers which accommodate the mobile node 11, and relay IP packets according to the service control information distributed from the AAAH 1 or the AAAF 2.

This network comprises: (1) the function for detecting the location of a mobile node 11; (2) the function for registering the location of the mobile node 11; and (3) the function for transferring packets to the mobile node 11 at a location where the mobile node visits.

Each FA periodically broadcasts an advertisement message. The IP address of the corresponding FA is included in the advertisement message. Accordingly, if the mobile node 11 moves from the communication area of one FA to that of another, the IP address included in the advertisement message received by the mobile node 11 will change at a certain time point. When the change in the IP address in the advertisement message is detected, the mobile node 11 is recognized to enter the communication area of a different FA, and the IP address of the mobile node 11 is notified to the new FA and HA 4. At this time, the new FA notifies its IP address to the HA 4. In this way, the new FA that newly accommodates the mobile node 11 is registered to the HA 4, and the IP address of the mobile node 11 is registered to the new FA.

A packet transfer from a CN (Correspondent Node) 12 to the mobile node 11 is made as follows. Namely, the packet to which the IP address of the mobile node 11 is assigned as a destination address is once transferred to the HA 4. Upon receipt of the packet addressed to the mobile node 11, the HA 4 transfers this packet to the FA that currently accommodates the mobile node 11. Here, the FA 5 is assumed to accommodate the mobile node 11. In this case, the FA 5 receives the packet from the HA 4, and transmits the packet to the mobile node 11. In this way, the packet is transferred to the node at a location where the mobile node visits.

With the above described method, service control information for each mobile node is distributed to the FA which accommodates the mobile node 11 according to the location registration. For example, if the mobile node 11 enters the communication area of the FA 5, the AAAH 1 extracts the service control information of the mobile node 11 from the service control database 3, and distributes the extracted information to the HA 4 and the FA 5. The HA 4 and the FA 5 then execute the value-added service (QoS, packet filtering, and so on) requested by the mobile node 11 according to the service control information.

In this way, a service equivalent to the existing PBN can be provided under the mobile environment. At this time, the service control information (corresponding to a PBN policy) is distributed not to all of FAs, but only to the FA which actually accommodates the mobile node 11.

However, this method still has the following problems.
(1) Since service control information is configured in a format that differs depending on each service, an HA and an FA must be conscious of a service.
(2) Service control information is generated for all of mobile terminals, and distributed to an HA and an FA regardless of whether or not a contract to receive a value-added service is made. As a result, an overhead becomes large.
(3) The function for replacing the processes specific to the mobile IP with the processes corresponding to the functions inherent in a router is required. Accordingly, if the functions of the mobile IP are expanded, the programs of an HA and an FA must be modified in some cases. Consequently, there is a possibility that a service control method itself must be changed.
(4) In a system where a single virtual address is assigned to a plurality of hardware resources, synchronization between an HA and an FA is not established for the procedure for selecting one of the plurality of hardware resources when a packet is transferred to the virtual address.

In an article entitled "Mobile IP and Security Issue: An Overview" dated 25 October 1999, by C. Parkins, pages 131 to 148, there is disclosed a procedure of registering the location of a mobile node in a system comprising an AAA server, a home agent and a foreign agent, and a method for authenticating a mobile IP between different management domains.

In "Remote Authentication Dial In User Service (RADIUS)" by C. Rigney et al., January 1997, IEFT RFC 2058, there is discussed the publicly known authentication protocol, RADIUS. A system providing an authenticated user with a corresponding service is disclosed.

### Summary of the Invention

The present invention aims at providing a method defining a value-added service for each terminal in an IP network including a mobile environment, and allowing a value-added service to be added and extended with greater scalability.

A mobile communications service providing system according to the present invention assumes the configuration where the location registration request information transmitted from a mobile node is notified to a home agent via a foreign agent and a server system, and the information in reply to the location registration request information is returned from the home agent to the mobile node via the server system and the foreign agent, whereby the location of the mobile node is registered to the home agent and the foreign agent, and a mobile communications service is provided based on the registration. The home agent and the foreign agent comprise a controlling unit for determining the transfer destination of a packet. The server system comprises: an extracting unit extracting a service profile corresponding to the mobile node from the database for managing service profiles including the information for providing a service according to the location registration request information from the mobile node, based on a mobile node identifier identifying the mobile node included in the location registration request information; a service managing unit editing the service profile extracted by the extracting unit into the format which is available to the controlling unit; and a distributing unit distributing the service profile edited by the service managing unit to the home agent and the foreign agent. The home agent and the foreign agent provide a service by utilizing the controlling unit according to the service profile distributed by the server system.

According to the present invention, a service profile is edited by a server system into the format that is available to a home agent and a foreign agent unchanged. As a result, the home agent and the foreign agent do not need to be conscious of the type of a service when providing a requested service to each mobile node. As a result, modifications are reduced in the programs or the data used by the home agent and the foreign agent when a service is added/changed.

Note that the server system may not distribute a service profile to the home agent and the foreign agent if the mobile node does not request a value-added service in the above described configuration. At this time, the home agent and the foreign agent may respectively provide a fundamental service according to the information that the home and the foreign agents themselves generate.

In this configuration, the amounts of information exchanged between the server system, and the home and the foreign agent decrease. Additionally, the memory space for storing a service profile can be reduced in each home agent and foreign agent, which contributes to an improvement in the processing speed.

Additionally, in the above described configuration, it may be assumed that an address range available to a predetermined service is specified beforehand, a service profile including the information representing the address range specified beforehand as a condition for extracting a particular packet from among received packets may be preset in the home agent and the foreign agent, and the server system may assign an address within the address range specified beforehand to the mobile node which requests the predetermined service.

In this configuration, the packet transmitted to/from the mobile node is extracted by the home agent or the foreign agent according to the service profile, and the service (namely, the above described predetermined service) corresponding to the service profile is executed. Accordingly, also in this configuration, the amounts of information exchanged between the server system, and the home agent and the foreign agent decrease. Furthermore, the memory space for storing a service profile can be reduced in each home agent and foreign agent, which contributes to an improvement in the processing speed.

Furthermore, in the above described configuration, when providing a service for transferring a packet having a single virtual address as a destination address which is assigned to a plurality of mobile nodes to an arbitrary one of the plurality of mobile nodes, an address proxy server which receives the packet assigned the above described virtual address may be arranged, and the server system may distribute to the address proxy server the service profile for extracting the packet assigned the virtual address and for transferring the packet to a particular mobile node among the plurality of mobile nodes, and may also distribute to a foreign agent the service profile for transferring the packet addressed to the foreign agent which accommodates the particular mobile node to the particular mobile node.

In this configuration, the transfer of the packet assigned the virtual address is controlled by the server system in a unified manner. Accordingly, the packet having the virtual address as a destination is securely transferred to the particular node determined by the server system.

According to another aspect of the present invention there is provided a mobile communications service providing method with which location registration request information is transmitted from a mobile node to a home agent via a foreign agent and a server system, and information in reply to the location registration request information is returned from the home agent to the mobile node via the server system and the foreign agent, so that a location of the mobile node is registered to the home agent and the foreign agent, and a mobile communications service is provided based on the registration, characterized in that: the home agent and the foreign agent comprise a controlling unit determining a transfer destination of a packet, the method comprising: extracting, by the server system, a service profile corresponding to the mobile node from a database for managing a service profile which includes information for providing a service according to the location registration request information from the mobile node based on a mobile node identifier identifying the mobile node included in the location registration request information; editing, by the server system, the extracted service profile into a format that is available to the controlling unit; and distributing the edited service profile from the server system to the home agent and the foreign agent, and the home agent and the foreign agent provide a service by using the controlling unit according to the service profile edited by said service managing unit.

According to a further aspect of the present invention there is provided a server system for use in a mobile communications service providing system in which location registration request information is transmitted from a mobile node to a home agent via a foreign agent and a server system, and information in reply to the location registration request information is returned from the home agent to the mobile node via the server system and the foreign agent, so that a location of the mobile node is registered to the home agent and the foreign agent, and a mobile communications service is provided based on the registration, characterized by said server system comprising: an extracting unit extracting a service profile for the mobile node from a database for managing a service profile which includes information for providing a service according to the location registration request information from a mobile node based on a mobile node identifier identifying the mobile node included in the location registration request information; a service managing unit editing the service profile extracted by said extracting unit into a format that is available to a controlling unit for determining a transfer destination of a packet; and a distributing unit distributing the edited service profile to the home agent and the foreign agent so that the home agent and the foreign agent provide a service by using the controlling unit according to the service profile edited by said service managing unit.

According to yet another aspect of the present invention there is provided an agent device as a home agent or a foreign agent for use in a mobile communications service providing system in which location registration request information is transmitted from a mobile node to the home agent via the foreign agent and a server system, and information in reply to the location registration request information is returned from the home agent to the mobile node via the server system and the foreign agent, so that a location of a mobile node is registered to the home agent and the foreign agent, and a mobile communications service is provided based on the registration, characterized by said agent comprising: a service-independent unit determining a processing method for a received packet according to header information of the received packet; an individual service controlling unit using said service-independent unit according to a service profile edited into a format that is available to said service-independent unit by the server system; and a packet controlling unit processing a packet according to a processing result of use of said service-independent unit, and determining a transfer destination of a packet.

### Brief Description of the Drawings

Fig. 1 is a schematic diagram for explaining a mobile IP and the previously filed invention;
Fig. 2 is a schematic diagram explaining the background of the present invention;
Fig. 3 is a schematic diagram showing the network configuration of a embodiment according to the present invention;
Fig. 4 is a block diagram showing the functions of the embodiment according to the present invention;
Fig. 5 is a block diagram showing the functions of an AAAH;
Fig. 6 exemplifies the original data of service profiles stored in a service control database;
Fig. 7 exemplifies the service qualities registered to the service control database;
Fig. 8 exemplifies accounting methods registered to the service control database;
Fig. 9 exemplifies a restriction condition registered to the service control database;
Fig. 10 exemplifies the profile for a Diff-Serv service;
Fig. 11 exemplifies the profile for an ANYCAST service;
Fig. 12 exemplifies the service profile generated by an AAAH;
Fig. 13 exemplifies an ANYCAST address management table;
Fig. 14 exemplifies the session transaction of the AAAH;
Fig. 15 is a block diagram showing the function of an AAAF;
Fig. 16 exemplifies the session transaction of the AAAF;
Fig. 17 is a block diagram showing the functions of an HA, an FA, and a CN;
Fig. 18 exemplifies the session transaction of the HA and the FA;
Fig. 19 exemplifies a service profile cache;
Fig. 20 exemplifies a search policy management table;
Fig. 21 exemplifies a visitor list;
Fig. 22 exemplifies mobility binding;
Fig. 23 exemplifies a binding cache;
Fig. 24 exemplifies an ANYCAST table;
Fig. 25 exemplifies a routing table;
Fig. 26 shows the sequence for distributing service profiles (No. 1);
Fig. 27 shows an initial state;
Figs. 28A and 28B exemplify the service profiles generated by the FA at the time of an initial configuration;
Fig. 29 exemplifies the service profile generated by the HA at the time of an initial configuration;
Fig. 30 shows the procedure for generating a service profile by the AAAH;
Figs. 31A and 31B exemplify the service profiles to be distributed to the HA;
Figs. 32A and 32B exemplify the service profiles to be distributed to the FA;
Fig. 33 shows the procedure for setting service profiles in the HA;
Fig. 34 shows the procedure for transferring service profiles to the AAAF;
Fig. 35 shows the procedure for setting service profiles in the FA;
Fig. 36 shows the procedure for transferring a packet from a mobile node to a correspondent node;
Fig. 37 shows the procedure for transferring a packet from the correspondent node to the mobile node;
Fig. 38 shows the sequence for distributing service profiles (No. 2);
Fig. 39 shows the sequence for distributing service profiles (No. 3);
Fig. 40 shows the sequence for distributing service profiles (No. 4);
Fig. 41 shows the sequence for distributing service profiles (No. 5);
Fig. 42 is a flowchart explaining the operations of the AAAH;
Fig. 43 is a flowchart explaining the operations of the AAAF (No. 1);
Fig. 44 is a flowchart explaining the operations of the AAAF (No. 2);
Fig. 45 is a flowchart explaining the operations of the HA, the FA, and the CN;
Fig. 46 exemplifies the service profile set in the HA;
Fig. 47 exemplifies the service profile set in the FA;
Fig. 48 shows an example of a method predetermining an IP address range used for service classes;
Fig. 49 exemplifies the sequence for setting a service profile in a route optimization procedure;
Fig. 50 is a schematic diagram explaining an ANYCAST service;
Fig. 51 exemplifies a service profile distributed to an address proxy server;
Fig. 52 exemplifies a service profile distributed to the HA;
Fig. 53 exemplifies a service profile distributed to the FA (No. 1);
Fig. 54 exemplifies a service profile generated by the FA;
Fig. 55 exemplifies a service profile distributed to the FA (No. 2);
Fig. 56 shows the sequence for setting ANYCAST information (No. 1);
Fig. 57 shows the sequence for setting the ANYCAST information (No. 2);
Fig. 58 shows the sequence for transferring a packet with an ANYCAST service;
Fig. 59 shows the sequence for canceling the registration to the ANYCAST service (No. 1);
Fig. 60 shows the sequence for canceling a registration to the ANYCAST service (No. 2);
Fig. 61 shows the format of the mobile IP;
Fig. 62A shows the format of an IP header;
Fig. 62B shows the format of a UDP header;
Figs. 63A through 63D show the format of a mobile IP registration request message;
Figs. 64A and 64B show the format of a mobile IP registration reply message;
Fig. 65 shows the format of a mobile IP BU message;
Fig. 66 shows the format of a mobile IP BA message;
Fig. 67 shows the format of a DIAMETER message;
Fig. 68 shows the format of the common header of the DIAMETER message;
Figs. 69A through 69C show the format of AVP of the DIAMETER message;
Fig. 70 shows the format of an AMR message of a DIAMETER protocol;
Fig. 71 shows the format of an HAR message of the DIAMETER protocol;
Fig. 72 shows the format of an AMA message of the DIAMETER protocol; and
Fig. 73 shows the format of an HAA message of the DIAMETER protocol.

### Description of the Preferred Embodiments

Hereinafter, embodiments according to the present invention will be described in the following order by referring to the drawings.
1. Background of the present invention
2. Outline of the present invention
3. Configuration of an entire system
4. Configuration of an AAAH
5. Configuration of an AAAF
6. Configurations of an HA, an FA, and a CN
7. Sequence for distributing service profiles
   7A. In the case where the AAAH specifies the HA
   7B. In the case where the AAAF specifies the HA
   7C. Flowchart of each entity
   7D. Management of service profiles
   7E. Route optimization
8. ANYCAST service

### 1. Background of the present invention

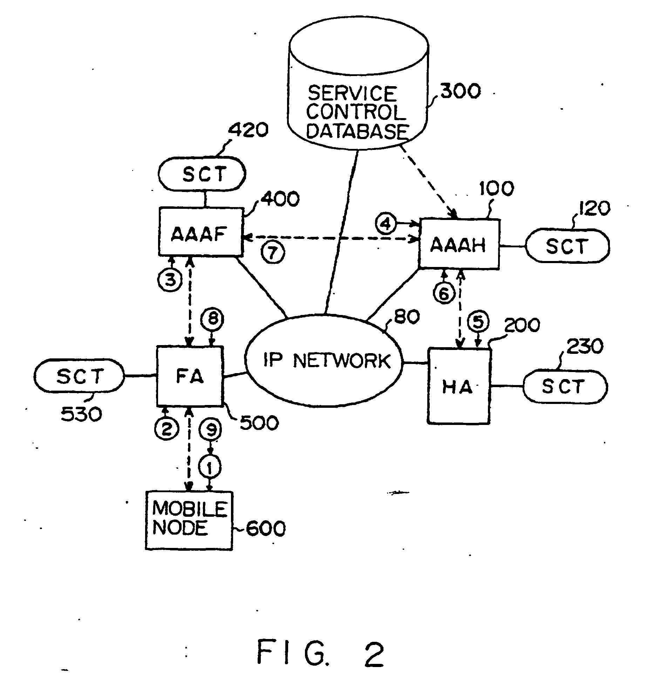

First of all, the background of the present invention is described by referring to Fig. 2. Provided here is the case where a mobile node accommodated by a home agent moves to the communication area of a foreign agent.

Procedural step 1: A home agent (HA) 200 and a foreign agent (FA) 500 periodically issue an agent advertisement message in which the IP address of either of the agents itself is set. Amobile node 600 determines whether the mobile node 600 itself stays in either the communication area of the home agent 200 or that of the foreign agent 500 by receiving an agent advertisement message. It is assumed that the mobile node 600 currently visits the communication area of the home agent 200.

Procedural step 2: When the mobile node 600 moves from the communication area of the home agent 200 to that of the foreign agent 500, it receives an agent advertisement message from the foreign agent 500. Upon receipt of this message, the mobile node 600 issues a location registration request message to the foreign agent 500. The information for identifying the mobile node 600 is set in this message.

Procedural step 3: Upon receipt of the location registration request message from the mobile node 600, the foreign agent 500 transmits an AMR (authentication request) message to an AAAF (Authentication, Authorization and Accounting Foreign) 400 via an IP network 80 so that authentication, authorization, accounting, etc. are performed. The information for identifying the mobile node 600 and the foreign agent 500 are set in this message.

Procedural step 4: The AAAF 400 identifies an AAAH (Authentication, Authorization and Accounting Home) 100, which performs the authentication of the mobile node 600, by analyzing the received message, and forwards the AMR message to the AAAH 100 via the IP network 80.

Procedural step 5: The AAAH 100 extracts necessary information from the received AMR message, and performs the authentication of the mobile node 600. The AAAH 100 extracts, for example, a mobile node identifier (NAI: Network Access Identifier) from the AMR message, and accesses a service control database 300 by using the extracted identifier as a key. As a result, a user profile (service profile information) corresponding to the mobile node 600 is extracted. If the AAAH 100 successfully performs the authentication of the AMR message, it adds the above described service profile information to an HAR (registration request) message, and forwards the message to the home agent 200 via the IP network 80.

Procedural step 6: The home agent 200 extracts information such as a session ID, lifetime, etc. from the received HAR message, and performs a location registration of the mobile node 600. Namely, the home agent 200 extracts from the HAR message the information for forwarding a packet addressed to the mobile node 600 to a location where the mobile node 600 visits, and generates service control information (a service profile table of a service control transaction 230). The resultant information is notified to the AAAH 100 by using an HAA (Home-Agent-MIP Answer: registration reply) message. At this time, the HAA message may include the service profile information of the mobile node 600.

Procedural step 7 : Upon receipt of the HAA message, the AAAH 100 extracts necessary information from the above described AMR message or user profile, and generates service control information (a service profile table of a service control transaction 120). Additionally, the AAAH 100 transmits to the AAAF 400 an AMA (AA-mobile-Node Answer: authentication reply) message as a message in reply to the AMR message. At this time, the above described service profile information is added to this AMA message.

Procedural step 8: The AAAF 400 extracts necessary information from the AMA message, and generates service control information (a service profile table of a service control transaction 420). Additionally, the AAAF 400 forwards the AMA message to the foreign agent 500.

Procedural step 9: The foreign agent 500 extracts necessary information from the AMA message, and generates service control information (a service profile table of a service control transaction 530). Furthermore, the foreign agent 500 transmits a registration reply message based on the AMA message, and transmits the generated message to the mobile node 600. In this way, the location registration procedure is completed. Thereafter, the foreign agent 500 provides the mobile node 600 with a service by using received service control information.

As described above, the location of the mobile node 600 is always managed by the home agent 200. Additionally, since the service control information for the mobile node 600 is transmitted to the foreign agent that is to accommodate the mobile node 600, the mobile node 600 can receive a service equivalent to the PBN at any location where there is the foreign agent.

In the above described network, the packet addressed to the mobile node 600 is once transferred to the home agent 200 in normal cases. Here, the home agent 200 recognizes that the mobile node 600 is accommodated by the foreign agent 500. Accordingly, the home agent 200 forwards a received packet to the foreign agent 500, which then forwards the packet to the mobile node 600.

### 2. Outline of the present invention

For understanding of explanation, terms are predefined. In the following description, an "individual service" indicates a set of services customized for each user. Additionally, a service entity (such as Diff-Serv, ANYCAST, etc.) configuring an individual service is referred to simply as a "service" . In the meantime, a service that is not customized for each user (such as a mobile IP stipulated by the IETF (Internet Engineering Task Force), etc.) is referred to as a "fundamental service".

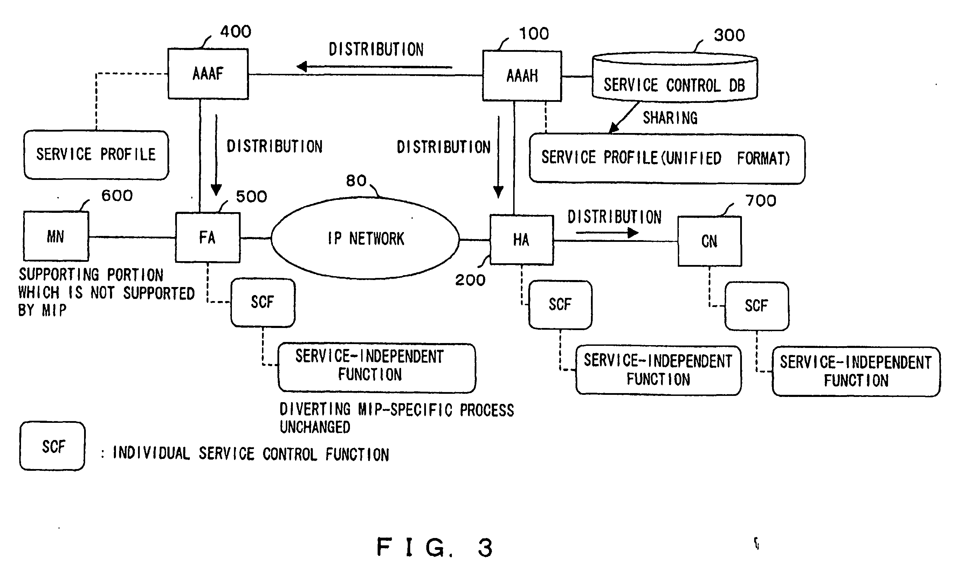

Fig. 3 is a schematic diagram showing the network configuration according to one embodiment of the present invention.

When a mobile node 600 moves to the communication area of a foreign agent 500, an AAAH 100 extracts the service control information corresponding to the mobile node 600 from a service control database 300 as explained by referring to Fig. 2. Note that the information (service profile) for providing an individual service requested by each user is stored in the service control database 300 for each user. Then, the AAAH 100 distributes the extracted service profile to the foreign agent 500. The format of the service profile is unified regardless of a service type. That is, the service profile does not include service-dependent information.

The service profile distributed from the AAAH 100 to the foreign agent 500 (and the home agent 200) is unified in a format that can be processed by the functions that the foreign agent 500 and the home agent 200 originally prepare. Here, the foreign agent 500 and the home agent 200 are implemented, for example, by routers. In this case, the functions that the foreign agent 500 and the home agent 200 originally prepare are, for example, (1) the function for routing a packet, (2) the function for extracting a particular packet from among received packets, (3) the editing function for rewriting part of the information of a received packet, and the like. These functions are implemented, for example, by the process for referencing a table which stores routing information, the process for making a matching between preset data and the header of a received packet, and the like. Accordingly, after editing or converting the information for providing each user with an individual service into the information used when the above described processes are performed (such as the information for specifying a table to be referenced, the information for specifying a matching key, etc.), the AAAH 100 distributes the edited information to the foreign agent 500 (and the home agent 200).

The configurations of each foreign agent 500 and each home agent 200 are fundamentally the same, and respectively include a service-independent function for controlling a fundamental service, and an individual service control function (SCF). The service profile distributed from the AAAH 100 is processed by the individual service control function. At this time, the service profile is written or converted in a format which can be processed by the function that the foreign agent 500 originally prepares. Accordingly, the foreign agent 500 can use the received service profile unchanged without editing it. The service-independent function and the individual service control function cooperate with each other, so that the foreign agent 500 provides a service according to the service profile.

If the location registration procedure of the mobile IP, the hand-off (handover) procedure of a mobile node, or a route optimization procedure and the above described functions are made to cooperate with one another, it becomes possible to control an individual service while taking full advantage of the functions specific to the mobile IP.

### 3. Configuration of a system of the present invention

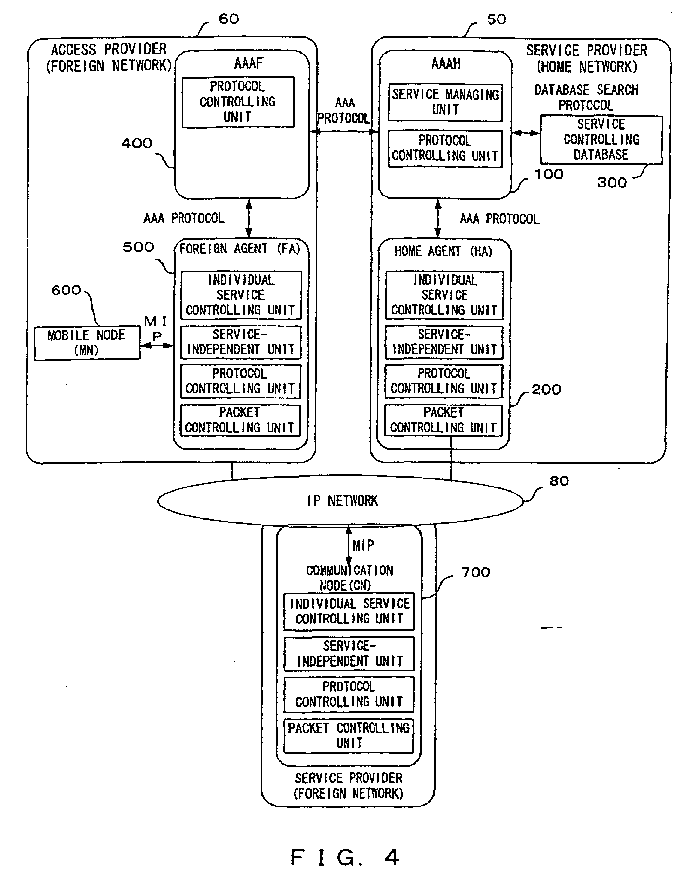

Fig. 4 is a block diagram showing the functions of the embodiment according to the present invention. The functions are respectively explained below by referring to Fig. 4.

A service provider (home network) 50, an access provider (foreign network) 60, and a correspondent node 700 are interconnected via an IP network 80 (or a mobile IP.

The service provider 50 includes an AAAH 100, a service control database 300 and a home agent (HA) 200. The connection between the AAAH 100 and the HA 200 is made, for example, by using an AAA protocol. Additionally, the AAAH 100 accesses the service control database 300 by using a predetermined database search protocol. The database search protocol is, for example, an LDAP (Light Directory Access Protocol) although it is not particularly limited.

The access provider 60 includes an AAAF 400 and a foreign agent (FA) 500. The connection between the AAAF 400 and the FA 500 is made, for example, by using the AAA protocol. In Fig. 4, a mobile node (MN) 600 is currently accommodated by the FA 500 with the mobile IP. The connection between the AAAH 100 and the AAAF 400 is made with the AAA protocol.

The AAAs (the AAAH 100 and the AAAF 400) are servers which perform authentication, authorization, and accounting. The configurations of the AAAH and the AAAF are fundamentally the same. The AAA that can access the database to which the subscriber data of a particular user is registered is referred to as an AAAH, and other AAAs are referred to as AAAFs, when attention is focused on the particular user.

The AAAH 100 has a function for notifying the HA 200 and the FA 500 of service profile information. The service profile information is extracted from the service control database 300 by a service managing unit. That is, the service managing unit of the AAAH 100 extracts from the service control database 300 the service profile of the user who issues an authentication request, and generates a service profile having a general-purpose format in which packet control information can be set. The service profile is notified to the HA 200 by using an HA registration request message (HAR), and to the FA 500 by using an authentication reply message (AMA) . Furthermore, the AAAH comprises an ANYCAST address management table for an ANYCAST service to be described later. In the meantime, the AAAF identifies the AAAH according to the NAI of a user, and performs a message exchange between the FA and the AAAH as a proxy.

Furthermore, the AAA according to the present invention executes the hand-off between ISPs, details of which have not yet stipulated by the IETF, and holds an extended session transaction for keeping the relationship with another entity to maintain the consistency of service control while a user is connected. Note that a protocol controlling unit is an interface for the AAA protocol.

The HA and the FA fundamentally have the same configuration, and are functional entities which are respectively defined by the RFC2002. If attention is focused on a certain mobile node, an agent which has the home address assigned to the mobile node is an HA, whereas an agent which does not have the home address assigned to the mobile node is an FA.

Upon receipt of a packet to which the home address of a mobile node is assigned as a destination, the HA encapsulates the packet and transmits the packet to the care-of address of the FA, which corresponds to the home address. This address is originally managed by a table referred to as mobility binding. Additionally, the HA is an AAA protocol client. Furthermore, the HA comprises a service-independent unit for executing the above described functions, a service profile cache for storing a service file set in the registration request (HAR) information from the AAAH, and an individual service controlling unit for performing packet control by referencing a search policy management table which defines the search policy of the service profile cache.

The FA decapsulates the packet which is encapsulated and transmitted, and forwards this packet to the link layer address corresponding to the home address. This address is originally managed by a table referred to as a visitor list. The FA is an access router of a mobile node, and is also an AAA protocol client at the same time. The FA further comprises a service-independent unit for executing the above described functions, a service profile cache for storing a service profile set in an authentication reply (AMA) message from the AAA, an individual service controlling unit for performing packet control by referencing a search policy management table which defines the search policy of the service profile cache, and an ANYCAST table which is a visitor list extended to store the information for an ANYCAST service.

The HA and the FA respectively comprise a session transaction for managing a DIAMETER session. A protocol controlling unit is an interface for the AAA protocol and the mobile IP. A packet controlling unit performs packet routing, filtering, header rewrite, etc.

The mobile node (MN) 600 is a mobile terminal having the functions for transmitting and receiving packets with the mobile IP. The correspondent node (CN) 700 transmits/receives packets to/from the mobile node 600. Also the correspondent node 700 comprises a service-independent unit, an individual service controlling unit, a protocol controlling unit, and a packet controlling unit.

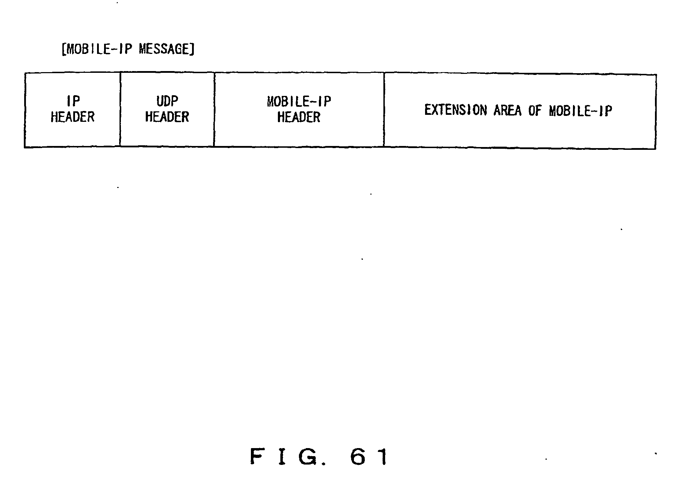

The mobile IP (MIP) is a protocol stipulated by the RFC2002. The mobile IP referred to in this specification includes extensions that can possibly be stipulated in the future. The format of the mobile IP is shown in Figs. 61 through 66.

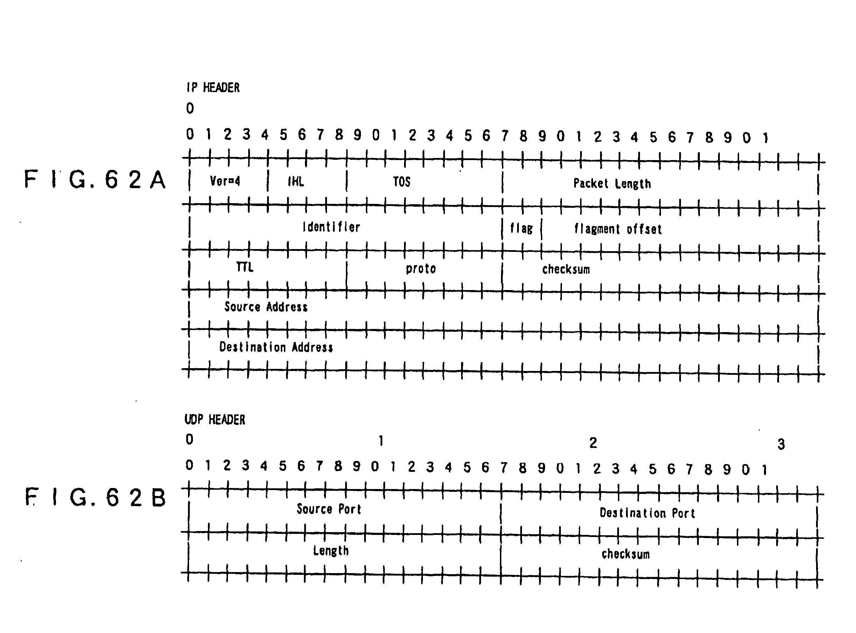

Fig. 61 shows the format of a mobile IP message. The IP header and the UDP header of this message are shown in Figs. 62A and 62B respectively. TOS (Type of Service), a source address, a destination address, etc. are set in the IP header, whereas a source port, a destination port, etc. are set in the UDP header.

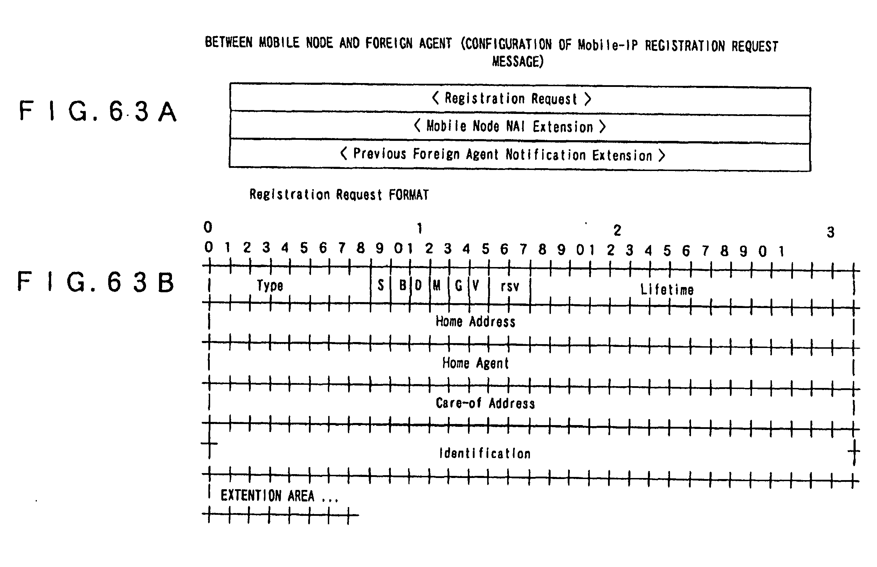

Fig. 63A shows the format of a mobile IP registration request message. This message is used between a mobile node and a foreign agent. Fig. 63B shows the format of Registration Request within the registration request message. The Registration Request includes Lifetime, Home Address, Home Agent, Care-of address, Identifier, etc., and further includes an extension area.

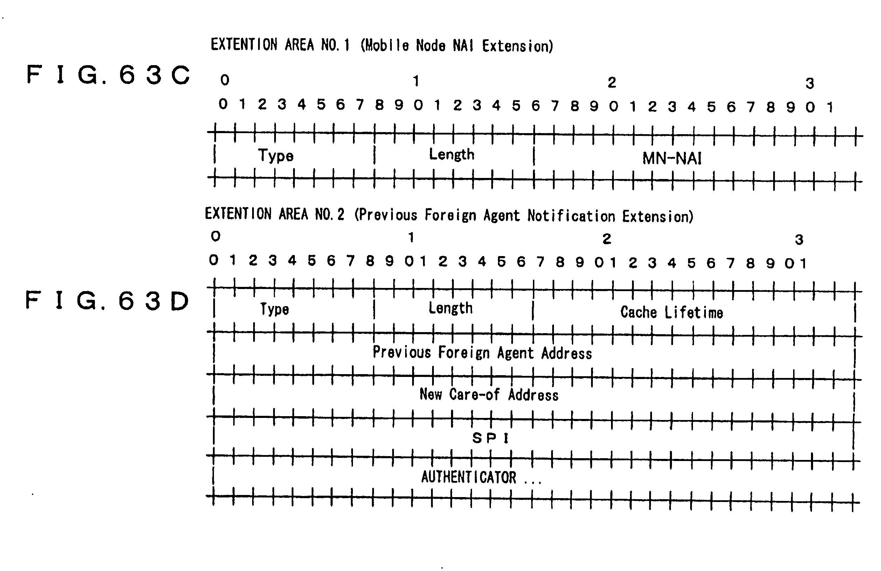

Fig. 63C shows the format of the extension area (Mobile Node NAI Extension) shown in Fig. 63B. In this extension area, the NAI of a mobile node is set. Fig. 63D shows the format of the extension area (Previous Foreign Agent Notification Extension) shown in Fig. 63B. In this extension area, the lifetime of a cache, the address of a previous foreign agent, a new care-of address, etc. are set.

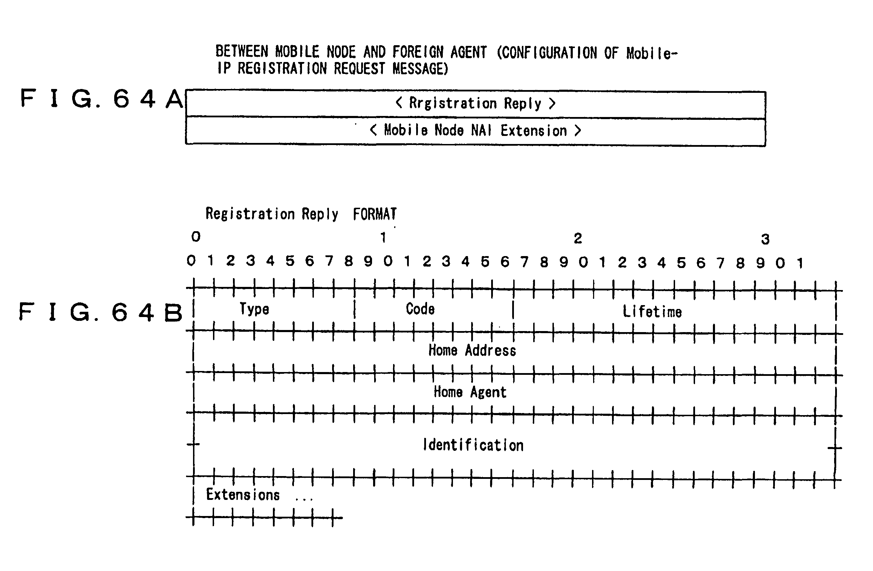

Fig. 64A shows the format of a mobile IP registration reply message. This message is used between a mobile node and a foreign agent. Fig. 64B shows the format of Registration Reply within the registration reply message. The Registration Reply includes a lifetime, a home address, a home agent, an identifier, etc., and further includes an extension area.

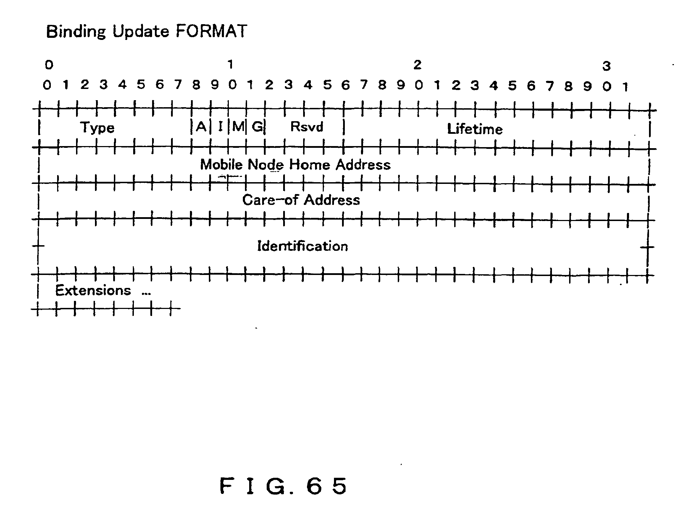

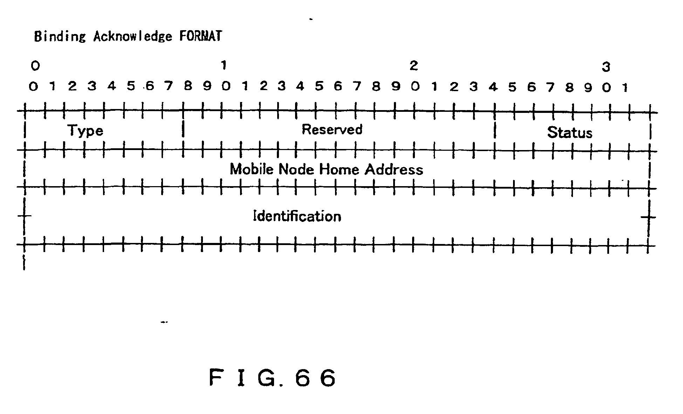

Fig. 65 shows the format of a mobile IP BU (Binding Update) message. This message is used between foreign agents, and between a home agent and a correspondent node. Fig. 66 shows the format of a mobile IP BA (Binding Acknowledge) message. Also this message is used between foreign agents, and between a home agent and a correspondent node.

The AAA protocol is not particularly limited. However, the DIAMETER protocol that is currently being reviewed by the IETF is assumed to be used in the embodiments. The AAA protocol is available to all of protocols that can transmit the information about authentication, authorization, accounting, and policies. The service profile information according to the present invention is transmitted with an extensible attribute parameter that is referred to as an AVP (Attribute Value Pair) defined by the DIAMETER protocol. The extended attribute is service profile information.

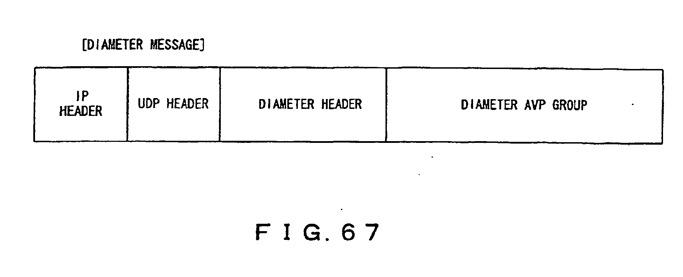

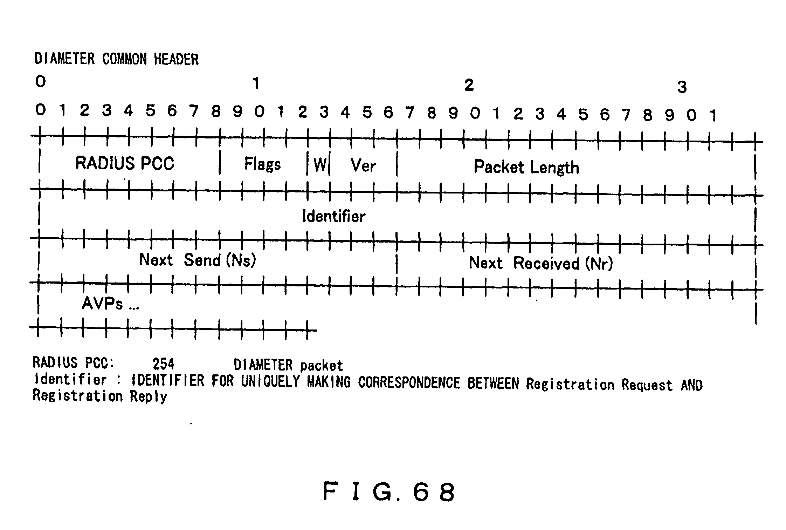

Fig. 67 shows the format of a DIAMETER message. The common header of this message is shown in Fig. 68. Here, Identifier uniquely identifies a relation between Registration Request and Registration Reply.

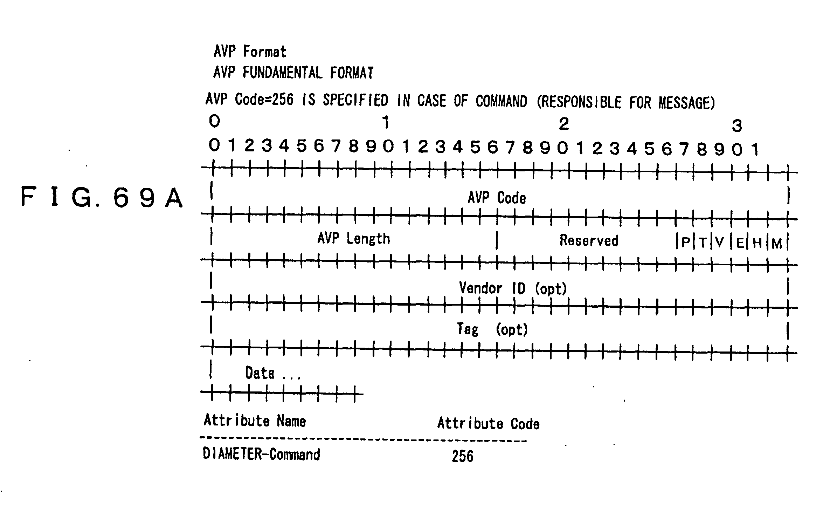

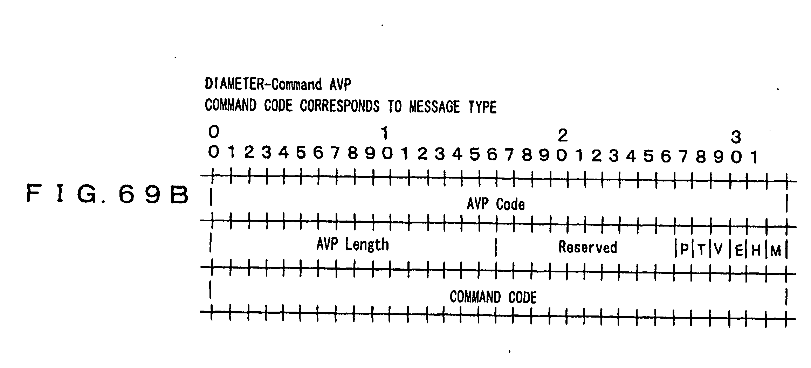

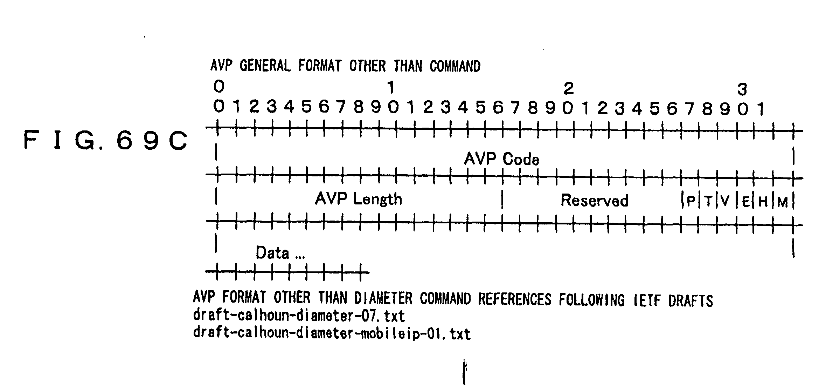

Fig. 69A shows the fundamental format of the DIAMETER AVP (Attribute Value Pair). If AVP code=256 is set in this fundamental format, a DIAMETER command is generated. The format of the DIAMETER command is shown in Fig. 69B. The value corresponding to a message is set in a command code. Fig. 69C shows the format of a general AVP other than the DIAMETER command.

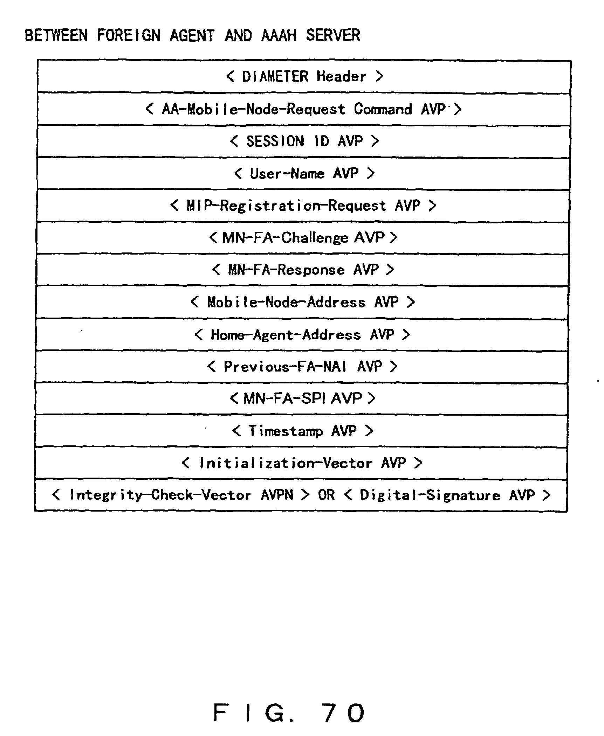

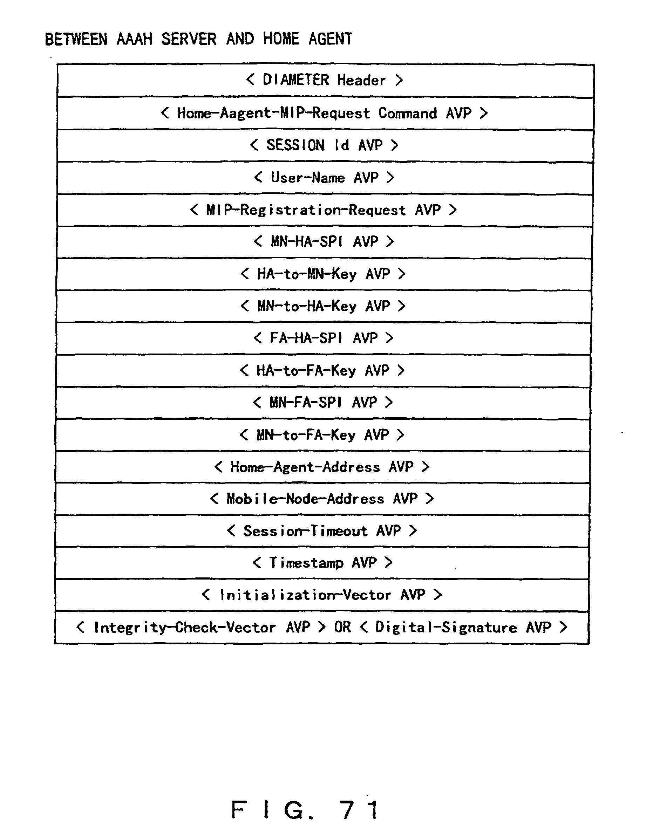

Fig. 70 shows the format of an AMR message of the DIAMETER protocol. This message is used between a foreign agent and an AAAH server. Fig. 71 shows the format of an HAR message of the DIAMETER protocol. This message is used between an AAAH server and a home agent.

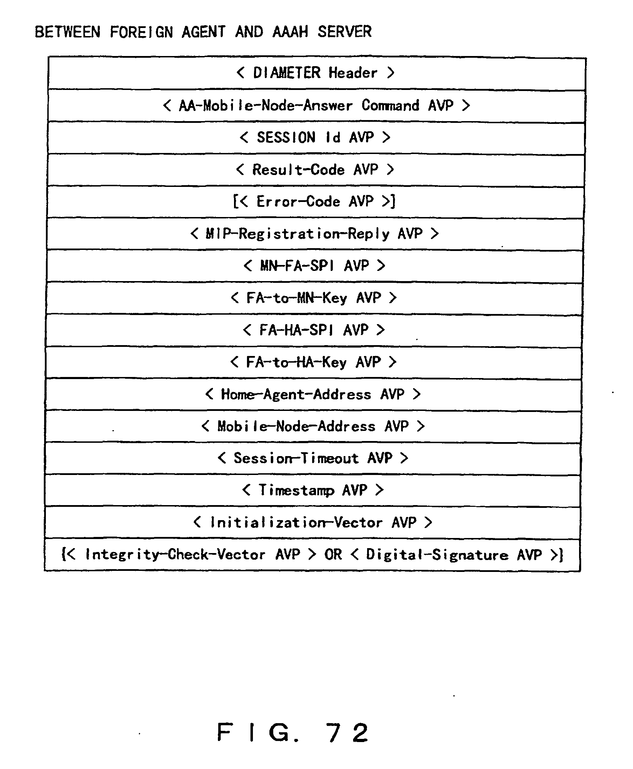

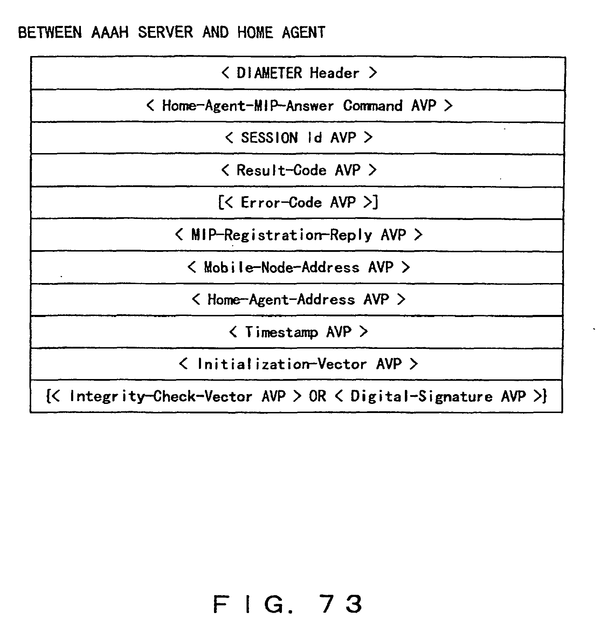

Fig. 72 shows the format of an AMA message of the DIAMETER protocol. This message is used between a foreign agent and an AAAH server. Fig. 73 shows the format of an HAA message of the DIAMETER protocol. This message is used between an AAAH server and a home agent.

### 4. Configuration of AAAH

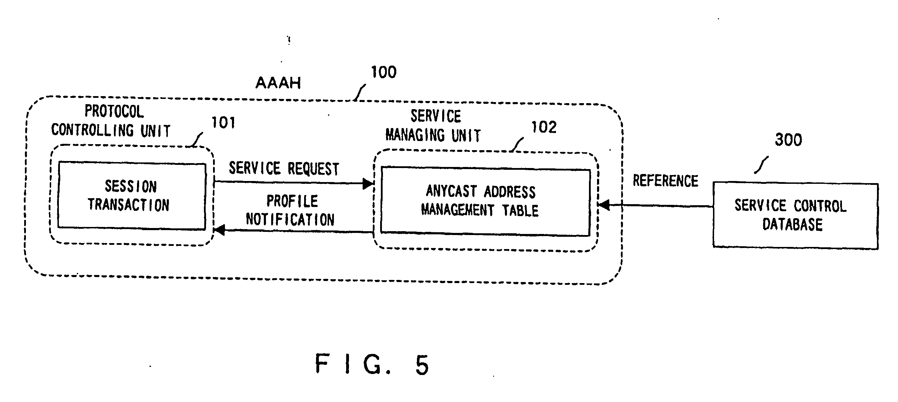

Fig. 5 is a block diagram showing the functions of an AAAH. Here, authentication, authorization, and accounting functions are omitted.

AnAAAH 100 extracts from a service control database 300 a service profile corresponding to a user who issues an authentication request, for example, upon receipt of an authentication request (AMR) message, and distributes the extracted service profile to an HA and an FA. Namely, the AAAH acts as a server in a system which provides a mobile communications service.

The AAAH 100 comprises a service managing unit 102 and a protocol controlling unit 101. The protocol controlling unit 101 generates a session transaction for managing a DIAMETER session. The service managing unit 102 generates a service profile by referencing the service control database 300. Furthermore, the service managing unit 102 comprises the management table for managing a particular group in order to provide a service. Here, the service managing unit 102 comprises, for example, an ANYCAST address management table as a management table.

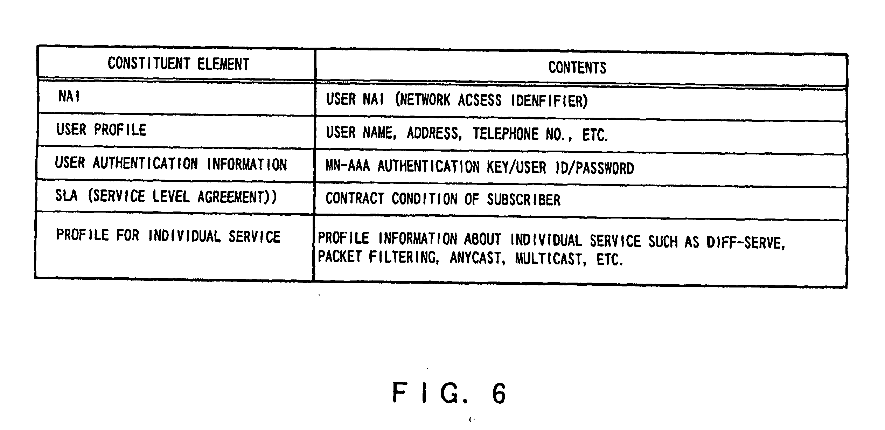

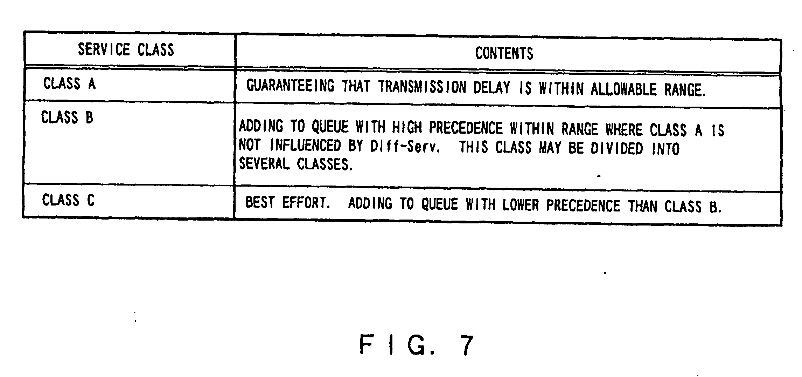

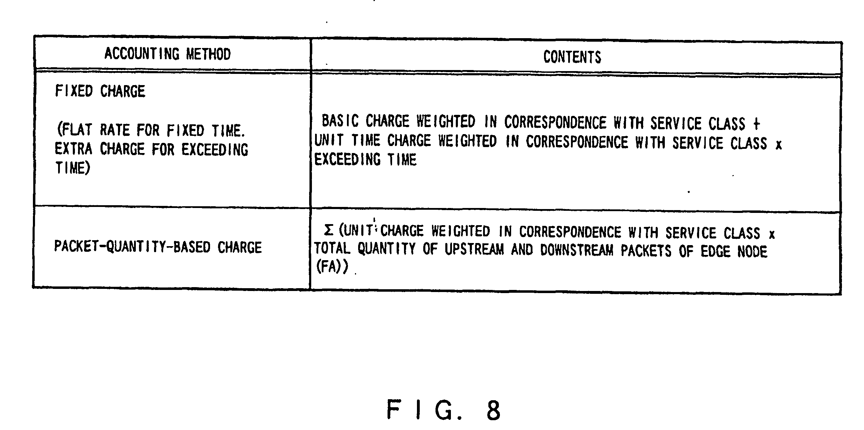

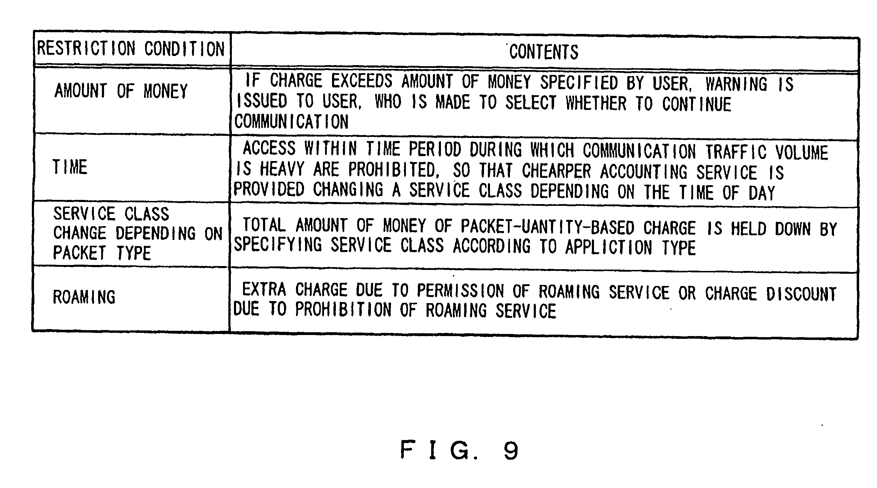

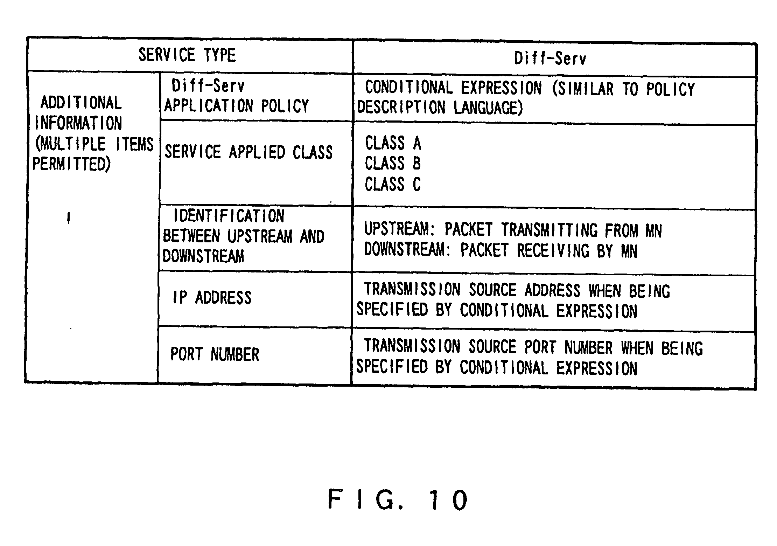

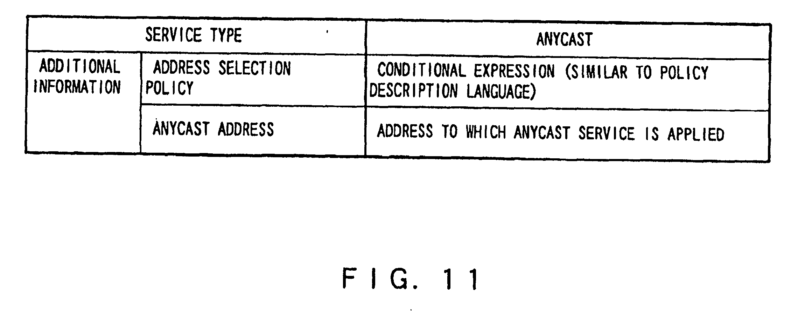

Fig. 6 exemplifies the original data of a service profile stored in the service control database 300. In the service control database 300, the subscriber information of each user (including a service profile) is stored by using the NAI of a user as a key. As an SLA (Service Level Agreement: a contract condition of a subscriber), for example, the service qualities shown in Fig. 7, the accounting method shown in Fig. 8, the restriction conditions shown in Fig. 9, etc. are set. As an individual service, for example, Diff-Serv, packet filtering, ANYCAST, multicast, etc. can be set. Here, the profile for the Diff-Serv service is shown in Fig. 10, and the profile for the ANYCAST service is shown in Fig. 11.

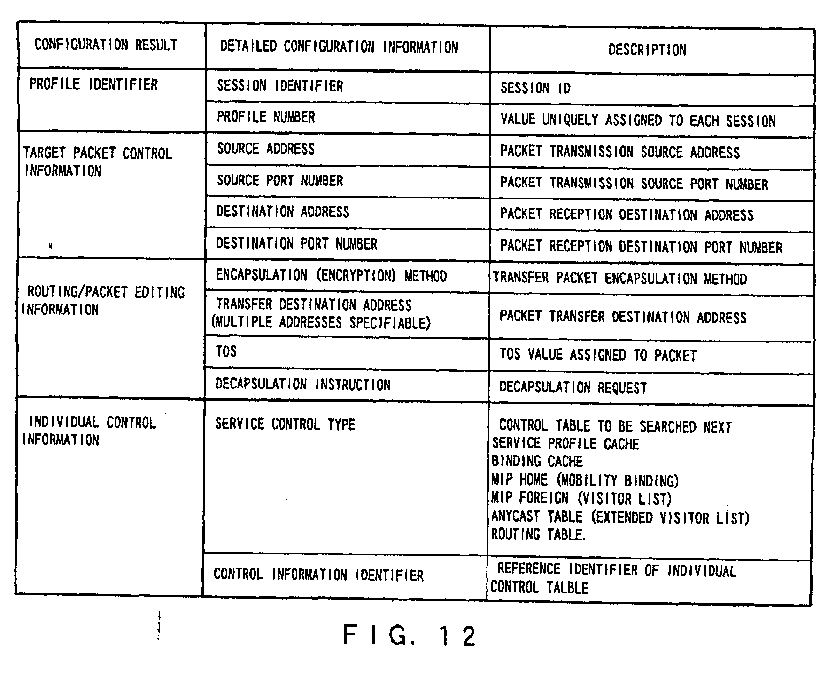

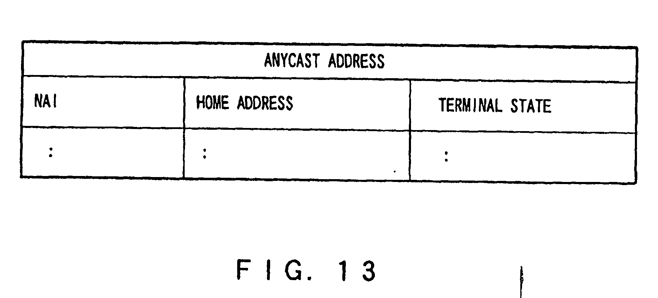

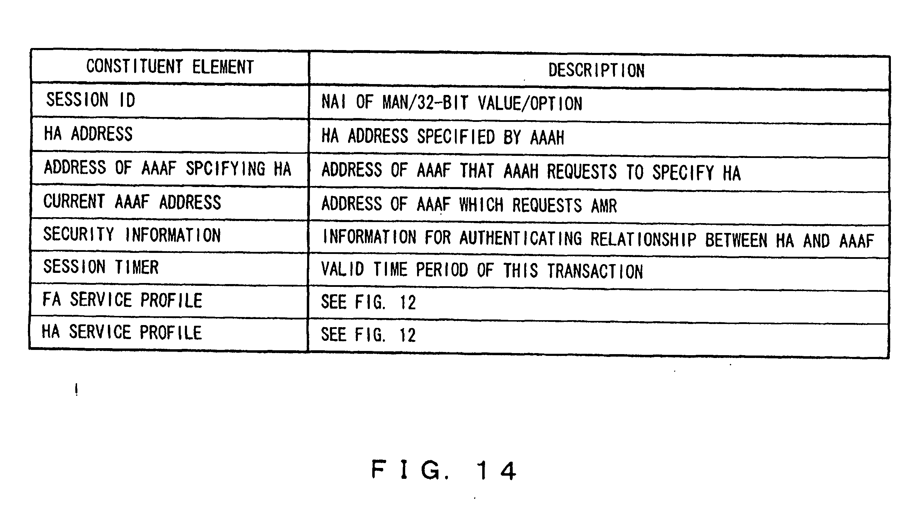

Fig. 12 exemplifies the service profile generated by the service managing unit 102 of the AAAH 100. This service profile is obtained by editing the data extracted from the service control database 300, and distributed to an HA and an FA.

The service profile is composed of a profile identifier, target packet control information, routing/packet editing information, and individual control information. The profile identifier is a value for uniquely identifying a service profile in a network. The target packet control information is filter information for classifying a received packet. The routing/packet editing information is editing information of an IP header, which is applied to the packet that hits the target packet control information, and information indicating the forwarding destination of the packet. The individual control information indicates a service-specific control table, that is possessed by a service-independent unit, and is to be searched next for the packet which hits the target packet control information.

### (1) profile identifier

"profile identifier" is composed of a session identifier and a profile number. The session identifier is a session ID, whereas the profile number is a value that is uniquely assigned to each session. The profile identifier is shared by respective entities (AAAH, AAAF HA, FA, etc.), and is used to determine a service profile relating to a user session, and to identify a specific service within a user session. As a session ID, for example, a session ID used in a DIAMETER session ID-AVP is utilized. The session ID is represented by using the NAI of a mobile node as follows in this embodiment.
<NAI of MN><32-bit value)<option>

### (2) target packet control information

"target packet control information" is composed of the IP address of a transmission source, the IP address or a destination, the port number of the transmission source, and the port number of the destination. If part of the bits of the IP address is set to "don't care", this part is represented by a wildcard "*" as follows.
172.27.180.*
172.27.*.*

It is not necessary to set all of these four values. When a received packet is extracted according to target packet control information, a hit is recognized to occur, for example, on the condition that all of set values match all of the corresponding values set in the received packet. -

### (3) routing/packet editing information

"encapsulation (encryption) method" specifies an encapsulation method to be executed when a packet is encapsulated not by a service-independent function. The information for encapsulating a packet by a service-independent function is set in an HA or an FA.

"transfer destination address" specifies a destination address when a packet is transferred not by the service-independent function. A plurality of addresses can be specified as "transfer destination address". Additionally, if a packet is transferred to the care-of address of a mobile node, the packet transfer is made according to a mobility binding table to be described later.

"TOS" specifies a value to be written to the TOS field of the packet received by the HA or the FA. If this value is specified, the IP header of the packet that hits the above described target packet control information, and that of the packet edited by the service-independent function (such as a packet encapsulated by referencing the mobility binding table) are rewritten.

"decapsulation instruction" specifies whether or not to decapsulate a packet that hits the above described target packet control information if it is encapsulated. The decapsulation process is executed before an individual control table is searched.

### (4) individual control information

"Individual control information" is composed of service control type information and a control information identifier. The service control type information is intended to instruct the control table to be accessed by the HA or the FA. The control table arranged in the HA or the FA is, for example, a service profile cache, control data specific to the mobile IP (a binding cache, mobility binding, a visitor list), a routing table, and service-specific control data (an ANYCAST table, etc.). The control information identifier indicates the link destination of the control table accessed according to the service control type information. The control information identifier is, for example, an identifier for identifying or a pointer pointing to an entry of each control table.

The AAAH 100 generates the service profile shown in Fig. 12 based on the original data of the service profile shown in Figs. 6 through 11. A method generating a service profile is not particularly limited. However, a service profile can be generated based on the type and the contents of a service requested by a user. For example, if a user requests the Diff-Serv service, the IP address, the port number, etc., which are shown in Fig. 10, may be set in the target packet control information. Additionally, the TOS may be set based on a search expression and a service class of a Diff-Serv policy. Or, if an ANYCAST service is requested, an ANYCAST table may be specified in the service control type information, and at the same time, target packet control information may be set based on an ANYCAST address.

As described above, the service profile is always in the same format regardless of the type of a service to be provided to a user. Namely, the entire information for providing an individual service is stored in the format shown in Fig. 12 and distributed to the HA and the FA.

Fig. 13 exemplifies an ANYCAST address management table arranged in the AAAH 100. This table is configured in units of ANYCAST address blocks. Each of the blocks includes an ANYCAST address, one or more NAIs corresponding to the ANYCAST address, the home address of the terminal identified by each NAI, and the state of the terminal identified by each NAI. The state of the terminal is, for example, an online, an offline, a pending, a faulty, a congested state, etc.

Fig. 14 exemplifies the session transaction of the AAAH. The session transaction is generated and held to transmit/receive a DIAMETER message and to maintain the link with a service profile. The session transaction of the AAAH includes a session ID, an HA address, the address of the current AAAF, the address of the AAAF which transmits an AMR message, security information, a session timer, and service profiles.

### 5. Configuration of AAAF

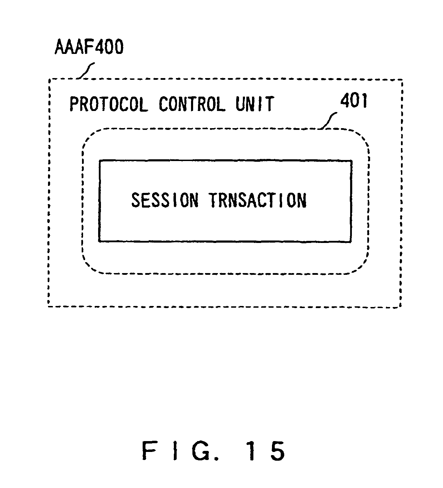

Fig. 15 is a block diagram showing the functions of an AAAF. Upon receipt of an authentication request (AMR) message from a mobile node, an AAAF 400 forwards this message to an AAAH 100. Upon receipt of a service profile from the AAAH 100, the AAAF 400 distributes the service profile to an FA 500. The AAAF 400 can also specify an HA. In this case, the AAAF 400 distributes the service profile to an HA 200 and the FA 500 upon receipt of the service profile from the AAAH 100.

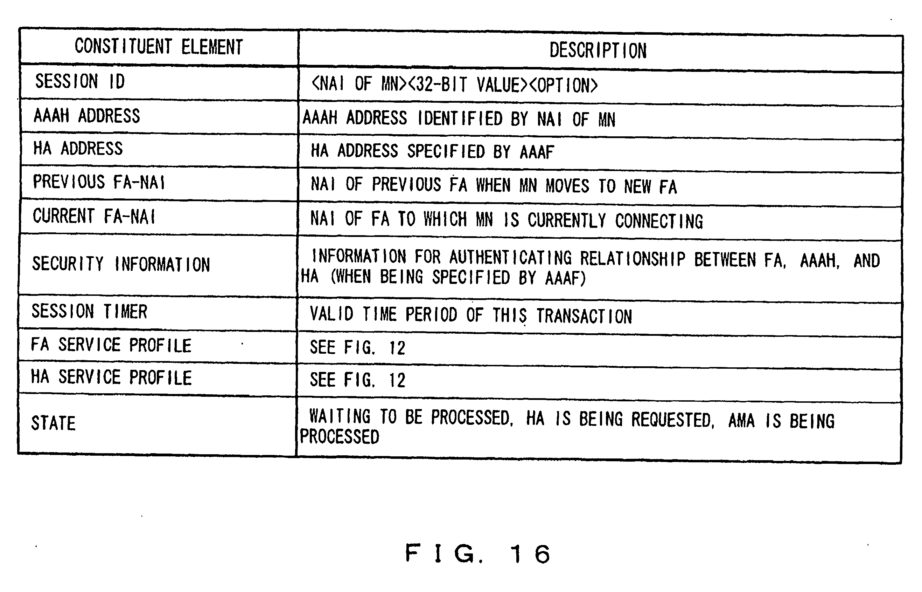

The AAAF 400 comprises a protocol controlling unit 401. The protocol controlling unit 401 generates a session transaction for managing a DIAMETER session. The session transaction of the AAAF includes a session ID, an AAAH address, an HA address, the NAI of a previous FA, the NAI of a current FA, security information, a session timer, a service profile, and a transaction state as shown in Fig. 16.

Note that the AAAF fundamentally has the same configuration as that of the AAAH. Accordingly, the AAAF acts as a server in a system that provides a mobile communications service, similar to the AAAH.

### 6. Configurations of HA, FA, and CN

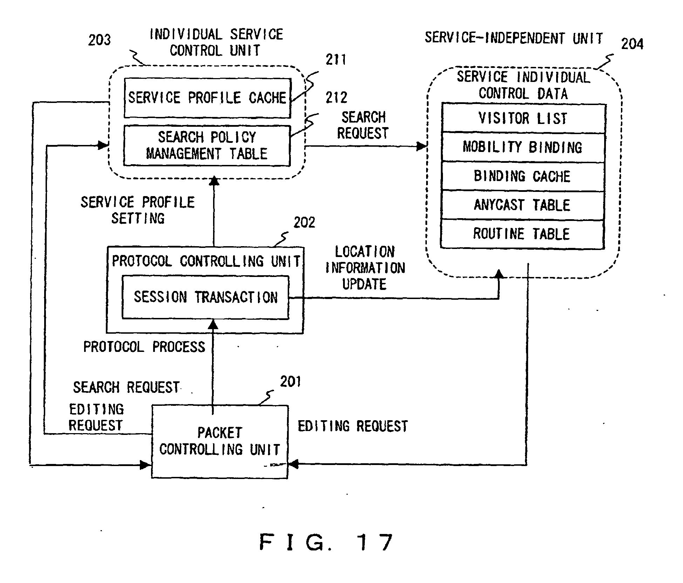

Fig. 17 is a block diagram showing the functions of an HA, an FA, and a CN. The HA, FA, and CN fundamentally have the same configuration, and respectively comprise a packet controlling unit 201, a protocol controlling unit 202, an individual service controlling unit 203, and a service-independent function unit 204.

The packet controlling unit 201 has the function for filtering a packet, and classifies received packets into protocol packet and data packet by decoding the header of each packet. Upon receipt of a protocol packet, the packet controlling unit 201 requests the protocol controlling unit to process the packet. Upon receipt of a data packet, the packet controlling unit 201 passes the information required for processing the packet to the individual service controlling unit 203. The packet controlling unit 201 edits the packets (rewrites their headers, etc.), and forwards the packets according to the instructions from the individual service controlling unit 203 and the service-independent function unit 204.

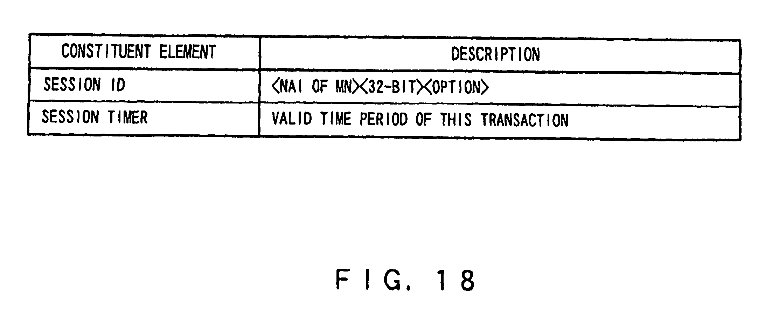

The protocol controlling unit 202 is a unit processing the mobile IP and the DIAMETER protocol, and sets necessary information (such as the information for location registration, etc.) in the service-independent function unit 204 in compliance with the protocol. Additionally, the protocol controlling unit 202 generates a session transaction for managing a DIAMETER session. The session transaction of the HA and the FA is shown in Fig. 18. Furthermore, if a service profile is notified from an AAA, the protocol controlling unit 202 stores the service profile in the service profile cache of the individual service controlling unit 203.

The individual service controlling unit 203 comprises a service profile cache 211 being a set of service control information, and a search policy management table 212 in which the policy for searching the service profile cache 211 is set.

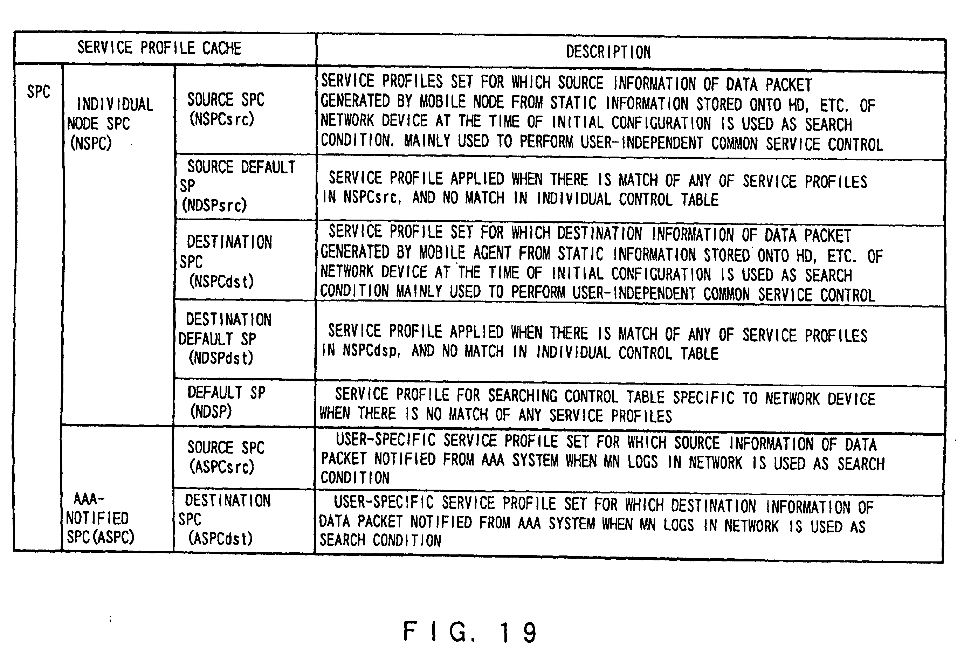

Fig. 19 exemplifies the service profile cache 211. The service profile cache is composed of an individual node SPC (NSPC) and an AAA-notified SPC (ASPC). The individual node SPC is a service profile cache that the HA, the FA, or the CN comprises beforehand, and is composed of a source service profile (NSPCsrc), a source default service profile (NDSPsrc), a destination service profile (NSPCdst), a destination default service profile (NDSPdst), and a default service profile (NDSP). In the meantime, the AAA-notified SPC is a service profile cache distributed from the AAAH, and is composed of a source profile (ASPCsrc) and a destination service profile (ASPCdst). The service profiles are mutually independent.

The service profiles are written in the format shown in Fig. 12. Namely, each of the service profiles includes (1) the information (target packet control information) for extracting a particular packet from among received packets, (2) the information (routing/packet editing information) for editing an extracted packet, and (3) the information (individual control information) for referencing corresponding table arranged in the service-independent unit 204. Fig. 12 shows the service profile distributed from the AAA to the HA or the FA. Also the service profile that is arranged as an individual node SPC beforehand in the HA or the FA has the same configuration. Namely, if the AAAH extracts the original data of a service profile from the service control database, it edits the original data into the same format as that of the service profile that is arranged in the HA or the FA beforehand, and distributes the service profile to the HA or the FA.

In the target packet control information of the source SPC (NSPCsrc and ASPCsrc) and the source default SP (NDSPsrc), at least either of the source address and the source port number is set. Accordingly, the packet transmitted from a particular transmission source or source port is processed according to the service profile. Furthermore, at least either of the destination address and the destination port number is set in the target packet control information of the destination SPC (NSPCdst and ASPCdst) and the destination default SP (NDSPdst). Therefore, the packet proceeding to a particular destination or destination port is processed according to the service profile. The default SP (NDSP) is arranged to process the packet that is not processed according to any of the above service profiles.

When a data packet reaches the packet controlling unit 201, the individual service controlling unit 203 determines the service profile for processing the packet. The method selecting a predetermined service profile from the service profile cache 211 is described in a search policy management table 212.

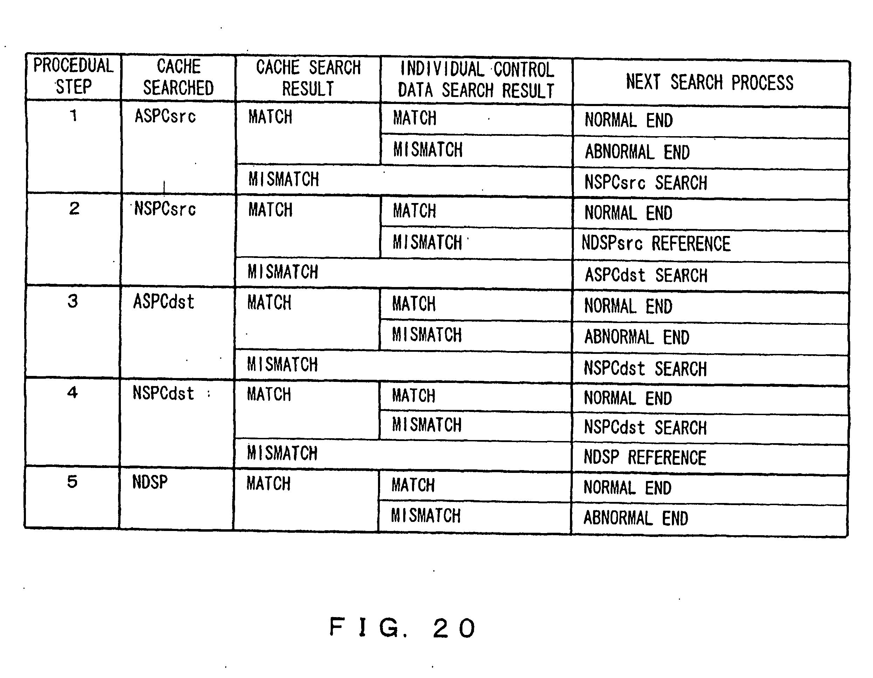

Fig. 20 exemplifies the search policy management table 212. The search policy management table 211 manages a search policy (search order) for searching the service profile cache 211. The search policy is not particularly limited. However, it is written so that a search range is widened, for example, from a service-specific profile to a shared service profile.

If the service profile cache 211 is searched with the search policy management table 212 shown in Fig. 20, the target packet control information of the source SPC (ASPCsrc) distributed from an AAA is first extracted. Then, the source address and the source port number, which are set in the target packet control information, are respectively compared with the source address and the source port number within a received packet. If these addresses and port numbers respectively match at this time, the table of the service-independent unit 204 is referenced according to the source SPC (ASPCsrc). If the corresponding information is stored in the referenced table, the received packet is processed according to this information. If the corresponding information is not stored in the referenced table, the process is terminated by recognizing that a fault occurs. If at least either of the source addresses and the source port numbers do not match, the source SPC (NSPCsrc) preset in the HA, the FA, or the CN is extracted.

The process performed when the source SPC (NSPCsrc) is extracted is fundamentally the same as that performed when the source SPC (ASPCsrc) distributed from the AAA is exracted. Namely, if the source addresses and the source port numbers match respectively, a received packet is processed by referencing the table of the service-independent unit 204 according to the source SPC (NSPCsrc). If corresponding information is not stored in the table of the service-independent unit 204 although the source addresses and the source port numbers match respectively, a source default SP (NDSPsrc) is extracted.

The above described process is repeated in a similar manner until the service profile in which the same address and port number as those of the received packet are found according to the search policy management table 212. If the corresponding service profile cannot be found despite the execution of the procedural steps 1 through 4 in the search policy management table 212 shown in Fig. 20, a default SP (NDSP) is extracted in the procedural step 5. The packet is then processed according to the default SP (NDSP).

As described above, the service profile in which the same address and port number as those of a data packet are set is extracted upon arrival of the data packet, and the packet is processed according to the service profile. At this time, the HA, FA, and CN can process the received packet only by referencing the table of the service-independent unit 204 according to the service file distributed from an AAA, or a prearranged service profile. Namely, the HA, FA, and CN can provide an individual service for each user, which is stored in the service control database 300, by using the service profile distributed from the AAA unchanged.

The service-independent unit 204 comprises a visitor list, mobility binding, a binding cache, an ANYCAST table, and a routing table. The visitor list, the mobility binding and the binding cache among them tables are control tables for managing the mobile IP. The routing table is a packet control table that a router originally comprises. The ANYCAST table is a control table that is arranged to execute an ANYCAST service being a value-added service.

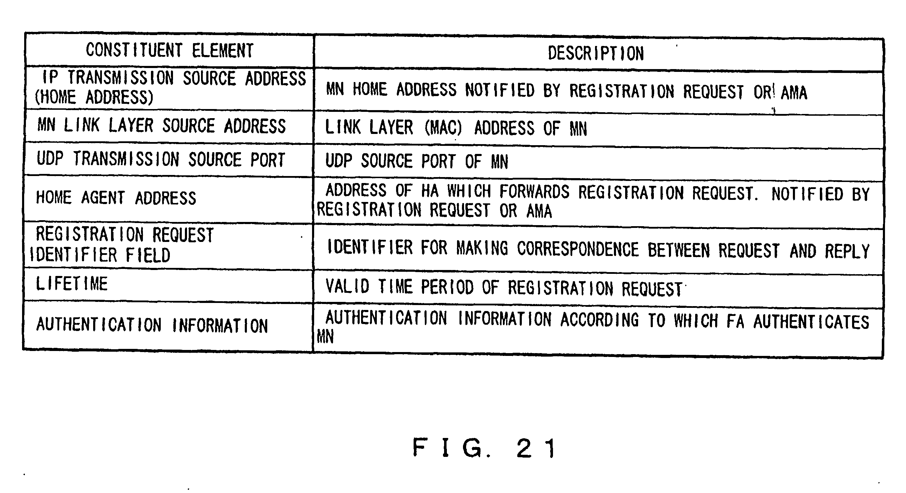

Fig. 21 exemplifies the visitor list. The visitor list, which is arranged in the FA, is a table for making a correspondence between the IP address (home address) of a mobile node and the link layer address (such as an MAC address) of the mobile node.

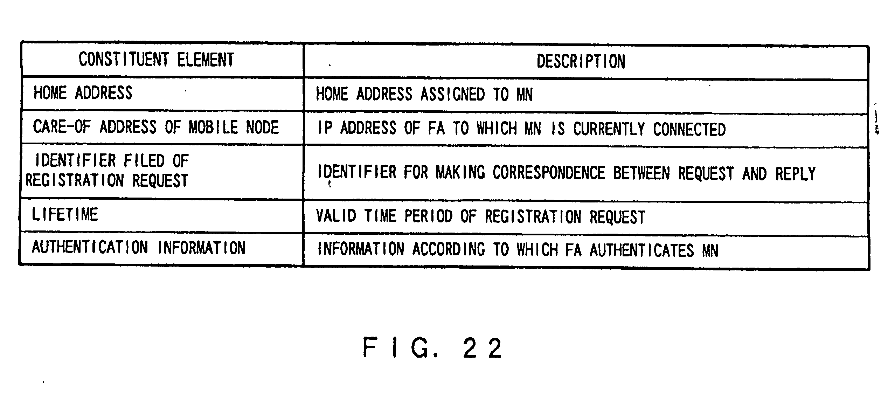

Fig. 22 exemplifies the mobility binding. The mobility binding, which is arranged in the HA, is a table for making a correspondence between the IP address (home address) of a mobile node and the address (care-of address) of the FA that accommodates the mobile node. The mobility binding is referenced when the HA receives the packet addressed to the mobile node. In this case, the care-of address that corresponds to the IP address of the packet is extracted, and the packet is encapsulated and forwarded to the FA having the extracted care-of address. It should be noted that the mobility binding is updated, for example, when the mobile node moves from the communication area of one FA to that of another.

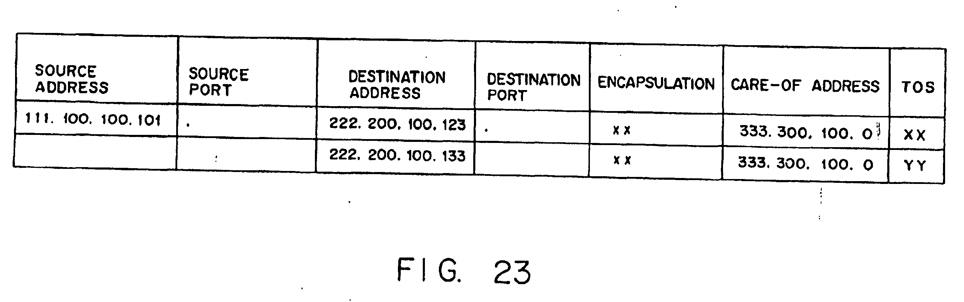

Fig. 23 exemplifies the binding cache. The binding cache, which is arranged in the FA and the CN, is a routing table that is temporarily used to improve the transfer efficiency of a packet. The binding cache is given higher reference precedence than that of the routing table.

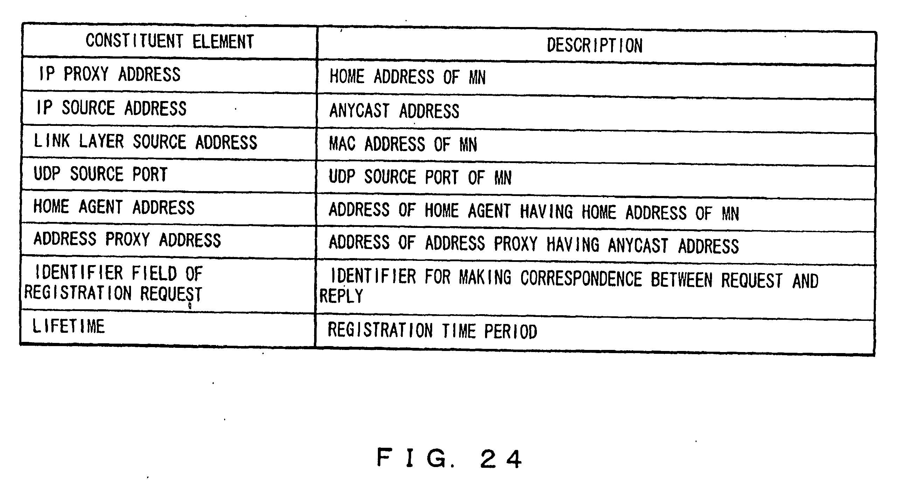

Fig. 24 exemplifies the ANYCAST table. The ANYCAST table, which is arranged in the FA, stores the information required to provide an ANYCAST service. The ANYCAST table is obtained, for example, by additionally registering an ANYCAST address and the address of an address proxy server having the ANYCAST address.

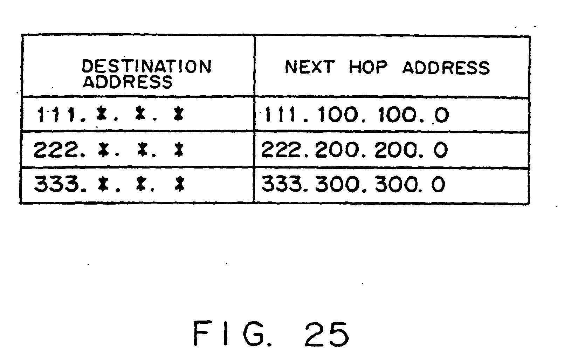

Fig. 25 exemplifies the routing table. The routing table, which is arranged in the HA, FA, and CN, is used to obtain the next hop address (such as the next router) as a transfer destination, to which a packet is to be transferred, based on the destination address stored in the header of the received packet.

### 7. Sequence for distributing service profiles

The essence of an IP service is condensed into a target packet selection, packet editing, and routing destination determination. According to the present invention, the editing process of service control information for each service is executed by an AAAH, and generalized packet editing information is distributed to a mobile agent (such as an FA). As a result, the mobile agent can use the distributed service profile as packet control information unchanged, leading to the speed-up of the process.

Additionally, according to the present invention, the configuration of a service profile cache being a set of service profiles, and a method searching the service profile cache are systematized. In the HA and the FA according to the present invention, the service-independent unit which performs packet control based on the mobile IP, and the individual service controlling unit which uses the service-independent unit based on a service set for each user are separated. Accordingly, for example, if a service is added/changed, there is no fundamental need to rewrite the program or the data of the service-independent unit, and the only operation that must be performed is to update the settings of the individual service controlling unit. That is, service addition, change, implementation, etc. are expected to become easy.

Furthermore, according to the present invention, a service profile managing method which enables service control within the framework of the messages stipulated by the existing mobile IP is devised.

Hereinafter, the case where the Diff-Serv service is applied to the mobile IP is adopted as a embodiment.

In the embodiments according to the present invention, an HA may be specified either by an AAAH or by an AAAF. Described below are the case (A) where an AAAH specifies an HA, and the case (B) where an AAAF specifies an HA.

### 7A. Case where an AAAH specifies an HA

Described in the following embodiment are (1) the sequence at the time of an initial registration, (2) the sequence in the case where a mobile node moves from the communication area of one FA within a certain AAAF to that of another FA, and (3) the sequence in the case where a mobile node moves from the communication area of an FA within one AAAF to that of an FA within another AAAF.

### 7A (1) Sequence at the time of an initial registration

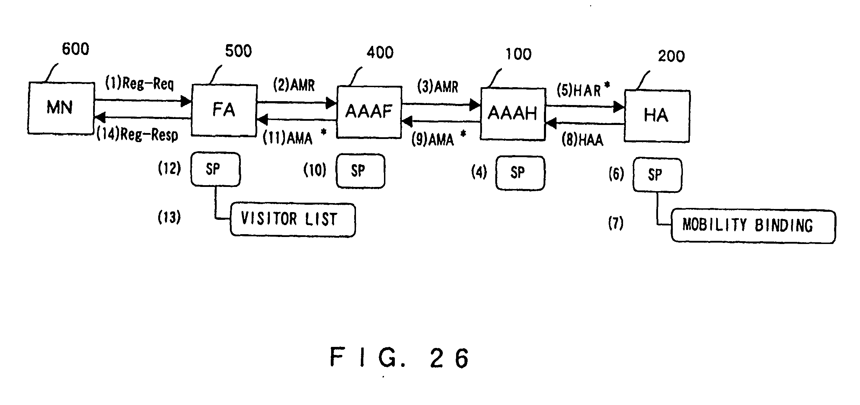

Fig. 26 shows the sequence for distributing service profiles. Illustrated here is the sequence after the advertisement message that an FA 500 periodically outputs is received by a mobile node 600. In this figure, messages succeeded by an asterisk "*" indicate that a service profile is attached.

The mobile node 600 transmits a registration request (Reg-Req) message to the FA 500. Upon receipt of the registration request (Reg-Req) message, the FA500 transmits an authentication request (AMR) message to an AAAF 400. Upon receipt of the authentication request (AMR) message, the AAAF 400 forwards this message to an AAAH 100 of the mobile node 600. Upon receipt of the authentication request (AMR) message, the AAAH 100 extracts the original data of the service profile of the mobile node 600 from a service control database 300, and edits the data into a format that is available to an HA 200 and the FA 500 unchanged. The AAAH 100 then transmits to the HA 200 the edited service profile by using a registration request (HAR) message. As a result, the HA 200 generates mobility binding (including the information indicating that the mobile node 600 is accommodated by the FA 500), and adds the received service profile to a service profile cache at the same time.

Then, the HA 200 transmits a registration reply (HAA) message to the AAAH 100. Upon receipt of the registration reply (HAA) message, the AAAH 100 transmits the service profile to the AAAF 400 by using an authentication reply (AMA) message. Upon receipt of the authentication reply (AMA) message, the AAAF 400 transmits the service profile to the FA 500 by using the authentication reply (AMA) message. As a result, the FA 500 generates a visitor list (including the information indicating that the mobile node 600 is accommodated by the FA 500), and adds the received service profile to a service profile cache. Then, the FA 500 returns a registration reply (Reg-Resp) message to the mobile node 600.

As described above, the service profile indicating the individual service for the mobile node 600 is distributed to the HA 200 and the FA 500 when the location registration sequence of the mobile node 600 is executed. Accordingly, the mobile node 600 can receive the individual service, which is contracted beforehand, while being accommodated by the FA 500.

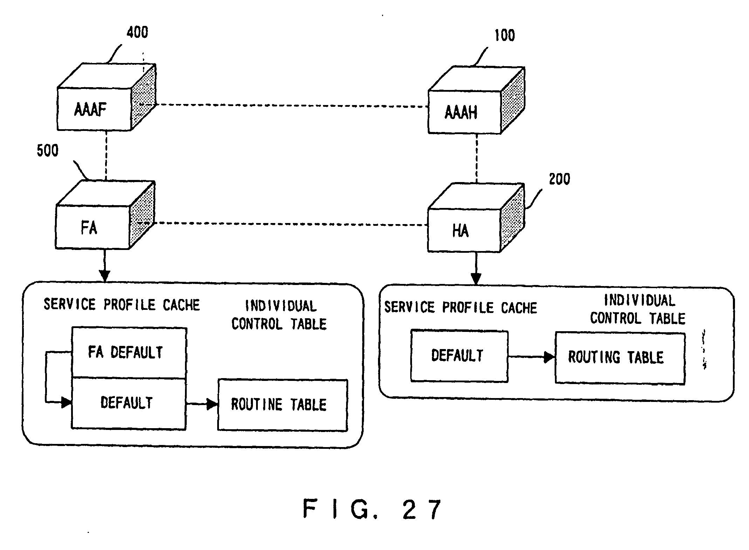

Next, the above described sequence is explained in detail. First assume that the service profiles are respectively generated and stored in the service profile caches when the HA and the FA are initially configured, as shown in Fig. 27. Additionally, routing tables are set by a network management system or a routing protocol. Since a method generating a routing table does not directly relate to the present invention, its explanation is omitted here.

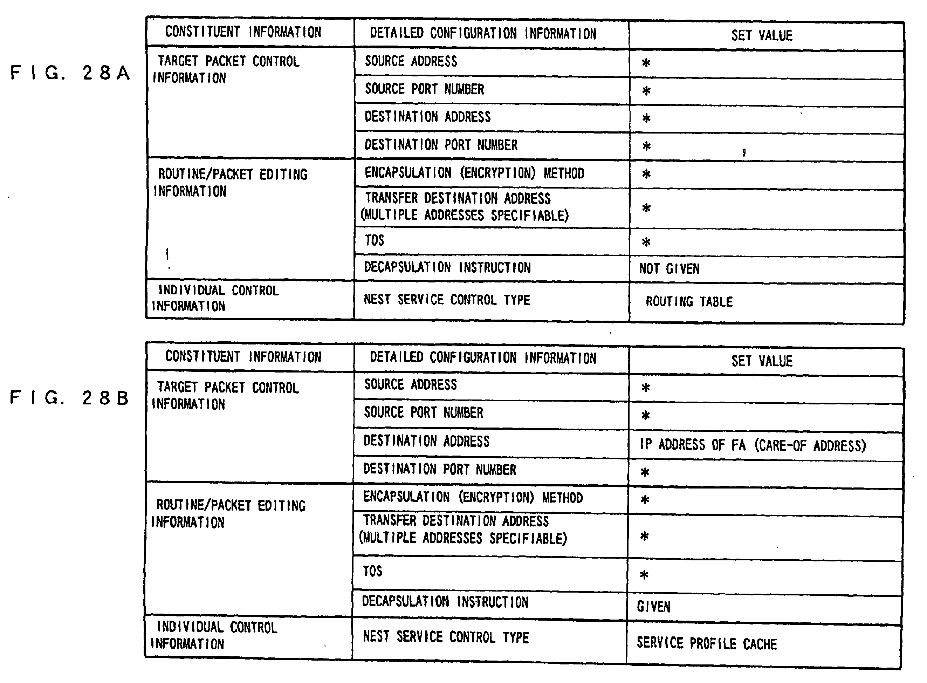

Figs. 28A and 28B exemplify the service profiles generated by the FA at the time of an initial configuration. The service profile shown in Fig. 28A represents that the routing table is referenced when the route of a received packet is determined. The service profile shown in Fig. 28B represents that the cache shown in Fig. 28A is referenced after a decapsulation process is executed, upon receipt of a packet in which the FA 500 is set as a destination address.

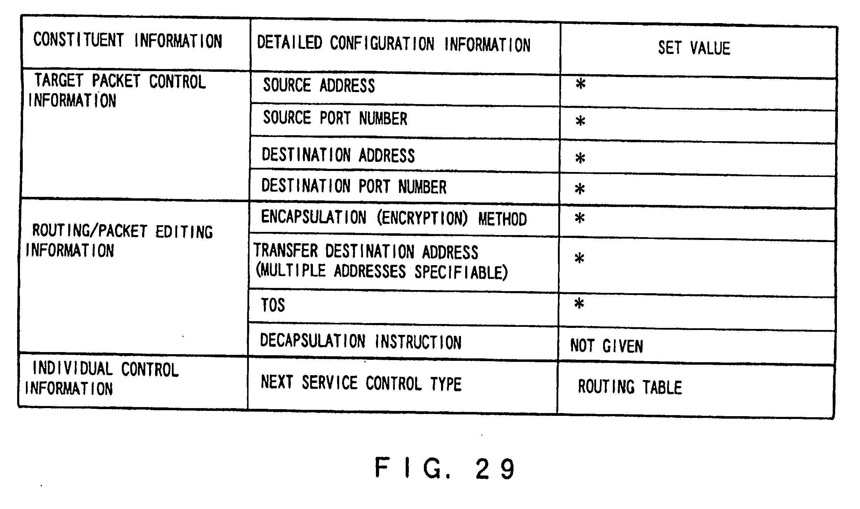

Fig. 29 exemplifies the service profile generated by the HA at the time of an initial configuration. This service profile represents that the routing table is referenced when the route of a received packet is determined.

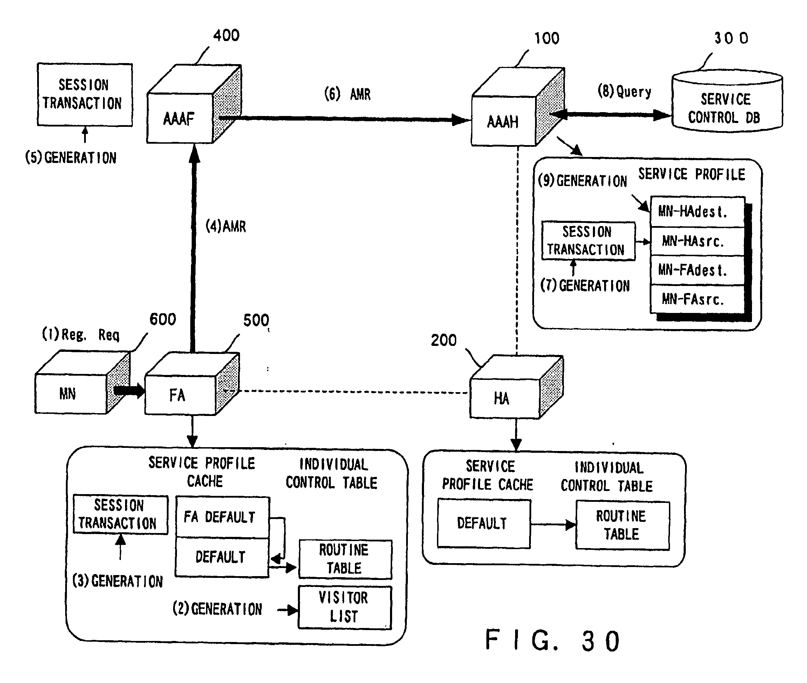

Fig. 30 shows the procedure for generating a service profile by the AAAH.

(1)-(4) Upon receipt of the registration request message transmitted from the mobile node 600, the FA 500 generates a DIAMETER session transaction and a visitor list. The DIAMETER session transaction and the visitor list are, for example, the ones shown in Figs. 18 and 21. The FA 500 then transmits a registration request (AMR: AA-Mobile-Node-Request) message to the AAAF 400.

(5) - (6) The AAAF 400 generates a DIAMETER session transaction. This transaction is, for example, the one shown in Fig. 16. Then, the AAAF 400 identifies the authentication home server (AAAH 100) of the user of the mobile node 600 based on the network identifier (NAI) of the user, which is notified by the AMR message, and forwards the AMR message to the identified AAAH 100.

(7) - (9) The AAAH 100 generates a DIAMETER session transaction. This transaction is, for example, the one shown in Fig. 14. The AAAH 100 then searches the service control database by using as a key the NAI of the user, which is notified by the AMR message, and extracts the original data of the service profile of that user. Furthermore, the AAAH 100 generates a service profile to be set in the HA 200 and the FA 500 based on the information set in the original data of the service profile and a policy predetermined to edit a service profile.

The service profile falls into two types: a destination service profile the search condition of which is destination information (such as a destination address and a destination port number), and a source service profile the search condition of which is source information (such as a source address and a source port number). As an identifier of each service profile, a session ID and an arbitrary profile number are set. Furthermore, the service profile may be managed, for example, under the following conditions: (1) if both of destination information and source information are used as search information, they are set in a source service profile; (2) the source service profile and the destination service profile are generated for each service type to be provided; and (3) the source service profile is applied with higher precedence than the destination service profile.

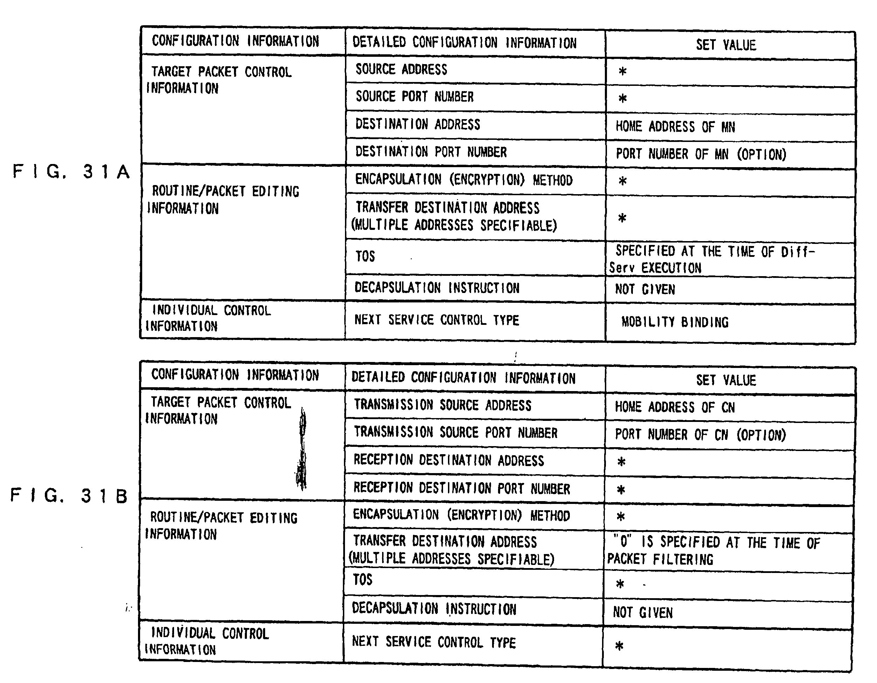

Figs. 31A and 31B exemplify the service profiles to be distributed to the HA. The service profile in which destination information is set as a search condition is shown in Fig. 31A, whereas the service profile in which source information is set as a search condition is shown in Fig. 31B.

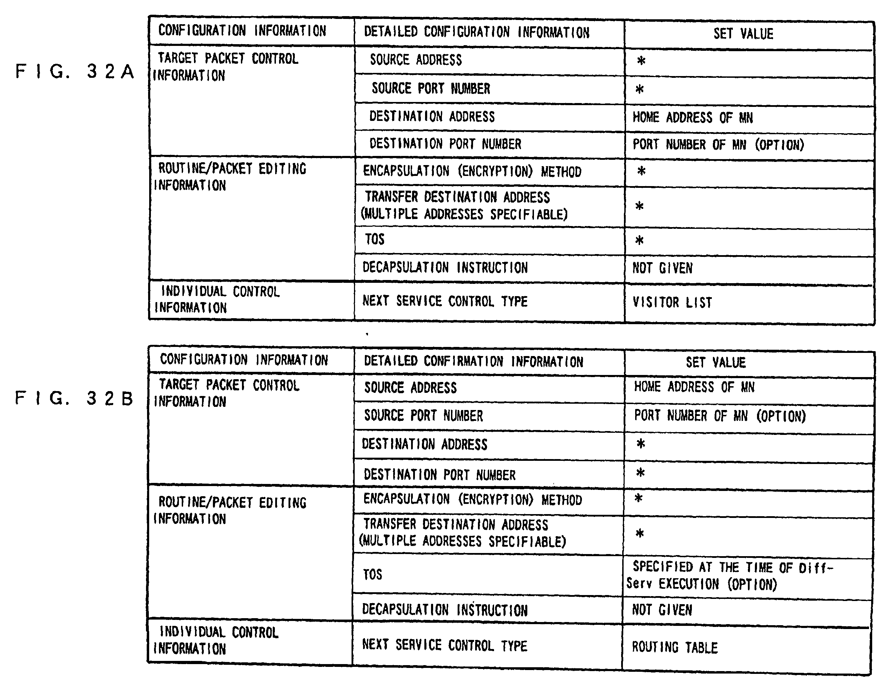

Figs. 32A and 32B exemplify the service profiles to be distributed to the FA. The service profile in which destination information is set as a search condition is shown in Fig. 32A, whereas the service profile in which source information is set as a search condition is shown in Fig. 32B.

These service profiles are generated based on the information set in the original data of the service profiles, and the policy predetermined to edit a service profile, as described above. For example, if the service profile (see Fig. 31A) for the user who requests the Diff-Serv service, which is to be distributed to the HA, is generated, the address and the port number of the mobile node that the user uses are respectively set as a destination address and a destination port number. Additionally, the TOS value that is determined at the time of subscription to the Diff-Serv service is set in "TOS". Furthermore, a mobility binding table is set in "individual control information" so as to forward the packet addressed to the mobile node to the FA which accommodates that mobile node.

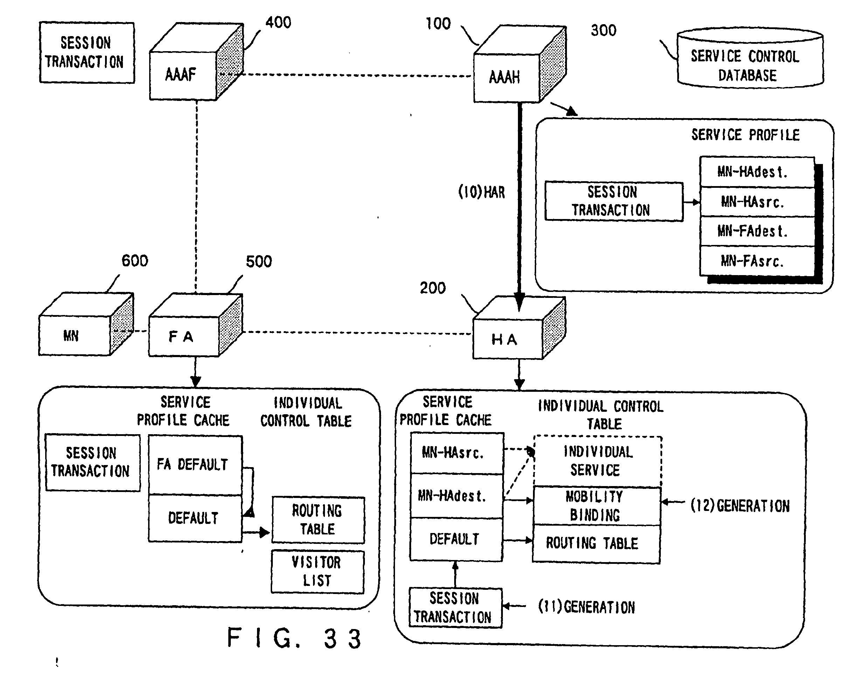

Fig. 33 shows the procedure for setting service profiles in the HA.

(10) The AAAH 100 attaches a destination service profile (MN-HAdest) and a source service profile (MN-HAsrc) to a registration request (HAR: Home-Agent-MIP-Request) message, and transmits this message to the HA 200.

(11) - (12) The HA 200 generates a DIAMETER session transaction, and adds the notified service profiles to the service profile cache at the same time. This transaction is, for example, the one shown in Fig. 18. Additionally, the HA 200 generates mobility binding based on the information set in the HAR message. The mobility binding is, for example, the one shown in Fig. 22. Then, the information for linking with the generated mobility binding is set as a "control information identifier" of the destination service profile (MN-HAdest).

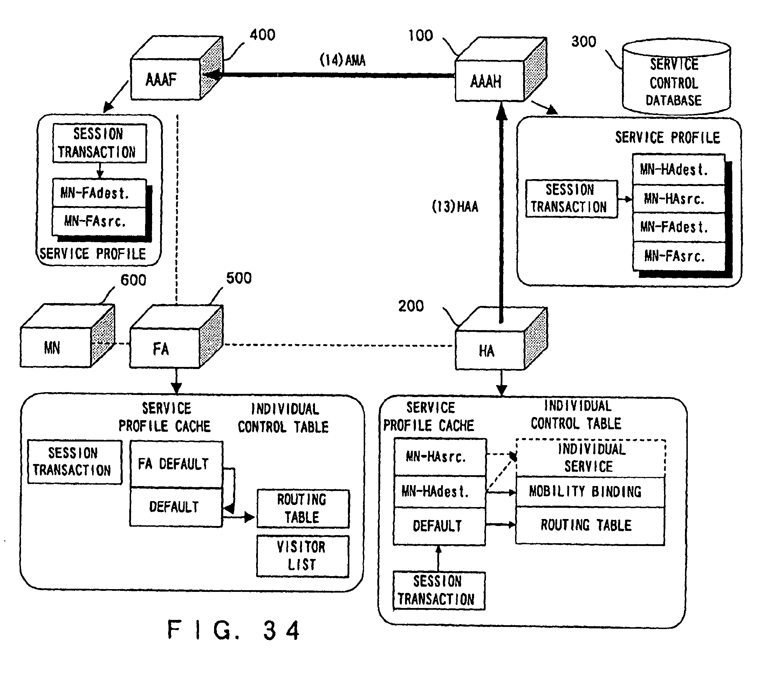

Fig. 34 exemplifies the procedure for transferring service profiles to the AAAF.

(13) Upon termination of the settings of the service profile cache, and the process for the HARmessage, the HA 200 returns a registration reply (HAA: Home-Agent-MIP-Answer) message to the AAAH.

(14) The AAAH 100 attaches the destination service profile (MN-FAdest) and the source service profile (MN-FAsrc) to an authentication reply (AMA: AA-Mobile-Node-Answer) message, and transmits this message to the AAAF 400.

Then, the AAAF 400 holds the service profiles transmitted by using the AMA message by linking with the session transaction for the hand-off process within the same domain.

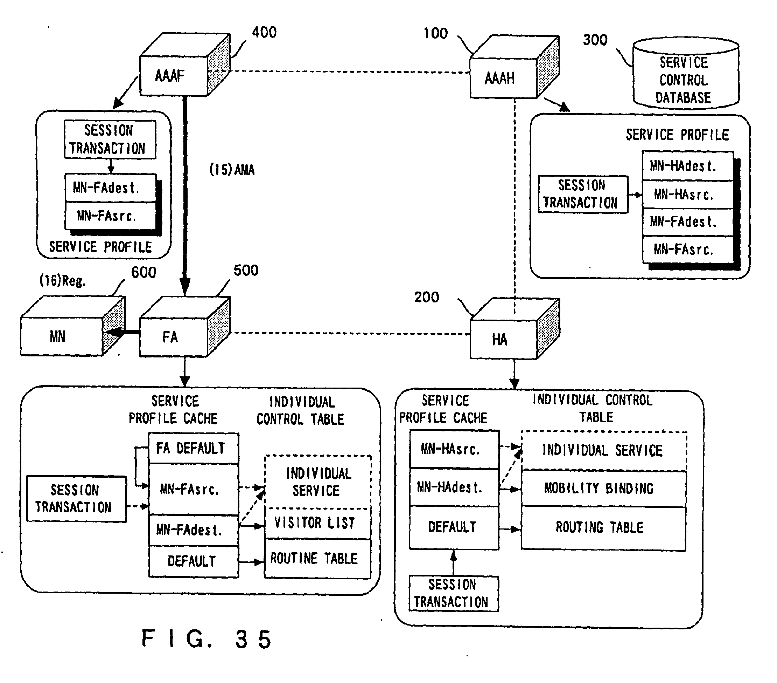

Fig. 35 shows the procedure for setting service profiles in the FA.

(15) The AAAF 400 attaches the destination service profile (MN-FAdest) and the source service profile (MN-FAsrc) to the authentication reply (AMA: AA-Moble-Node-Answer) message, and transmits this message to the FA 500.

Then, the FA 500 adds the notified service profiles to the service profile cache. At this time, the destination service profile (MN-FAdest) and the source service profile (MN-FAsrc) are respectively added, for example, to the "destination SPC (ASPCdst)" and the "source SPC (ASPCsrc)" in the AAA-notified SPC shown in Fig. 19. Additionally, the information (the home address and the address of the HA 200) transmitted by the AMA message are set in the visitor list. Furthermore, the destination service profile (MN-FAdest) and the visitor list are linked.

(16) Upon termination of the generation of the service profile cache and the process for the AMA message, the FA 500 returns a registration reply message to the mobile node 600.

With the above described sequence, the service profiles are respectively set in the service profile caches of the HA 200 and the FA 500. Thereafter, the packet transmitted from the mobile node 600 to an arbitrary terminal (correspondent node CN 700), and the packet transmitted from the correspondent node CN 700 to the mobile node 600 are processed according to these service profiles.

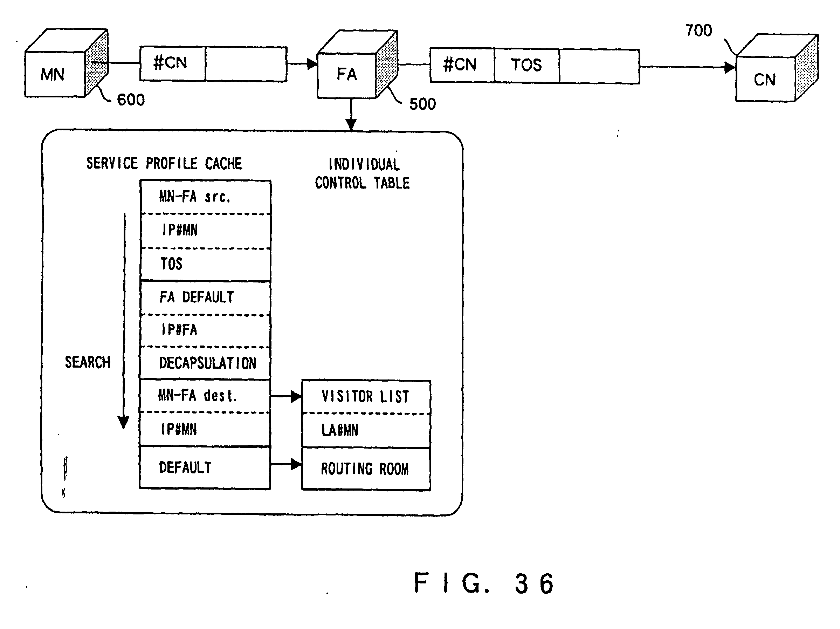

Fig. 36 shows the procedure for transferring a packet from the mobile node to the correspondent node. Here, suppose that the Diff-Serv service is provided, and the service profile shown in Fig. 32 is set in the FA 500.

Upon receipt of the data packet addressed to the correspondent node CN 700, the FA 500 searches the service profile cache in the order described in the search policy management table shown in Fig. 20. Namely, the FA 500 extracts the service profile (ASPCsrc) shown in Fig. 32B. Because the "address of the mobile node 600" and the "address of the correspondent node 700" are respectively set as the source address and the destination address of the received packet, the source address set in the received packet and that in the extracted service profile match. Accordingly, the received packet is processed according to the service profile (ASPCsrc) shown in Fig. 32B. As a result, this packet is routed according to the routing table after the TOS value is set.

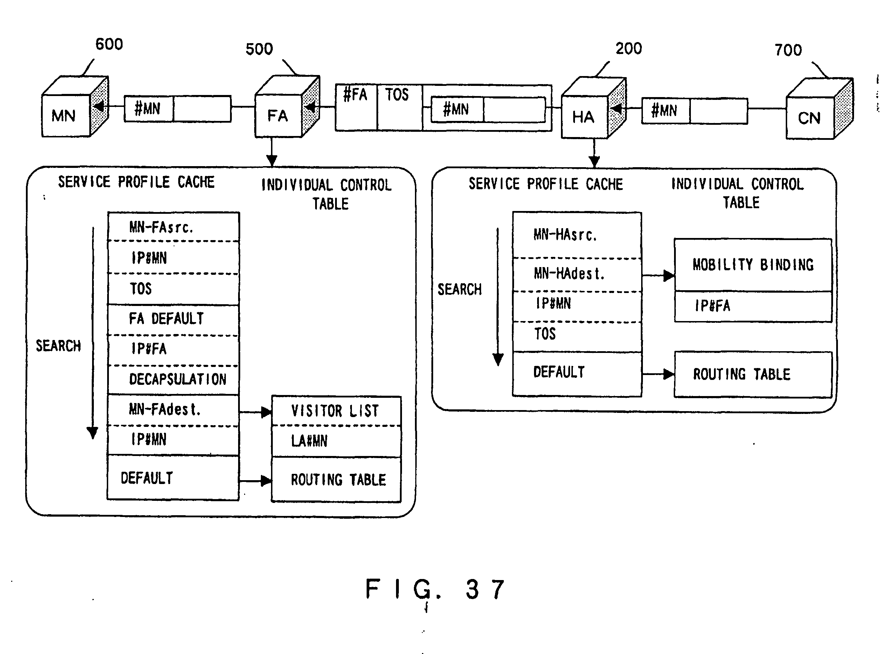

Fig. 37 shows the procedure for transferring a packet from the correspondent node to the mobile node. Also here, suppose that the Diff-Serv service is provided, the service profile shown in Fig. 31 is set in the HA 200, and the service profile shown in Fig. 32 is set in the FA 500.
(1) The data packet addressed to the mobile node 600 is forwarded to the HA 200, because its address belongs to the segment of the HA 200.
(2) Upon receipt of the data packet from the correspondent node CN 700, the HA 200 first searches the service profile (ASPCsrc) according to the search policy management table shown in Fig. 20. Here, it is assumed that the mobile node 600 can receive a packet from any terminal, and no settings are made in the target packet control information in the service profile (ASPCsrc). In this case, the service profile (NSPCsrc) is then searched according to the search policy management table shown in Fig. 20. For the above described reason, it is assumed that no "hit" occurs also in this case.
(3) The HA 200 searches the service profile (ASPCdst) in succession to the above described (2). Here, suppose that the service profile (ASPCdst) shown in Fig. 31A is searched. Since the destination address of the above described data packet and that set in the target packet control information match in this case, the process is to be executed according to this service profile. Here, in the service profile (ASPCdst), the TOS value is set and mobility binding is specified as a link destination.
(4) The HA 200 references the mobility binding, and encapsulates the packet to be forwarded to the FA 500 according to the mobile IP procedure. Additionally, the HA 200 sets the TOS value in the encapsulated packet.
(5) Upon receipt of this data packet, the FA 500 searches the service profile cache. Because the destination address of the encapsulated packet is "FA 500" in this case, this packet hits the mobile IP default service profile shown in Fig. 28B. In this service profile, a decapsulation instruction is set, and a service profile cache is set as a link destination. Accordingly, the FA 500 again searches the service profile cache after decapsulating the received packet.

As the destination address of the decapsulated packet, the "mobile node 600" is set. Accordingly, this decapsulated packet hits the service profile (ASPCdst) shown in Fig. 32A. Furthermore, a visitor list is specified as a link destination in this service profile. Accordingly, the FA 500 forwards the data packet to the link layer address of the mobile node 600 registered to the visitor list according to the mobile IP procedure.

### 7A(2) Sequence in the case where the mobile node moves from the communication area of one FA within a certain AAAF to that of another FA

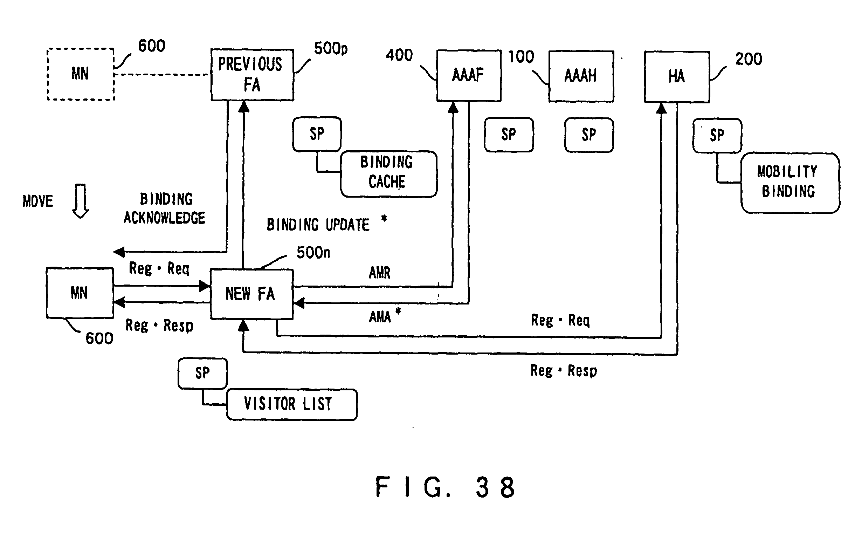

Fig. 38 shows the sequence for distributing service profiles. Illustrated here is the case where the mobile node 600 moves from the communication area of an FA 500p to that of an FA 500n. Assume that both of the FA 500p and the FA 500n belong to the AAAF 400.
(1) When the mobile node 600 enters the communication area of the FA 500n, it receives from the FA 500n an agent advertisement in which an S bit (smooth hand-off bit) is set.
(2) The mobile node 600 extracts the address of the FA that has transmitted the agent advertisement, and determines whether or not the domain portion of the NAI of the FA changes. Because both of the FA 500p and the FA 500n belong to the AAAF 400, the domain does not change. Accordingly, the mobile node 600 sets a "previous FA notification extension" in a registration request message, and transmits the message to the FA 500n. The "previous FA notification extension" is shown in Fig. 63D.
(3) Upon receipt of the registration request message including the "previous FA notification extension", the FA 500n generates a visitor list, and notifies the AAAF 400 of "Previous-FA-NAI-AVP" and "MN-FA-SPI-AVP" to the AAAF 400 by using the AMR message shown in Fig. 70 in order to obtain a session key from the AAAF 400. The "Previous-FA-NAI-AVP" identifies the FA 500p in this case.
(4) The AAAF 400 identifies a session according to the "MN-FA-SPI-AVP". The AAAF 400 then transmits to the FA 500n the AMA message in which the session key group identified by the session and the service profile are set.
(5) Upon receipt of the session key notified by the AMA message, the FA 500n performs the authentication of the mobile node 600 with this key. If the FA 500 successfully performs the authentication of the mobile node, it generates a service control transaction, and transmits a binding update message to the FA 500p. Here, an "A bit" of the binding update message must be set without fail. Additionally, route optimization authentication is used so that the FA performs the authentication of route optimization. Furthermore, a service profile linked to the visitor list of the FA 500n is set as the service profile. However, the link destination is changed to a binding cache.
(6) Upon receipt of the binding update message, the FA 500p deletes the visitor list for the mobile node 600, and generates a binding cache. Additionally, the FA 500p sets the binding cache as a link destination of the service profile. The FA 500p then transmits a binding acknowledge message to the mobile node 600. The binding acknowledge message is encapsulated and transmitted to the FA 500n, which decapsulates the message and forwards the decapsulated message to the mobile node 600. Thereafter, when the lifetime of the registered cache expires, the FA 500p terminates the provision of a service to the mobile node 600.
(7) The FA 500n transmits the registration request message to the HA 200 with a normal procedure.
(8) The HA 200 returns a registration reply message to the FA 500n. Upon receipt of the registration reply message, the FA 500n gets ready to transmit data to the mobile node 600 thereafter.
(9) The FA 500n returns the registration reply message to the mobile node 600.
(10) The packet from the correspondent node 700 to the mobile node 600 is encapsulated and forwarded to the FA 500. After the packet is once decapsulated by the FA 500, it is again encapsulated and forwarded to the FA 500n. The FA 500n decapsulates this packet, and forwards it to the mobile node 600.

### 7A(3) Sequence in the case where the mobile node moves from the communication area of an FA within one AAAF to that of an FA within another AAAF

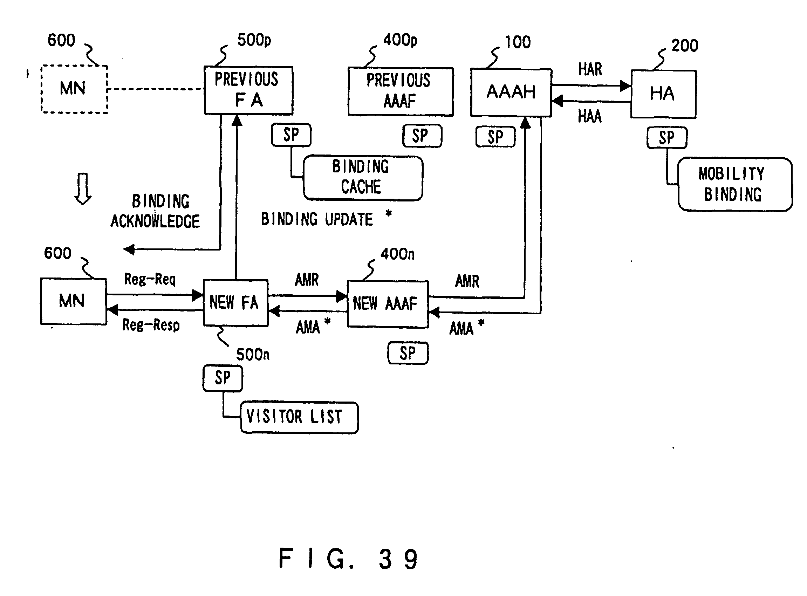

Fig. 39 shows the sequence for distributing service profiles. Illustrated here is the case where the mobile node 600 moves from the communication area of an FA 500p subordinate to an AAAF 400p to that of an FA 500n subordinate to an AAAF 400n.
(1) When the mobile node 600 moves from the communication area of the FA 500p to that of the FA 500n, the mobile node 600 receives from the FA 500n the agent advertisement in which the S bit is set.
(2) The mobile node 600 extracts the address of the FA that has transmitted the agent advertisement, and determines whether or not the domain portion of the NAI of the FA has changed. Since the FA 500p and the FA 500n belong to the different AAAFs in this case, the domain has changed. Accordingly, the mobile node 600 sets "MN-AAA authentication" in a registration request message, and transmits this message to the FA 500n.
(3) The FA 500n generates a visitor list. At this time, no corresponding session transaction exists. Accordingly, the mobile node 600 sets "session ID=0" in the AMR message, and transmits this message to the AAAF 400n.
(4) The AAAF 400n forwards the AMR message to the AAAH 100 based on the NAI notified by the AMR message.
(5) The AAAH 100 performs the following processes upon receipt of the AMR message.
   - session merging process: upon receipt of the AMRmessage in which "session ID=0" is set, the AAAH 100 searches a session transaction by using the NAI of the mobile node 600. If a hit is found in this search, the ID of this session is used for the subsequent sequence. If a hit is not found, the AAAH 100 newly generates a session transaction, and assigns a session ID to the generated transaction. If the AMR message in which a session ID is set is received, the AAAH 100 searches the session transaction by using the received session ID.
   - key group generation: The AAAH 100 regenerates all of security keys, and updates a session timer.
   - The AAAH transmits an HAR message to the HA 200 (a service profile transmission is arbitrary when a session transaction is not generated).
(6) The HA 200 updates the mobility binding, and returns an AMA message to the AAAH 100.
(7) The AAAH 100 makes a comparison between the AAAF that has transmitted the AMR message and the AAAF within the session transaction. If they mismatch, the AAAH 100 sets "previous FA-NAI" in the AMA message, and transmits this message. The "previous FA-NAI" identifies the FA 500p at this time.
(8) The AAAF 400n sets a service profile in the session transaction, and transmits the service profile to the FA 500n by using the AMA message.
(9) Upon receipt of the AMA message in which the "previous FA-NAI" is set, the FA 500n adds the service profile to the service profile cache. Then, the FA 500n identifies the FA 500p based on the "previous FA-NAI", and transmits to the FA 500p the binding update in which the RO authentication notified by the AMA message and the service profile are set.
(10) The FA 500p deletes the visitor list of the mobile node 600, and generates a binding cache at the sametime. Then, the FA 500p replaces the service profile stored in the service profile cache with the service profile notified by the binding update, and links the service profile with the binding cache. The FA 500p then returns a binding acknowledge message to the mobile node 600.
(11) The FA 500n returns a registration reply message to the mobile node 600. The service profile and the biding cache of the FA 500p are deleted at the expiration of the lifetime of the cache. The service profile cache and the session transaction of the AAAF 400p are deleted upon session timeout.

### 7B. Case where an AAAF specifies an HA

Described in the following embodiment are (1) the sequence at the time of initial registration, (2) the sequence in the case where a mobile node moves from the communication area of one FA within a certain AAAF to that of another FA, and (3) the sequence in the case where a mobile node moves from the communication area of an FA within one AAAF to that of an FA within another AAAF.

### 7B(1) Sequence at the time of initial registration

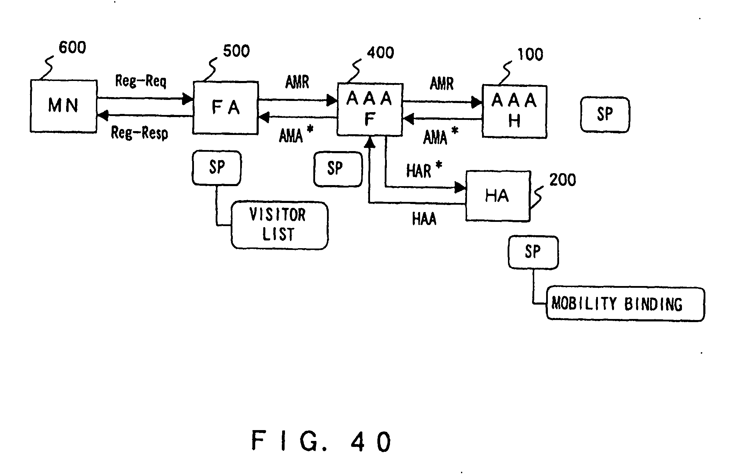

Fig. 40 shows the sequence for distributing service profiles. In this sequence, the process from when the mobile node 600 transmits a registration request message till when the AAAH 100 generates a service profile is the same as that in the case where the AAAH 100 specifies the HA (see the above described 7A(1)). Explanation of the sequence for that portion is therefore omitted here.
(1) The AAAH 100 attaches a destination service profile (MN-HAdest), a source service profile (MN-HAsrc), a destination service profile (MN-FAdest), and a source service profile (MN-FAsrc) to an AMA (AA-Mobile-Node-Answer) message, and transmits this message to the AAAF 400.
(2) The AAAF 400 holds the notified service profiles by linking with the session transaction in order for the hand-off process within the same domain.
(3) The AAAF 400 attaches the destination service profile (MN-HAdest) and the source service profile (MN-HAsrc) to an HAR (Home-Agent-MIP-Request) message, and transmits this message to the HA 200.
(4) The HA 200 generates a DIAMETER session transaction, and adds the notified service profiles to its own service profile cache. Additionally, the HA 200 generates mobility binding based on the information of the registration request notified by the HAR message. Furthermore, the HA 200 sets the link information for an entry of the generated mobility binding as a control information identifier of the destination service profile (MN-HAdest).
(5) The AAAF 400 attaches the destination service profile (MN-FAdest) and the source service profile (MN-FAsrc) to the AMA message, and transmits this message to the FA 500.
(6) The FA 500 adds the notified service profiles to its service profile cache. At this time, the destination service profile (MN-FAdest) and the source service profile (MN-FAsrc) are respectively added to the destination SPC (ASPCdst) and the source SPC (ASPCsrc) of the AAA-notified SPC. Furthermore, the FA 500 sets the information (the home address and the HA address) notified by the AMA message in the visitor list, and specifies this list as a link destination of the destination service profile (MN-FAdest).
(7) Upon termination of the generation of the service profile cache and the process for the AMA message, the FA 500 returns a registration reply message to the mobile node 600.

With the above described sequence, the service profiles are respectively set in the service profile caches of the HA 200 and the FA 500. Thereafter, the packet transmitted from the mobile node 600 to the correspondent node CN 700, and the packet transmitted from the correspondent node CN 700 to the mobile node 600 are processed according to these service profiles. The operations performed when a data packet is processed by referencing the service profile cache are the same as those in the case where the AAAH 100 specifies the HA (see the above described 7A(1)). Accordingly, explanation of the sequence for that portion is omitted here.

### 7B (2) Sequence in the case where a mobile node moves from the communication area of one FA within a certain AAAF to that of another FA

This sequence is the same as that in the case where the AAAH 100 specifies the HA (see the above described 7A(2)). Its explanation is therefore omitted here.

### 7B (3) Sequence in the case where a mobile node moves from the communication area of an FA within one AAAF to that of an FA within another AAAF

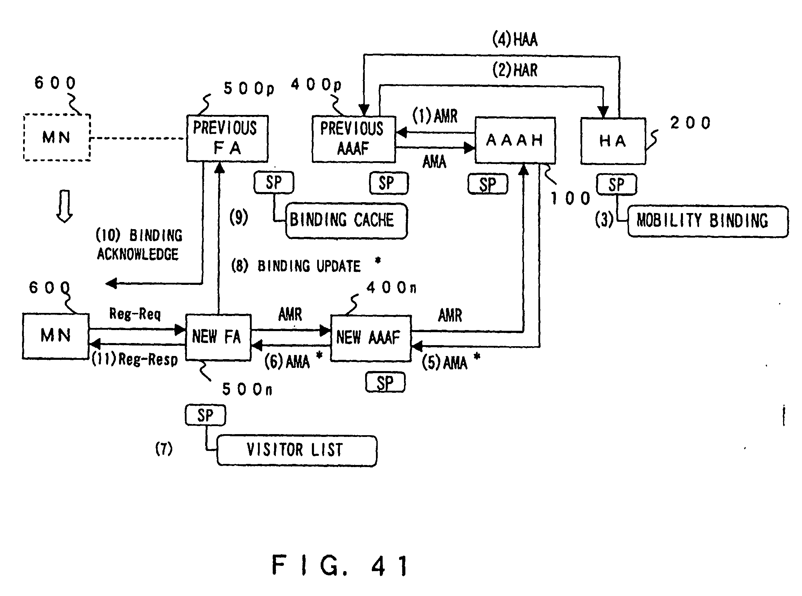

Fig. 41 shows the sequence for distributing service profiles. Illustrated here is the case where the mobile node 600 moves from the communication area of an FA 500p subordinate to an AAAF 400p to that of an FA 500n subordinate to an AAAF 400n, in a similar manner in the example shown in Fig. 39. In this sequence, the process from when the mobile node 600 receives an agent advertisement from the FA 500n till when the AAAH 100 generates a transaction is the same as that in the case where the AAAH 100 specifies the HA 20 (see the above described 7A(3)). Its explanation is therefore omitted here.
(1) If the address assigned to the HA within the session transaction is "0000" or "FFFF" when being referenced, an AMR message is transmitted to the AAAF (namely, the AAAF 400p) that has specified the HA 200.
(2) The AAAF 400p transmits an HAR message to the HA 200.
(3)-(4) The HA 200 updates mobility binding according to the HAR message, and returns an HAA message to the AAAF 400p.
(5) The AAAH 100 makes a comparison between the AAAF (AAAF 400n) which has transmitted the AMR message and that within the session transaction. If they mismatch, the AAAH 100 transmits to the AAAF 400n the AMA message in which "previous FA-NAI" is set. A service profile is attached to this AMA message.
(6) The AAAF 400n forwards the AMA message to the FA 500n. In this way, the service profile is distributed to the FA 500n.
(7)-(8) Upon receipt of the AMA message in which the "previous FA-NAI" is set, the FA 500n adds the service profile, which is attached to the message, to its service profile cache. Furthermore, the FA 500n identifies the FA 500p based on the "previous FA-NAI" set in the above described message. The FA 500n then transmits to the FA 500p the binding update where the RO authentication notified by the AMA message and the service profile are set.
(9)-(10) The FA 500p deletes the visitor list of the mobile node 600, and generates a binding cache at the same time. Then, the FA 500p replaces the current service profile with the service profile notified by the binding update, and links the service profile with the binding cache. The FA 500p then returns a binding acknowledge message to the mobile node 600.
(11) The FA 500n returns a registration reply message to the mobile node 600. The service profile and the binding cache of the FA 500p are deleted at the expiration of the cache. The service cache and the session transaction of the AAAF 400p are deleted upon session timeout.

### 7C. Flowchart of each entity

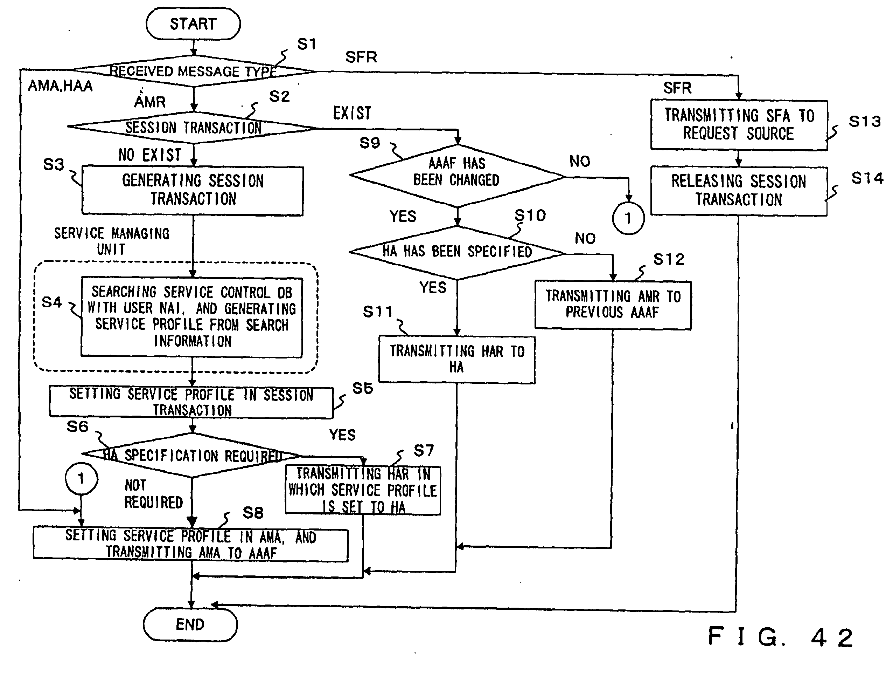

Fig. 42 is a flowchart explaining the process of the AAAH 100. This process is performed, for example, upon receipt of a DIAMETER protocol packet.

In step S1, the message type of a received packet is detected. If the message type is an AMR message, the process proceeds to step S2. If the message type is either an AMA or an HAA message, the process proceeds to step S8. If the message type is an SFR message, the process proceeds to step S13. In step S2, it is detected whether or not a session transaction has already been generated. If the session transaction has already been generated, the process proceeds to step S9. If the session transaction has not been generated yet, it is generated in step S3.

In step S4, a service control database is searched by using the NAI set in the AMR message as a key, and a service profile is generated based on the result of the search. In step S5, the generated service profile is set in the session transaction.

In step S6, it is detected whether or not the AAAH must specify an HA. Which of the AAAH and an AAAF specifies an HA may be predetermined or changed dynamically. If the AAAH must specify an HA, the HAR message to which the service profile is attached is transmitted to the HA in step S7. If the AAAH does not need to specify an HA, the AMA message to which the service profile is attached is transmitted to the AAAF in step S8.

In step S9, it is detected whether or not the AAAF has been changed. If the AAAF has been changed, the process proceeds to step S10. If the AAAF has not been changed, the process proceeds to step S8 where an AMA message is transmitted. In step S10, it is detected whether or not an HA has already been specified. If the HA has already been specified, an HAR message is transmitted to the HA in step S11. If the HA has not been specified yet, an AMR message is transmitted to the AAAF that previously accommodated the mobile node.

In step S13, an SFA message is returned to the source of the SFR message. In step S14, a session transaction is released.

The operations of the AAAH are explained below as specific examples.
(1) Procedure for registering an initial location in the case where the AAAF specifies an HA (see Fig. 40)
   This process is performed, for example, when a registration request message is transmitted fromamobile node to an FA, and an authentication request message is transmitted from the FA to an AAAH via the AAAF.
   S1: The process proceeds to step S2, since an AMR (AA-Mobile-Node-Request) message is received from the AAAF.
   S2: A session transaction is searched by using the NAI of the mobile node as a key, which is notified by the AMR message. Note that a session transaction has not been generated yet at the time of initial location registration. Therefore, the process proceeds to step S3.
   S3: A session transaction is generated.
   S4: A service control database 300 is searched by using the NAI of the mobile node as a key, and a service profile is generated based on the information resultant from the search and the policy for generating a service profile. In this way, the service profile shown in Fig. 12 is generated. The policy for generating a service profile and a specific configuration method are not particularly limited. However, since some examples are provided above, they are not cited here.
   S5: The service profile is set in the session transaction.
   S6: Which of the AAH and the AAAF specifies the HA is determined if either "0000" or "FFFF" is set as the HA address of the AMR message. A determination condition is assumed to be given by a provider. Here, it is assumed that the AAAF specifies the HA. The process then proceeds to step S8.
   S8: The service profile generated in step S4 is attached to an AMA message, and the message is transmitted to the AAAF.
(2) Procedure for registering an initial location in the case where an AAAH specifies an HA (see Fig. 26)
   S1 to S5: The same as the above described case (1). S6: The process proceeds to step S7 based on the assumption that the AAAH specifies the HA.
   S7: The HA is specified, and the HAR message to which a service profile is attached is transmitted to the specified HA.
(3) Procedure for registering the location of a mobile node which moves between ISPs in the case where an AAAH specifies an HA
   This process is performed, for example, when a certain mobile node moves from the communication area of one FA subordinate to one AAAF to that of another FA subordinate to another AAAF
   S1: The process proceeds to step S2, since an AMR message is received from the AAAF.
   S2: A session transaction (see Fig. 14) is searched by using the NAI of the mobile node as a key, which is notified by the AMR message. Since an authentication process has been terminated here, a session transaction exists. Accordingly, the process proceeds to step S9. S9: Whether or not the AAAF has been changed is detected by making a comparison between the address of the current AAAF in the session transaction obtained in step S2 and the source address of the received AMR message. Because the mobile node is assumed to move between ISPs here, the AAAF has been changed. Therefore, the process proceeds to step S10.
   S10: Whether or not the HA has already been specified is detected by the AAAH itself by referencing the HA address of the session transaction. Here, it is assumed that the HA has already been specified by the AAAH itself. If the HA has not been specified by the AAAH, for example, either "0000" or "FFFF" is supposed to be set as the HA address.
   S11: An HAR message is transmitted to the already specified HA.
(4) Procedure for registering the location of a mobile node which moves between ISPs in the case where an AAAF specifies an HA (see Fig. 41)
   S1 to S9: The same as the above described case (3)
   S10: The process proceeds to step S12, since the HA is specified by the AAAF. If the HA is specified by the AAAF, for example, "0000" or "FFFF" is set as the HA address.
   S12: A session transaction (the address of the AAAF which has specified the HA in Fig. 14) is referenced, and an AMR message is forwarded to the AAAF which has specified the HA.
(5) Procedure for updating location registration at the expiration of a session timer
   This process is performed, for example, at the expiration of a session timer while a mobile node stays in the communication area of a certain FA. When the session timer expires, an AMR message for updating the location registration is transmitted to an AAAH.
   S1 to S2: The same as the above described case (3)
   S9: Since there is no location registration due to the move of the mobile node, an AAAF has not been changed. Accordingly, the process proceeds to step S8.
   S8: Attaching the service profile generated in step S4 to an AMA message, and transmitting the message to the AAAF.
(6) Procedure upon termination of the location registration to an HA
   This process is performed upon receipt of an HAA message from an HA, or an AMA message from an AAAF which has specified the HA. Note that the AAAH receives the HAA message from the HA when transmitting an HAR message to the HA in step S11. Furthermore, the AAAH receives an AMA message from a previous AAAF when transmitting an AMR message to the previous AAAF in step S12.
   S1: The process proceeds to step S8 upon receipt of the HAA or the AMA message.
   S8: The service profile generated in step S4 is attached to the AMA message, and the message is transmitted to the AAAF. Upon receipt of the AMA message from the previous AAAF, the AMA message to which the service profile is attached is transmitted to a new AAAF.
(7) Procedure for releasing a session
   This process is performed upon receipt of an SFR (Session Free Request) message. Remember that the SFR message is generated by a server which does not directly relate to the present invention. The SFR message is generated, for example, when an accounting server receives an accounting stop message.
   S1: The process proceeds to step S13 upon receipt of the SFR message.
   S13: An SFA (Session Free Answer) message is returned to the server that has transmitted the SFR message.
   S14: Releasing the session transaction.

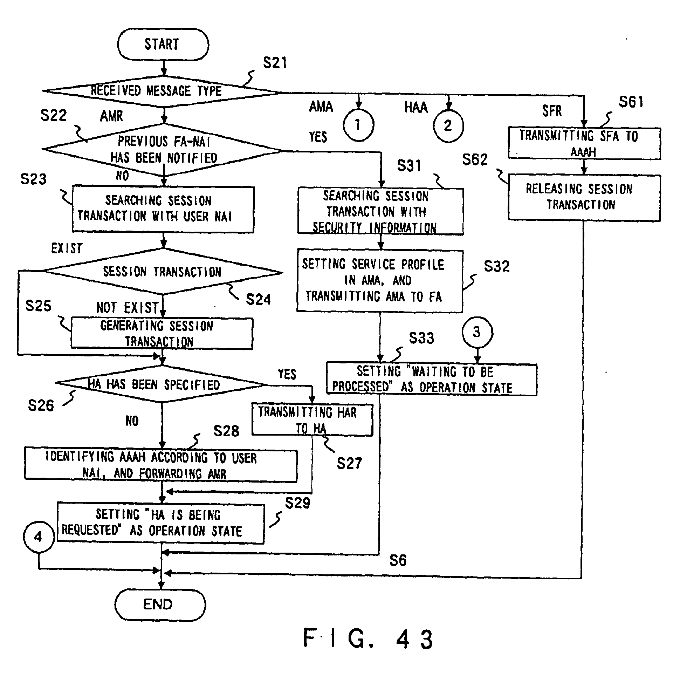

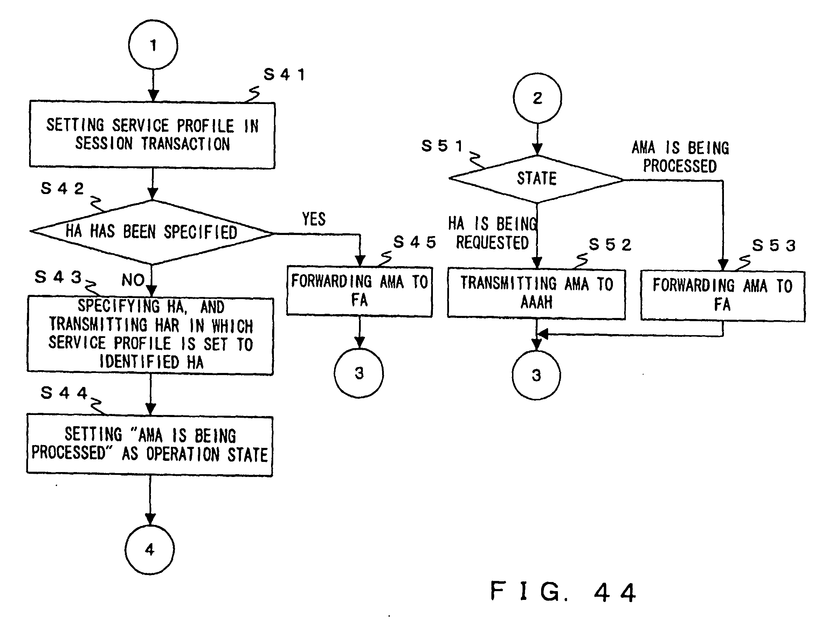

Figs. 43 and 44 are flowcharts explaining the process of the AAAF 400. This process is performed, for example, upon receipt of a DIAMETER protocol packet.

In step S21, the message type of a received packet is detected. If the message type is an AMR message, the process proceeds to step S22. If the message type is an AMA message, the process proceeds to step S41. If the message type is an HAA message, the process proceeds to step S51. Or, if the message type is an SFR message, the process proceeds to step S61. In step S22, it is detected whether or not "previous FA-NAI" is notified by the AMR message. If the "previous FA-NAI" is notified, the process proceeds to step S31. If the "previous FA-NAI" is not notified, the process proceeds to step S23.

In step S23, a session transaction is searched by using the NAI set in the AMR message as a key. In step S24, it is detected whether or not a session transaction has already been generated. If the session transaction has not been generated yet, it is generated in step S25.

In step S26, it is detected whether or not an HA has already been specified by the AAAF itself. If the HA has already been specified, an HAR message is transmitted to the HA in step S27. If the HA has not been specified yet, an AAAH is identified based on the NAI set in the AMR message in step S28, and the AMR message is forwarded to the identified AAAH. Then, "HA is being requested" is set as an operation state in step S29.

In step S31, the session transaction is searched by using security information. In step S32, a service profile is attached to the AMA message, which is then transmitted to the FA. In step S33, "waiting to be processed" is set as an operation state.

In step S41, the service profile is set in the session transaction. In step S42, it is detected whether or not the HA has already been specified by the AAAF itself. If the HA has not been specified yet, it is specified, and at the same time, the HAR message to which the service profile is attached is transmitted to the specified HA in step S43. Then, "AMA is being processed" is set as the operation state in step S44. On the other hand, if the HA has already been specified, the process proceeds to step S33, after the AMA message is forwarded to the FA in step S45.

In step S51, the operation state is examined. If "HA is being requested" is set as the operation state, the process proceeds to step S33, after transmitting the AMA message to the AAAH in step S52. On the other hand, if the "AMA is being processed" is set as the operation state, the process proceeds to step S33 after forwarding the AMA message to the FA in step S53.

In step S61, an SFA message is transmitted to the AAAH. Then, the session transaction is released in step S62.

The operations of the AAAF are described below as specific examples.
(1) Procedure for registering an initial location (see Figs. 26 and 40)
   S21: The process proceeds to step S22, since an AMR message is received from the FA.
   S22: "Previous FA-NAI AVP" is not included in the AMR message, since this is initial location registration. Accordingly, the process proceeds to step S23.
   S23: A session transaction is searched by using the NAI notified by the AMR message as a key.
   S24: The session transaction, which is a search target in step S23, does not exist in the AAAF, since this is the initial location registration. Accordingly, the process proceeds to step S25.
   S25: A session transaction is generated.
   S26: An HA has not been specified yet at the time of the initial location registration. Accordingly, the process proceeds to step S28. Whether or not the HA has been specified is detected according to the HA address in the session transaction. For example, "0000" is set as the HA address immediately after a session transaction is generated.
   S28 : The AAAH of the ISP to which the mobile node belongs is identified based on the domain portion of the NAI of the mobile node, which is set in the AMR message, and the AMR message is forwarded to the identified AAAH.
   S29: "HA is being requested" is set as an operation state.
(2) Procedure for registering the location of a mobile node which moves between ISPs in the case where the AAAF specifies an HA (see Fig. 41)
   Described here are the operations of the AAAF (equivalent to the AAAF 400p shown in Fig. 41, and referred to as a "previous AAAF" in this case) to which the FA accommodating the mobile node belongs prior to the move of the mobile node.
   S21: The process proceeds to step S22, since the previous AAAF receives the AMR message from the AAAH.
   S22: "previous FA-NAI AVP" is not included in the AMR message, since the mobile node moves to a different domain. Accordingly, the process proceeds to step S23.
   S23: A session transaction is searched by using the NAI notified by the AMR message as a key.
   S24: Such a session transaction exists in the previous AAAF. Accordingly, the process skips step S25.
   S26: The address of the HA set by the AAAF itself is set as the HA address in the session transaction. Accordingly, the process proceeds to step S27.
   S27: An HAR (Home-Agent-MIP-Request) message is transmitted to the HA.
   S29: "HA is being requested" is set as an operation state.
(3) Procedure for registering the location of a mobile node which moves within an ISP (see Fig. 38)
   Here, assume that the FA which previously accommodated the mobile node prior to its move is referred to as a "previous FA", whereas the FA which accommodates the mobile node after its move is referred to as a "new FA".
   S21: The process proceeds to step S22, since the AAAF receives an AMR message from the new FA.
   S22: Since the mobile node moves within a same domain, the mobile node sets "previous FA-NAI extension" of a registration request message, and FA sets "previous FA-NAI AVP" of the AMR message.
   S31: A session transaction is searched by using security information (MN-FA-SPI).
   S32: The service profile and the security information, which are set in the session transaction, are attached to an AMA (AA-Mobile-Node-Answer) message, which is then transmitted to the new FA.
   S33: "waiting to be processed" is set as an operation state.
(4) Procedure for registering a location in the case where the AAAF specifies an HA (see Fig. 40)
   S21: The AAAF receives an AMA message from the AAAH as a reply to the AMR message. Accordingly, the process proceeds to step S41.
   S41: A session transaction is identified by referencing a DIAMETER identifier field. The service profile notified by the AMA message is set in the identified session transaction.
   S42. Here, assume that the HA has not been specified yet, and the process proceeds to step S43. If the HA has been specified by the AAAF itself, for example, "0000" or "FFFF" is set as the HA address set in the AMA message. S43: The HA is specified, and the HAR (Home-Agent-MIP-Request) message to which the service profile is attached is transmitted to the specified HA. S44: "AMA is being processed" is as an operation state.
(5) Procedure for registering a location in the case where the AAAH specifies an HA (see Figs. 26 and 41)
   Here, the operations of, for example, the AAAF 400 shown in Fig. 26 or the AAAF 400n shown in Fig. 41 are explained.
   S21 and S41: The same as the above described (4). S42: Here, assume that the HA has already been specified by the AAAF itself, and the process therefore proceeds to step S45.
   S45. The FA is identified based on "current FA-NAI" in a session transaction, and an AMA message is forwarded to the identified FA.
   S33. "waiting to be processed" is set as an operation state.
(6) Procedure for registering the location of a mobile node which moves between ISPs in the case where the AAAF specifies the HA (see Fig. 41)
   Here, the operations of, for example, the AAAF 400p shown in Fig. 41 are described.
   S21: The process proceeds to step S51 upon receipt of an HAA (Home-Agent-MIP-Answer) message from the HA as a reply to an HAR message.
   S51: A session transaction is identified based on a session ID, and the operation state of the session transaction is examined. Here, assume that "HA is being requested" is set as the operation state. The process therefore proceeds to step S52.
   S52: The AAAH is identified from the session transaction, and an AMA message is transmitted to the AAAH.
   S33: "waiting to be processed" is set as the operation state.
(7) Procedure for making a registration reply in the case where the AAAF specifies an HA
   S21: The process proceeds to step S51 upon receipt of an HAA message from the HA as a reply to an HAR message. S51. A session transaction is identified based on a session ID, and the operation state of the identified transaction is examined. If the AAAF specifies the HA, "AMA is being processed" is set as the operation state. This is because steps S43 and S44 shouldhave been executed. Accordingly, the process proceeds to step S53.
   S53: The FA is identified from the session transaction, and the AMA message to which a service profile is attached is transmitted to the identified FA.
   S33: "waiting to be processed" is set as the operation state.
(8) Procedure for releasing a session
   S21: The process proceeds to step S61 upon receipt of an SFR message from the AAAH. Note that the SFR message is generated due to causes such as an accounting process stop, a fault, etc.
   S61: A session transaction is identified based on a session ID, and an SFA message is transmitted to the AAAH identified from the transaction.
   S62: The session transaction is released.

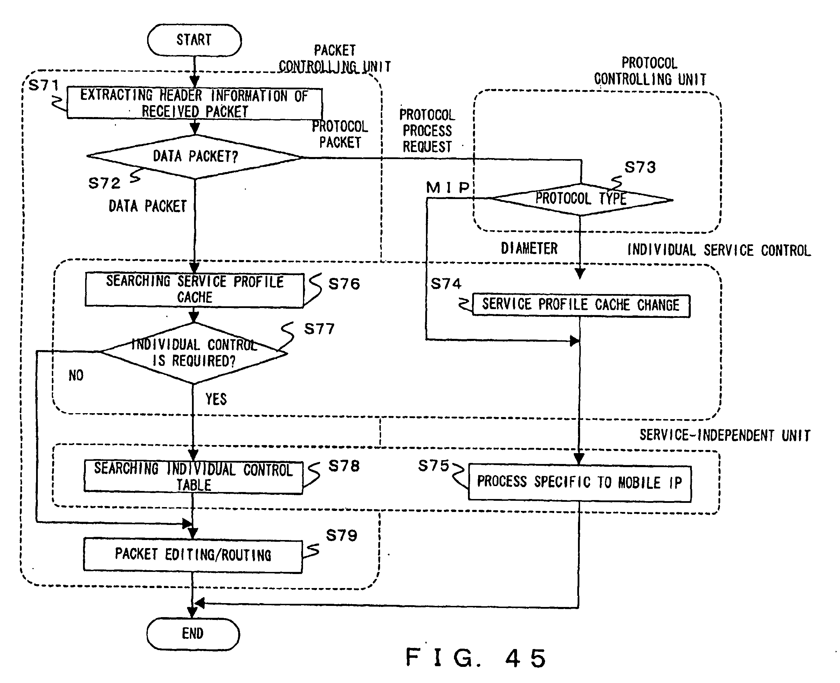

Fig. 45 is a flowchart explaining the operations of the HA 200, FA 500, or the CN 700. This process is performed upon receipt of a packet.

In step S71, the IP header information of a received packet is extracted. The IP header is the one shown in Fig. 62A. Remember that this process is performed by the packet controlling unit 201. In step S72, the destination address and the port number in the header information are referenced, and whether the received packet is either a data or a protocol packet is detected. Steps S73 through S75 are executed if a protocol packet is received, and steps S76 through S79 are executed if a data packet is received.
(1) Operations performed when a protocol packet is received
   S73: Upon receipt of a protocol process request from the packet controlling unit 201, the protocol controlling unit 202 analyzes the port number of the UDP header, and detects whether a requested process is either a mobile IP or a DIAMETER process.
   S74: When a service profile is distributed by the DIAMETER protocol, the service profile cache of the individual service controlling unit 203 is updated with the distributed service profile.
   S75: The table of the service-independent unit 204 is generated according to a mobile IP message, and the information required for that table is set. Additionally, a necessary message is transmitted according to the mobile IP.
(2) Operations performed when a data packet is received
   S76: The service profile cache is searched by using as a key the header information extracted by the packet controlling unit 201 according to the policy set in the search policy management table. Then, the received packet is edited according to "routing/packet editing information" in the extracted service profile. This process is performed by the individual service controlling unit 203.
   S77: If a predetermined function of the service-independent unit 204 is specified by the service profile extracted in step S76, control is given to the service-independent unit 204 and the process proceeds to step S78.
   S78: The service-independent unit 204 determines the editing method and the forwarding destination of the packet by referencing the control table specified by the service profile.
   S79: After the packet is edited depending on need, it is forwarded.

### 7D. Management of service profiles

With the system according to this embodiment, each user can select a service that he or she desires to use. Accordingly, a variety of users exist: one user requests various value-added services, another user requests no value-added services, and still another user requests only a particular fundamental value-added service. The information about the service requested by each user is stored in the service control database 300 for each user.

A method efficiently using a service profile is explained below by assuming the case where no value-added services are requested, and the case where only a particular fundamental value-added service is requested.

### (1) Management of a service profile for the user who requests no value-added services

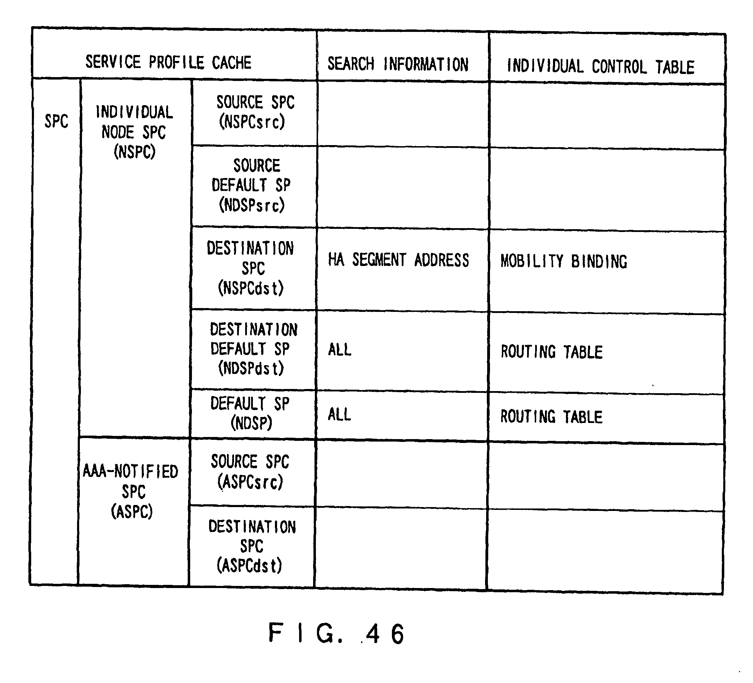

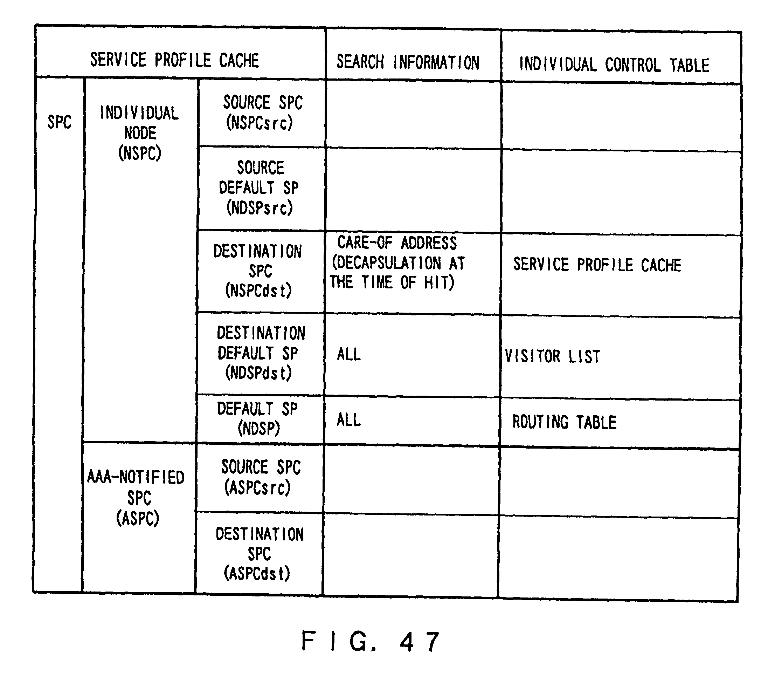

An HA and an FA respectively generate the service profiles shown in Figs. 46 and 47 at the time of an initial configuration. A minimum of the information required to support the mobile IP is set in each of the service profiles.

An AAAH does not generate a service profile for the user who requests no value-added services when the registration of his or her mobile node is requested. Whether or not the user of the mobile node that transmits the registration request message requests a value-added service may be determined, for example, by searching a service control database with the use of the NAI set in the AMR message transmitted upon a registration request, as a key. "not generating a service profile upon request of mobile node registration" is one example of a service profile configuration policy in step S4 of Fig. 42.

Accordingly, a service profile for a value-added service is not newly distributed from the AAAH to the HA and the FA. Furthermore, no settings are made by the HA and the FA in the AAA-notified SPC in the service profile caches for this user, as shown in Figs. 46 and 47.

When the data packet addressed to the correspondent node CN is transmitted from the mobile node in the above described configuration, it is received by the FA which accommodates the mobile node. Upon receipt of this data packet, the FA searches the service profile cache shown in Fig. 47. Here, the "mobile node" and the "correspondent node CN" are set as the source address and the destination address of this data packet respectively. Accordingly, if the service profile cache shown in Fig. 47 is searched according to the search policy shown in Fig. 20, a default service profile (NDSP) is to be referenced. In the default service profile (NDSP), a routing table that a router originally manages is desginated as a table to be accessed. The received data packet is therefore forwarded to the correspondent node CN according to the routing table.

Or, when the data packet addressed to the mobile node is transmitted from the correspondent node CN, it is transferred to the HA, which is the home agent of the mobile node. Upon receipt of this data packet, the HA searches the service profile cache shown in Fig. 46. Here, the "correspondent node" and the "mobile node" are set as the source address and the destination address of the data packet respectively. Accordingly, if the service profile cache shown in Fig. 46 is searched according to the search policy shown in Fig. 20, a destination service profile (NSPCdst) is tobe referenced. Because a mobility binding is designated by the destination service profile (NSPCdst) as a table to be accessed, the received data packet is forwarded to the FA according to the mobility binding. At this time, this packet is encapsulated.

Upon receipt of the encapsulated packet, the FA searches the service profile shown in Fig. 47. Here, the "HA" and the "FA (care-of address)" are set as the source address and the destination address of this data packet, respectively. Accordingly, if the service profile cache shown in Fig. 47 is searched according to the search policy shown in Fig. 20, the destination service profile is to be referenced. As a result, this data packet is decapsulated. Furthermore, since the service profile cache is designated as information to be accessed by the destination service profile (NSPCdst), it is again searched by using the header information of the decapsulated packet as a key.

The "HA" and the "mobile node" are respectively set as the source address and the destination address of the decapsulated data packet. Therefore, if the service profile cache shown in Fig. 47 is searched according to the search policy shown in Fig. 20, the destination default service profile (NDSPdst) is to be referenced. Accordingly, the decapsulated packet is forwarded to the mobile node according to the visitor list.

### (2) Management of a service profile for a user who requests only a particular fundamental value-added service

Many users are expected to use the fundamental value-added service set (such as the quality guarantee service shown in Fig. 7) provided by an Internet service provider unchanged, although some users desire a more fine-grained service. In such a situation, a service profile pattern converges on a numerical pattern. Therefore, service profile setting for each user may result in a waste of resources.

Considered as a method overcoming this problem is a method making a correspondence between a service class to be provided and the IP address assigned by an AAA or an HA beforehand. For example, an Internet service provider predetermines the IP address range assigned to a mobile node for each service class, and notifies other providers of the predetermined range. The provider which receives this notification sets necessary information in the service profile caches of each HA and FA according to the notification.

The AAAH determines whether or not the user of a mobile node requests only the fundamental value-added service set when assigning an IP address to the mobile node, for example, in a dial-up procedure. Whether or not each user requests only the fundamental value-added service set, and which service class is selected if the fundamental set is requested can be detected by referencing the service control database 300. If the user requests only the fundamental value-added service set, the AAAH assigns to the mobile node the IP address corresponding to the service class selected by the user. At this time, the AAAH does not distribute a service profile to the HA and the FA. Note that "not generating a service profile when an IP address is assigned" is one example of the service profile configuration policy in step S4 of Fig. 42.

The HA and FA provide the fundamental value-added service set by referencing the service profile cache. As a result, the capacity of the service profile cache is reduced. Furthermore, it is sufficient to examine only the upper portion of an IP address when the service profile cache is searched, thereby speeding up the search.

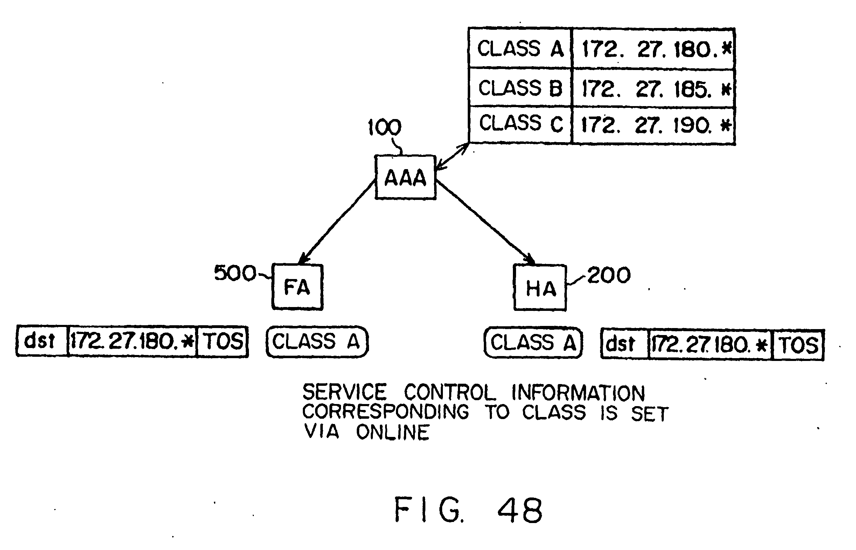

Fig. 48 shows an example of the method predetermining IP address ranges used for service classes. In this example, "172.27.180.*", "172.27.185.*", and "172.27.190.*" are respectively assigned to service classes A, B, and C as the IP address ranges. Here, "*" is a wildcard. In the service profiles distributed to the HA and the FA, for instance, "172.27.180.*" is set as target packet control information, and the information for providing the service class A is set as a routing/packet editing method and individual control information. Accordingly, upon receipt of the packet having the upper address portion "172.27.180" as a source address or a destination address, the HA and the FA perform the process for supporting the service class A for this packet.

### 7E. Route optimization

The packet addressed from the correspondent node CN 700 to the mobile node 600 is once transferred to the HA 200 according to the address of the mobile node 600 in normal cases. The packet is then transmitted to the mobile node 600 after being forwarded from the HA 200 to the FA 500.

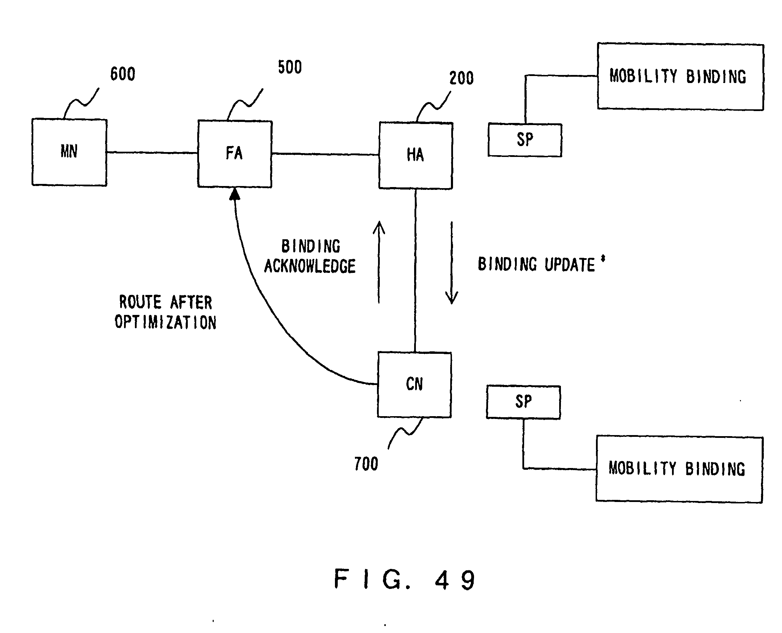

A route optimization process is a procedure for directly transferring the packet addressed to the mobile node 600 to the FA 500 not via the HA 200 in the above described case. Distribution of a service profile, which is required to implement the above described optimization, is explained below by referring to Fig. 49.
(1) The HA 200 receives the data packet addressed to the mobile node 600 from the correspondent node CN 700. In this case, this packet hits the service profile in which the address of the mobile node 600 is set as the filter information for the destination address. Accordingly, the HA 200 edits and encapsulates the packet according to the information of the hit service profile, and transmits the encapsulated packet to the FA 500 that accommodates the mobile node 600. The FA 500 decapsulates the received packet, and forwads the decapsulated packet to the mobile node 600.
(2) The HA 200 recognizes that the correspondent node CN 700 does not have a service profile cache and a binding cache, by receiving the data packet transmitted from the correspondent node CN 700. Then, the HA 200 attaches the service profile used in the above described (1) to a binding update message, and transmits this message to the correspondent node CN 700.
(3) An "A (answer) bit" of the binding update message is used to request a binding acknowledge message. Furthermore, "route optimization authentication extension (RO authentication)" is used when the correspondent node CN 700 authenticates a route optimization request. Note that a service profile is an extension for service control.
(4) Upon receipt of the binding update message, the correspondent node CN 700 generates a service profile and a biding cache. If the "A bit" is set, the correspondent node CN 700 returns a binding acknowledge message to the HA 200. The lifetime of the binding cache is a current remaining time of the lifetime set by the registration request message.
   The binding cache is configured, for instance, as shown in Fig. 23. In the above described example, the "correspondent node CN 700", the "mobile node 600", and the "FA 500" are respectively set as a source address, a destination address, and a care-of address. In this case, the "address of the mobile node 600" is set as the destination address of target packet control information, and the binding cache is specified as a table to be accessed in the service profile.
(5) The correspondent node CN 700 references the service profile generated in the above described (4) when transmitting the packet addressed to the mobile node 600. Since the mobile node 600 is registered to the destination service profile (ASPCdst) in the service profile notified from the AAA in this case, the binding cache is referenced. As a result, the packet is encapsulated, and tunneled to the FA 500 that is specified as the care-of address. At this time, necessary editing is performed for the encapsulated packet according to the service profile.

As described above, a service profile is distributed from the HA to the correspondent node CN, so that the distribution of the service profile with route optimization can be easily implemented. If the route optimization process is not required, there is no need to arrange the individual service controlling unit 203 and the service-independent unit 204 in the correspondent node CN.

### 8. ANYCAST service

There may be cases where a single user possesses a plurality of terminals, and desires to use an arbitrary one of them according to the circumstances. Furthermore, in a system including a plurality of servers, the configuration where an access to this system is divided to an arbitrary server in order to distribute the load on each of the servers, is known.

In the former case, one virtual address shared by the plurality of terminals is used. When a packet is transmitted to the virtual address, it is forwarded to a predetermined one of the terminals . In the latter case, one virtual address shared by the plurality of servers is used. When an access is made to this address, a packet is transmitted to a predetermined one of the servers.

In this embodiment, the above described service is defined to be called an "ANYCAST service". Additionally, the virtual address in the above described example is defined to be called an "ANYCAST address".

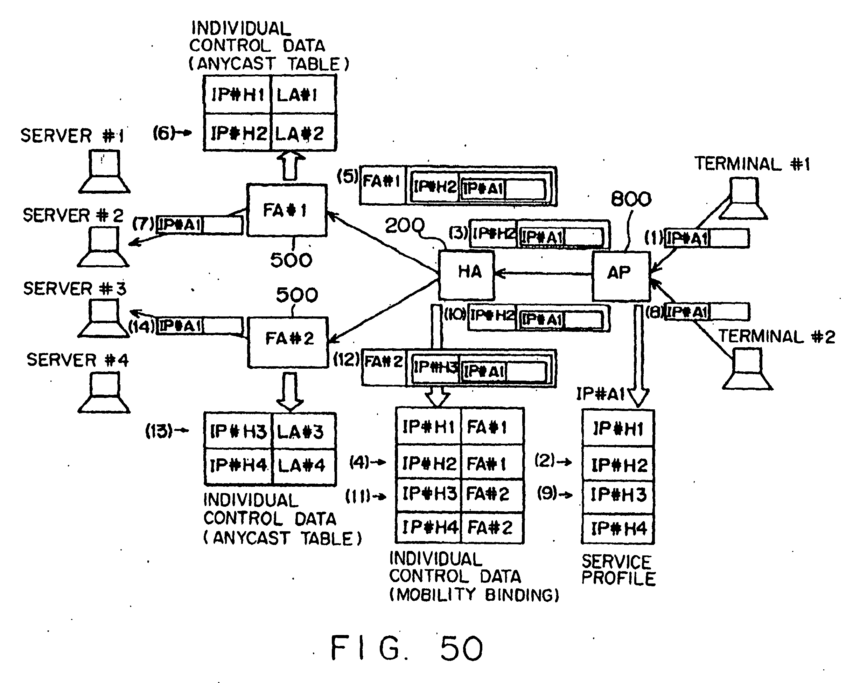

Fig. 50 is a schematic diagram explaining an ANYCAST service. In this figure, an ANYCAST address (IP#A1) is assigned to a plurality of servers #1 through #4. Here, an ANYCAST address is a subnet of an address proxy server (AP) 800 to be described later. Additionally, actual IP addresses of the servers #1 through #4 are respectively "IP#H1" through "IP#H4". The servers #1 and #2 are accommodated by an FA 500 (#1), whereas the servers #3 and #4 are accommodated by an FA 500 (#2).

The address proxy server 800 has fundamentally the same configuration as that of an HA. Note that, however, the address proxy server 800 transfers the packet in which an ANYCAST address is set to one or a plurality of addresses corresponding to the ANYCAST address. In the example shown in Fig. 50, upon receipt of the packet in which the ANYCAST address (IP#A1) is set, the address proxy server 800 transfers the packet to one of the servers #1 through #4. To which of the servers the packet is to be transferred is described in the service profile generated and distributed by an AAAH.

An ANYCAST service is managed by the AAAH in the ANYCAST address management table shown in Fig. 13. This table stores one or more NAIs corresponding to an ANYCAST address, the home address of the terminal identified by each NAI, and the state of the terminal identified by each NAI for each ANYCAST address. The state of the terminal is, for example, an online, an offline, a pending, a faulty, a congested state, etc. In the example shown in Fig. 50, the IP addresses (IP#H1 through IP#H4) of the servers #1 through #4 and their states are set for the ANYCAST address (IP#A1).

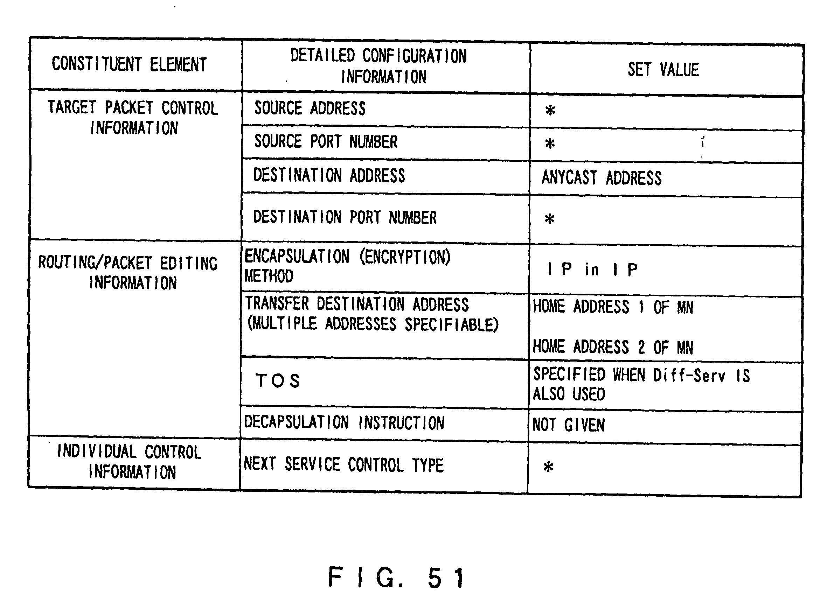

The AAAH generates a service profile for transferring the packet in which an ANYCAST address is set to one or a plurality of addresses corresponding to the ANYCAST address, and distributes the generated profile to the address proxy server 800. An example of the service profile distributed to the address proxy server 800 is shown in Fig. 51.

In "transfer destination address" in this service profile, one or a plurality of the IP addresses (IP#H1 through IP#H4) of the servers #1 and #4 are set. Which of the addresses is to be set is determined according to the address selection policy in the profile shown in Fig. 11. The address selection policy is, for example, "selecting a terminal in an online state", "not selecting a terminal in an offline, a pending, a faulty, or a congested state", etc.

When the above described service profile is distributed, the address proxy server 800 transmits the packet to the destination specified by the service profile. If a plurality of destinations are specified by the service profile, the address proxy server 800 can sequentially select the transfer destinations one by one.

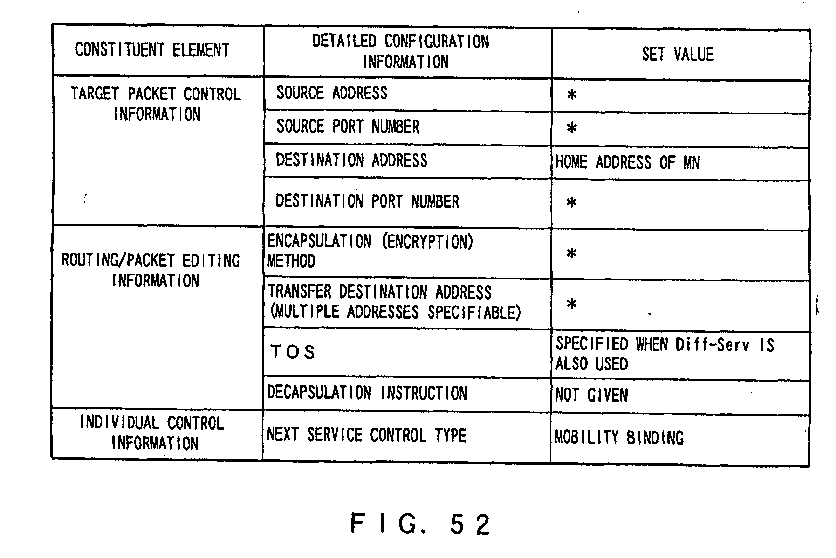

To the HA 200, the service profile shown in Fig. 52 is distributed. In this service profile, mobility binding is specified as a table to be accessed. In the mobility binding, the FA 500 (#1) is assigned to the IP addresses of the servers #1 and #2 as shown in Fig. 50, whereas the FA 500 (#2) is assigned to the IP addresses of the servers #3 and #4.

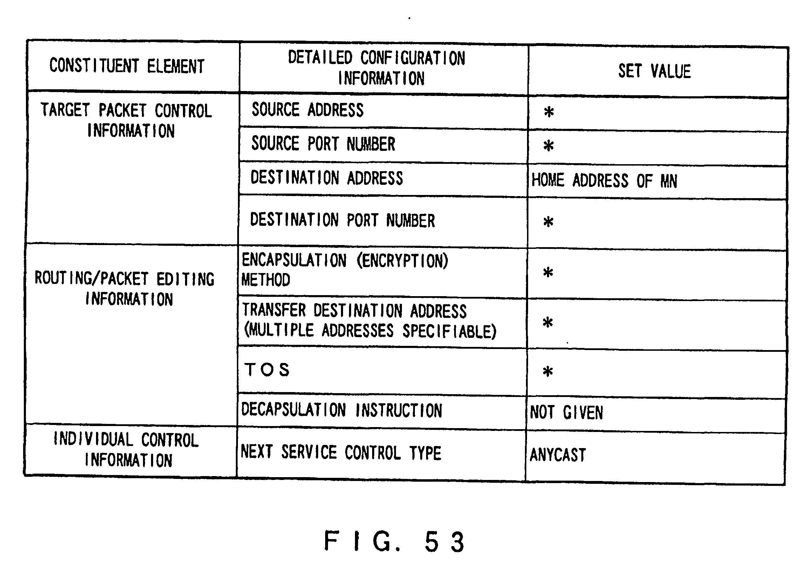

To the FA 500, the service profile shown in Fig. 53 is distributed. This service profile is generated for the terminal that subscribes to an ANYCAST service. In this service profile, the ANYCAST table shown in Fig. 24 is specified as a table to be accessed. The ANYCAST table is obtained by setting an "ANYCAST address" and the "address of an address proxy server" in a normal visitor list.

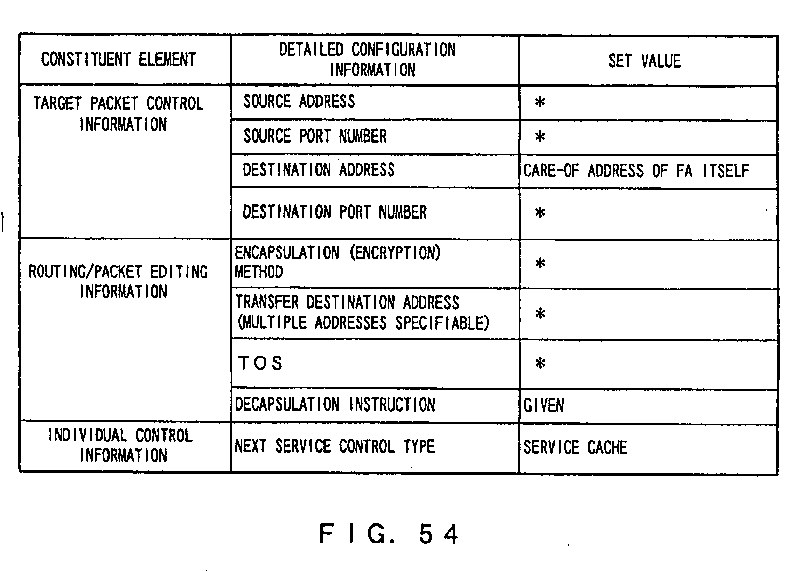

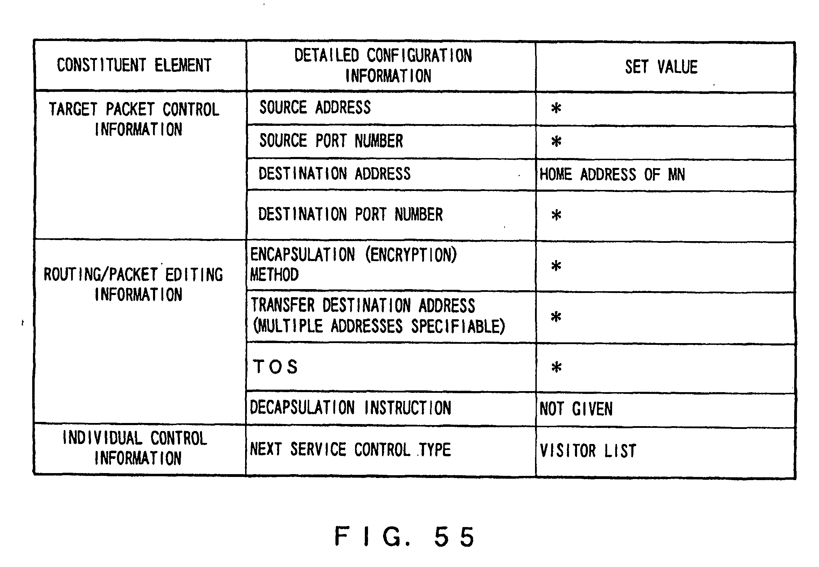

The FA 500 generates the service profile shown in Fig. 54. In this service profile, the information for providing the fundamental functions of the mobile IP are set. Also the service profile shown in Fig. 55 is distributed to the FA 500. This service profile is generated for the terminal that does not subscribe to an ANYCAST service.

When the packet in which an ANYCAST address is set is transmitted from the terminal #1 in the above described system, it is transferred to the address proxy server 800. The address proxy server 800 transfers this packet to a predetermined server according to the service profile distributed from the AAAH. In this example, the IP address (IP#H2) of the server #2 is set in this packet.

This packet is transferred to the HA 200, which is the home agent of the server #2. The HA 200 transfers the packet to the FA 500 (#1) according to the mobility binding. This packet is doubly encapsulated.

Upon receipt of this packet, the FA 500 (#1) calls the ANYCAST table by referencing the service profiles shown in Figs. 54 and 53. The FA 500 (#1) then decapsulates the packet by detecting the link layer address of the server #2 from the IP address of the server #2 based on the ANYCAST table, and by recognizing the ANYCAST address and the address proxy server 800. As a result, the decapsulated packet is delivered to the server #2. Similarly, the packet transmitted from the terminal #2 is transferred to the server #3.

In this way, the address proxy server, HA, and FA execute the ANYCAST service according to the service profiles generated by the AAAH. At this time, the terminal that subscribes to the ANYCAST service is managed by the AAAH in a centralized manner. Accordingly, the packet in the ANYCAST service is transferred to a suitable mobile node without fail.

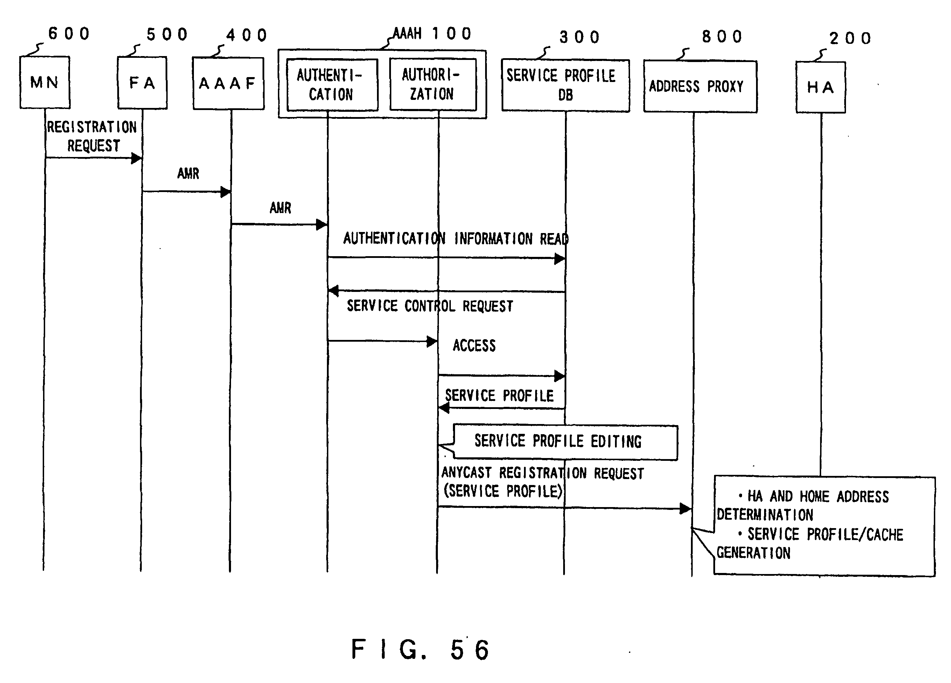

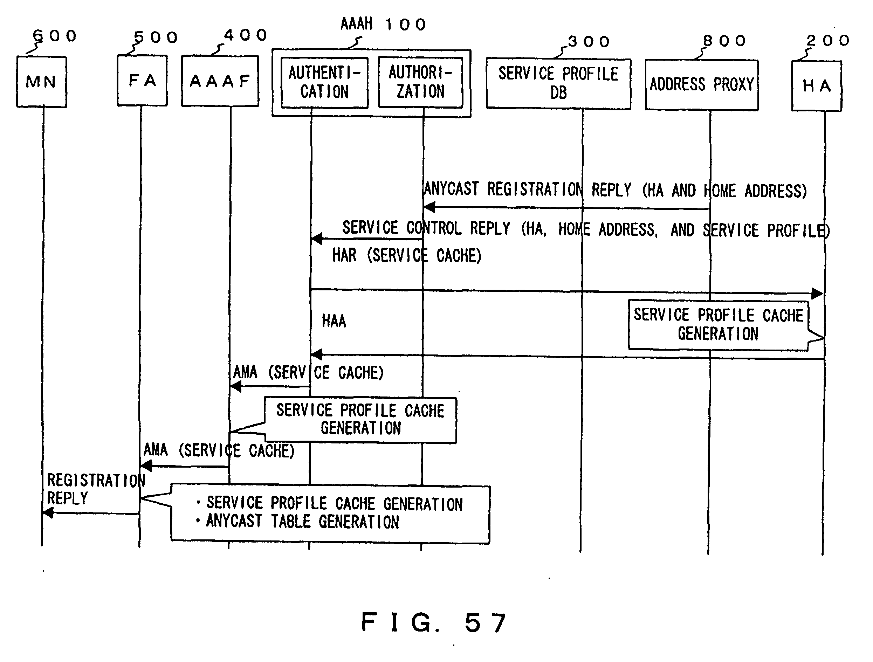

Figs. 56 and 57 exemplify the sequence for setting ANYCAST information. This sequence is started when the mobile node 600 transmits a registration request message to the FA 500. Remember that the AAAH 100 includes an authentication server and an authorization server.
(1) Upon receipt of the registration request message, the FA 500 generates a visitor list, and transmits an AMR message at the same time.
(2) The authentication server of the AAAH 100 that has received the AMR message extracts the authentication information of the user from the service control database 300.
(3) If the authentication is successfully made, service control is requested to the authorization server. The authorization server then reads the corresponding service profile from the service control database 300, and extracts an ANYCAST address.
(4) The authorization server transmits an ANYCAST registration request message to the address proxy server 800. The service profile is attached to this message.
(5) The address proxy server 800 specifies the HA 200 which serves as the home agent of the mobile node 600, and also specifies the home agent address of the mobile node at the same time. As a result, the service profile cache shown in Fig. 51 is generated.
(6) The address proxy server 800 notifies the authorization server of the address of the HA 200 and the home address of the mobile node 600 by using an ANYCAST registration reply message.
(7) The authorization server generates the address management table shown in Fig. 13. Additionally, the authorization server generates the service profile corresponding to the mobile node 600 that has transmitted the registration request message.
(8) The authorization server notifies the authentication server of the generated service profile by using a service control reply message.
(9) The registration request process is executed with a normal procedure.
(10) Upon receipt of the AMA message, the FA 500 generates an ANYCAST table (extended visitor list) based on the visitor list and the information notified by the AMA message. The FA 500 then notifies the mobile node 600 of the ANYCAST address.

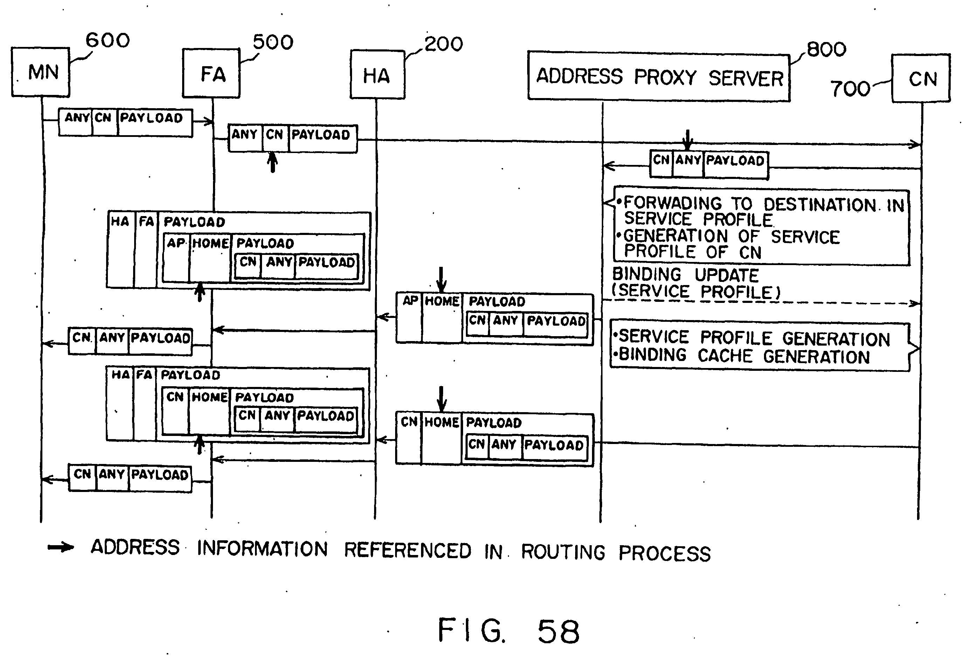

Fig. 58 exemplifies the sequence for transferring a packet by using an ANYCAST service. Each of the packets shown in Fig. 58 sequentially represents "source address", "destination address", and "payload" from the left side of the drawing sheet. The addresses indicated by arrows in this figure are those referenced in a routing process.

Provided below is the sequence implemented when the correspondent node CN 700 that has received a data packet from the mobile node 600 returns the packet to the mobile node 600. It is assumed that the mobile node 600 is given an ANYCAST address with the above described process.
(1) The correspondent node CN 700 transmits the packet the destination of which is the ANYCAST address assigned to the mobile node 600. Here, the ANYCAST address is an address of the subnet of the address proxy server 800. Accordingly, this packet is forwarded to the address proxy server 800.
(2) Upon receipt of the packet, the address proxy server 800 references the service profile corresponding to the ANYCAST address set in the packet, and selects one of the home addresses of the mobile node 600 from the service profile. A method selecting one of a plurality of home addresses is not particularly limited. However, by way of example, a home address is sequentially selected.
(3) The address proxy server 800 generates a service profile to bind the selected home address of the mobile node 600 and the address of the correspondent node CN 700, and transmits the generated service profile to the correspondent node CN 700 by using a binding update message. The address notified by this message is not the care-of address (the address of the FA which accommodates the mobile node 600) of the mobile node 600, but the home address of the mobile node 600.
(4) The address proxy server 800 encapsulates the packet received from the correspondent node CN 700, and transmits the encapsulated packet to the home address selected in the above described (2). This packet is transferred to the HA 200 according to the home address of the mobile node 600.
(5) Upon receipt of the encapsulated packet, the HA 200 further encapsulates the packet. The HA 200 then transmits the doubly encapsulated packet to the care-of address of the mobile node 600. In this way, the doubly encapsulated packet is transferred to the FA 500.
(6) Upon receipt of the above described packet, the FA 500 references the ANYCAST table or the visitor list, and transmits the received packet to the mobile node 600. Specifically, the service profile cache is searched by using the address (care-of address) of the FA 500 as a key, so that the default service profile cache shown in Fig. 54 hits. Accordingly, the received packet is decapsulated according to this service profile. Then, the service profile cache is again searched by using the home address of the mobile node 600 as a key. In this search, the service profile cache shown in Fig. 53 hits. The received packet is again decapsulated according to the service profile. The decapsulated packet is then delivered to the mobile node 600.

After receiving the binding update message by the above described (3), the correspondent node CN 700 transmits an encapsulated packet to the network after encapsulating the packet in which an ANYCAST address is set as a destination address, for itself.

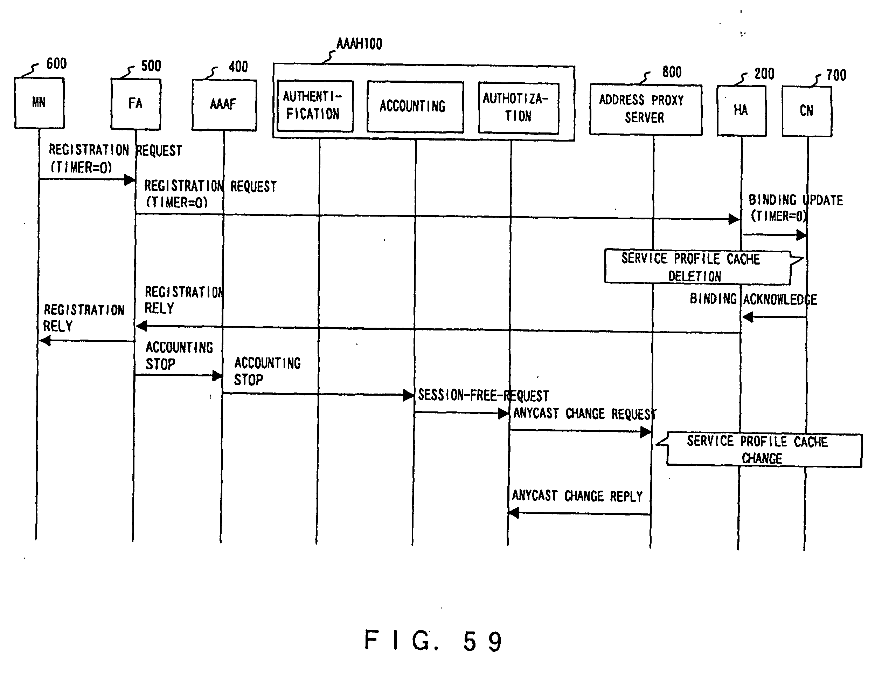

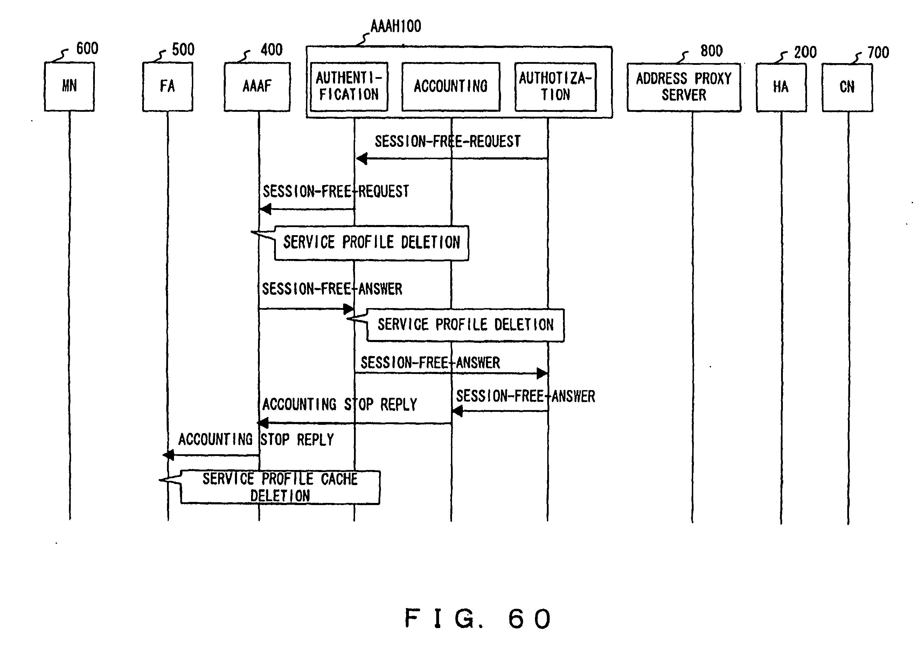

Figs. 59 and 60 exemplify the sequence for canceling a registration to an ANYCAST service. Here, assume that the AAAH 100 includes an authentication server, an authorization server, and an accounting server.
(1) The mobile node 600 transmits a registration request message in which "timer=0" is set to the FA 500 upon termination of a communication.
(2) The FA 500 forwards the registration request message to the HA 200.
(3) Upon receipt of the registration request message in which "timer=0" is set, the HA 200 transmits a binding update message in which "timer=0" is set to the correspondent node CN 700 to which a service profile is distributed.
(4) Upon receipt of the binding update message in which "timer=0" is set, the correspondent node CN 700 deletes the service profile cache of the mobile node 600, and returns a binding acknowledge message to the HA 200 at the same time.
(5) The HA 200 deletes the service profile cache of the mobile node 600, and returns a registration reply message to the FA 500 at the same time.
(6) The FA 500 transmits the registration reply message to the mobile node 600. Then, the FA 500 disconnects an access network link, and transmits an accounting stop message to the accounting server of the AAAH 100 at the same time.
(7) The accounting server stops the accounting process, and requests the authorization server to release the session. The authorization server requests the address proxy server 800 to delete the address information of the mobile node 600 from the service profile.
(8) The authorization server requests the authentication server of the AAAH 100 to release the session.
(9) The AAAH 100 requests the authentication server of the AAAF 400 to release the session.
(10) The AAAF 400 deletes the service profile, and returns a session release reply to the AAAH 100 at the same time.
(11) The AAAH 100 deletes the service profile, and returns the session release reply to the authorization server.
(12) The authorization server returns the session release reply to the accounting server.
(13) The accounting server returns accounting stop reply message to the FA 500.
(14) The FA 500 deletes the service cache.

According to the present invention, the functions for controlling services are centralized in an AAA, whereby the loads on an HA and an FA are reduced, and the maintenance (including a function addition and deletion) is facilitated.

Additionally, according to the present invention, a service profile which is referenced when a service is provided to a plurality of mobile nodes that request the same service set is shared, so that it becomes easy to manage the service profile, and a search speed can be increased owing to the compression of search data.

Furthermore, according to the present invention, a service-independent unit providing the fundamental functions (including a routing process and the mobile IP) which are not dependent on a service, and an individual service unit using the service-independent unit based on the information for providing each service are separated, thereby adding/changing a service with ease.

Still further, according to the present invention, a particular terminal can be accurately specified on a network-wide scale in a service with which one virtual address is assigned to a plurality of terminals.

## Claims

1. A mobile communications service providing system in which location registration request information is transmitted from a mobile node (600) to a home agent (200) via a foreign agent (500) and a server system (100, 400), and information in reply to the location registration request information is returned from the home agent (200) to the mobile node (600) via the server system (100, 400) and the foreign agent (500), so that a location of the mobile node (600) is registered to the home agent (200) and the foreign agent (500), and a mobile communications service is provided based on the registration, **characterized in that**:
the home agent (200) and the foreign agent (500) comprise a controlling unit determining a transfer destination of a packet;
the server system (100,400) comprises:
an extracting unit extracting a service profile corresponding to the mobile node (600) from a database (300) for managing a service profile which includes information for providing a service according to the location registration request information from the mobile node (600), based on a mobile node identifier identifying the mobile node (600) included in the location registration request information;
a service managing unit editing the service profile extracted by said extracting unit into a format that is available to said controlling unit so that the home agent and the foreign agent can use the service profile without editing it themselves, and
a distributing unit distributing the service profile edited by said service managing unit to the home agent (200) and the foreign agent (500), and
the home agent (200) and the foreign agent (500) provide a service by using said controlling unit according to the service profile distributed from the server system (100, 400).

2. The system according to claim 1, wherein
the server system (100, 400) is adapted to distribute a service profile to the home agent (200) and the foreign agent (500), only if the mobile node (600) requests a value-added service, and
the home agent (200) and the foreign agent (500) provide a fundamental service according to information that the home agent (200) and the foreign agent (500) themselves generate.

3. The system according to claim 1, wherein:
an address range available for a predetermined service is specified beforehand;
a service profile including information representing the address range which is specified beforehand is set in the home agent (200) and the foreign agent (500) as a condition for extracting a corresponding packet from among received packets; and
the server system (100, 400) assigns an address within the address range to the mobile node (600) that requests the predetermined service.

4. The system according to claim 1, wherein:
the server system (100, 400) comprises a home server device (100) which has a right to access the database (300) in order to extract the service profile for the mobile node (600), and a foreign server device (400) which does not have such an access right; and
the home server device (100) is adapted to distribute the service profile to the home agent (200) and the foreign server device (400), and the foreign server device (400) is adapted to forward the service profile to the foreign agent (500).

5. The system according to claim 1, wherein:
the server system (100, 400) comprises a home server device (100) which has a right to access the database (300) in order to extract the service profile for the mobile node (600), and a foreign server device (400) which does not have such an access right; and
the home server device (100) is adapted to distribute the service profile to the foreign server device (400), and the foreign server device (400) is adapted to forward the service profile to the home agent (200) and the foreign agent (500).

6. The system according to claim 1, wherein:
the server system (100, 400) comprises a home server device (100) which has a right to access the database (300) in order to extract the service profile for the mobile node (600), and a foreign server device (400) which does not have such an access right;
the mobile node (600) is adapted to notifie the home agent (200) of location registration request information via a second foreign agent (500n) when moving from a communication area of a first foreign agent (500p) to a communication area of the second foreign agent (500n)
the home agent (200) is adapted to update information for routing a packet so that a packet addressed to the mobile node (600) is transferred to the second foreign agent (500n); and
the foreign server device (400) is adapted to distribute the service profile to the second foreign agent (500n).

7. The system according to claim 1, wherein:
the server system (100, 400) comprises a home server device (100) which has a right to access the database (300) in order to extract the service profile for the mobile node (600), and first and second foreign server devices (400p, 400n) which do not have such an access right; is
the mobile node (600) is adapted to notifie the home agent (200) of location registration request information via a second foreign agent (500n), the second foreign server device (400n), and the home server device (100) when moving from a communication area of a first foreign agent (500p) managed by the first foreign server device (400p) to a communication area of the second foreign agent (500n) managed by the second foreign server device (400n);
the home agent (200) is adapted to update information for routing a packet so that a packet addressed to the mobile node (600) is transferred to the second foreign agent (500n); and
the home server device (100) is adapted to distribute the service profile to the second foreign server device (400n), which then forwards the service profile to the second foreign agent (500n).

8. The system according to claim 1, wherein:
the server system (100, 400) comprises a home server device (100) which has a right to access the database (300) in order to extract a service profile for the mobile node (600), and first and second foreign server devices (400n, 400P) which do not have such an access right;
the mobile node (600) is adapted to notifie the home agent (200) of location registration request information via a second foreign agent (500n), the second foreign server device (400n), the home server device (100), and the first foreign server device (400p) when moving from a communication area of a first foreign agent (500p) managed by the first foreign server device (400P) to a communication area of the second foreign agent (500n) managed by the second foreign server device (400n);
the home agent (200) is adapted to update information for routing a packet so that a packet addressed to the mobile node (600) is transferred to the second foreign agent (500n); and
the home server device (100) is adapted to distribute the service profile to the second foreign server device (400n), which then forwards the service profile to the second foreign agent (500n).

9. The system according to claim 1, wherein:
upon receipt of the packet addressed to the mobile node (600) from a correspondent node (700), the home agent (200) is adapted to distribute to the correspondent node (700) a service profile for extracting a packet in which the mobile node (600) is set as a destination; and
the correspondent node (700) is adapted to generate information for transmitting to the foreign agent (500) a packet which is extracted according to the distributed service profile.

10. The system according to claim 1, wherein
when providing a service for transferring to an arbitrary mobile node among a plurality of mobile nodes a packet with a virtual address assigned to the plurality of mobile nodes as a destination:
an address proxy server (800) receiving the packet with the virtual address is arranged; and
the server system (100, 400) is adapted to distribute to said address proxy server (800) a service profile for extracting the packet with the virtual address is assigned and transferring the extracted packet to the particular mobile node among the plurality of mobile nodes, and also distributes to a foreign agent (500) a service profile for transferring to the particular mobile node a packet addressed to the foreign agent (500) which accommodates the particular mobile node.

11. A mobile communications service providing method with which location registration request information is transmitted from a mobile node (600) to a home agent (200) via a foreign agent (500) and a server system (100, 400), and information in reply to the location registration request information is returned from the home agent (200) to the mobile node (600) via the server system (100, 400) and the foreign agent (500), so that a location of the mobile node (600) is registered to the home agent (200) and the foreign agent (500), and a mobile communications service is provided based on the registration, **characterized in that**:
the home agent (200) and the foreign agent (500) comprise a controlling unit determining a transfer destination of a packet, the method comprising:
extracting, by the server system (100, 400), a service profile corresponding to the mobile node (600) from a database (300) for managing a service profile which includes information for providing a service according to the location registration request information from the mobile node (600) based on a mobile node identifier identifying the mobile node included in the location registration request information;
editing, by the server system (100, 400), the extracted service profile into a format that is available to the controlling unit so that the home agent and the foreign agent can use the service profile without editing it themselves; and
distributing the edited service profile from the server system (100, 400) to the home agent (200) and the foreign agent (500), and
the home agent (200) and the foreign agent (500) provide a service by using the controlling unit according to the service profile distributed from the server system (100, 400).

12. A server system (100) for use in a mobile communications service providing system in which location registration request information is transmitted from a mobile node (600) to a home agent (200) via a foreign agent (500) and a server system (100), and information in reply to the location registration request information is returned from the home agent (200) to the mobile node (600) via the server system (100) and the foreign agent (500), so that a location of the mobile node (600) is registered to the home agent (200) and the foreign agent (500), and a mobile communications service is provided based on the registration, chacterized by said server system (100) comprising:
an extracting unit extracting a service profile for the mobile node (600) from a database (300) for managing a service profile which includes information for providing a service according to the location registration request information from a mobile node (600) based on a mobile node identifier identifying the mobile node (600) included in the location registration request information;
a service managing unit editing the service profile extracted by said extracting unit into a format that is available to a controlling unit for determining a transfer destination of a packet so that the home agent and the foreign agent can use the service profile without editing it themselves; and
a distributing unit distributing the edited service profile to the home agent (200) and the foreign agent (500)so that the home agent (200) and the foreign agent (500) provide a service by using the controlling unit according to the service profile edited by said service managing unit.

13. An agent device (200, 500) as a home agent (200) or a foreign agent (500) for use in a mobile communications service providing system in which location registration request information is transmitted from a mobile node (600) to the home agent (200) via the foreign agent (500) and a server system (100, 400), and information in reply to the location registration request information is returned from the home agent (200) to the mobile node (600) via the server system (100, 400) and the foreign agent (500), so that a location of the mobile node (600) is registered to the home agent (200) and the foreign agent (500), and a mobile communications service is provided based on the registration, **characterized by** said agent (200, 500) comprising:
a service-independent unit (204) determining a processing method for a received packet according to header information of the received packet;
an individual service controlling unit (203) using said service-independent unit (204) according to a service profile edited into a format that is available to said service-independent unit (204) by the server system (100, 400); and
a packet controlling unit (201) processing a packet according to a processing result of use of said service-independent unit (204), and determining a transfer destination of a packet.

## Patentansprüche

1. Mobilkommunikationsdienste-Bereitsstellungssystem, in welchem eine Ortsregistrierungs-Anfrageinformation von einem Mobilknoten (600) zu einem Hausvermittler (200) über einen fremden Vermittler (500) und ein Serversystem (100, 400) übertragen wird, und eine Information als Antwort auf die Ortsregistrierungs-Anforderungsinformation von dem Hausvermittler (200) zu dem Mobilknoten (600) über das Serversystem (100, 400) und den fremden Vermittler (500) zurückgegeben wird, so dass ein Ort eines Mobilknotens für den Hausvermittler (200) und den fremden Vermittler (500) registriert ist, und ein Mobilkommunikationsdienst auf der Grundlage der Registrierung bereitgestellt wird, **dadurch gekennzeichnet, dass**:
der Hausvermittler (200) und der fremde Vermittler (500) eine Steuereinheit umfassen, die ein Übertragungsziel eines Pakets bestimmt;
wobei das Serversystem (100, 400) umfasst:
eine Extraktionseinheit, die ein Diensteprofil, das dem Mobilknoten (600) entspricht, aus einer Datenbank (300) zum Verwalten eines Diensteprofils, das eine Information zum Bereitstellen eines Dienstes gemäß der Ortsregistrierungs-Anforderungsinformation von dem Mobilknoten (600) einschließt, auf der Grundlage eines den Mobilknoten (600) identifizierenden Mobilknoten-Identifizierers, der in der Ortsregistrierungs-Anforderungsinformation eingeschlossen ist, extrahiert; eine Diensteverwaltungseinheit, die das Diensteprofil, das von der Extraktionseinheit extrahiert wird, in ein Format editiert, das für die Steuereinheit verfügbar ist, so dass der Hausvermittler und der fremde Vermittler das Diensteprofil verwenden können, ohne es selbst zu editieren, und
eine Verteilungseinheit, die das Diensteprofil, das von der Diensteverwaltungseinheit editiert ist, zu dem Hausvermittler (200) und dem fremden Vermittler (500) verteilt, und
der Hausvermittler (200) und der fremde Vermittler (500) einen Dienst unter Verwendung der Steuereinheit gemäß dem Diensteprofil bereitstellen, das von dem Serversystem (100, 400) verteilt ist.

2. System nach Anspruch 1, wobei
das Serversystem (100, 400) ausgelegt ist, ein Diensteprofil zu dem Hausvermittler (200) und dem fremden Vermittler (500) nur dann zu verteilen, wenn der Mobilknoten (600) einen Mehrwert-Dienst anfordert, und
der Hausvermittler (200) und der fremde Vermittler (500) einen Fundamental-Dienst gemäß einer Information bereitstellt, die der Hausvermittler (200) und der fremde Vermittler (500) selbst erzeugen.

3. System nach Anspruch 1, wobei:
ein Adressbereich, der für einen vorbestimmten Dienst verfügbar ist, zuvor spezifiziert ist;
ein Diensteprofil, das eine Information einschließt, die den Adressbereich darstellt, der zuvor spezifiziert ist, in dem Hausvermittler (200) und dem fremden Vermittler (500) als eine Bedingung zum Extrahieren eines entsprechenden Pakets aus empfangenen Paketen eingestellt ist; und
das Serversystem (100, 400) eine Adresse innerhalb des Adressbereichs dem Mobilknoten (600), der den vorbestimmten Dienst anfordert, zuweist.

4. System nach Anspruch 1, wobei:
das Serversystem (100, 400) eine Hausservervorrichtung (100), die ein Zugriffsrecht auf die Datenbank (300) aufweist, um das Diensteprofil für den Mobilknoten (600) zu extrahieren, und eine fremde Servervorrichtung (400) umfasst, die ein derartiges Zugriffsrecht nicht aufweist; und
die Hausservervorrichtung (100) ausgelegt ist, das Diensteprofil zu dem Hausvermittler (200) und der fremden Vermittlervorrichtung (400) zu verteilen, und die fremde Servervorrichtung (400) ausgelegt ist, das Diensteprofil zu dem fremden Vermittler (500) zu schicken.

5. System nach Anspruch 1, wobei:
das Serversystem (100, 400) eine Hausservervorrichtung (100), die ein Zugriffsrecht auf die Datenbank (300) aufweist, um das Diensteprofil für den Mobilknoten (600) zu extrahieren, und eine fremde Servervorrichtung (400) umfasst, die ein derartiges Zugriffsrecht nicht aufweist; und
die Hausservervorrichtung (100) ausgelegt ist, das Diensteprofil zu der fremden Dienstevorrichtung (400) zu verteilen, und die fremde Dienstevorrichtung (400) ausgelegt ist, das Diensteprofil zu dem Hausvermittler (200) und dem fremden Vermittler (500) zu schicken.

6. System nach Anspruch 1, wobei:
das Dienstesystem (100, 400) eine Hausservervorrichtung (100), die ein Zugriffsrecht auf die Datenbank (300) aufweist, um das Diensteprofil für den Mobilknoten (600) zu extrahieren, und eine fremde Servervorrichtung (400) umfasst, die ein derartiges Zugriffsrecht nicht aufweist;
der Mobilknoten (600) ausgelegt ist, den Hausvermittler (200) über eine Ortsregistrierungs-Anforderungsinformation über einen zweiten fremden Vermittler (500n) zu benachrichtigen, wenn er sich von einem Kommunikationsgebiet eines ersten fremden Vermittlers (500p) zu einem Kommunikationsgebiet des zweiten fremden Vermittlers (500n) bewegt;
der Hausvermittler (200) ausgelegt ist, eine Information zum Leiten eines Pakets zu aktualisieren, so dass ein Paket, das an den Mobilknoten (600) adressiert ist, zu dem zweiten fremden Vermittler (500n) übertragen wird; und
die fremde Servervorrichtung (400) ausgelegt ist, das Diensteprofil zu dem zweiten fremden Vermittler (500n) zu verteilen.

7. System nach Anspruch 1, wobei:
das Serversystem (100, 400) eine Hausservervorrichtung (100), die ein Zugriffsrecht auf die Datenbank (300) aufweist, um das Diensteprofil für den Mobilknoten (600) zu extrahieren, und erste und zweite fremde Servervorrichtungen (400p, 400n) umfasst, die ein derartiges Zugriffsrecht nicht aufweisen;
der Mobilknoten (600) ausgelegt ist, den Hausvermittler (200) über eine Ortsregistrierungs-Anforderungsinformation über einen zweiten fremden Vermittler (500n), die zweite fremde Servervorrichtung (400n) und die Hausservervorrichtung (100) zu informieren, wenn er sich von einem Kommunikationsgebiet eines ersten fremden Vermittlers (500p), der von der ersten fremden Servervorrichtung (400p) verwaltet wird, zu einem Kommunikationsgebiet des zweiten fremden Vermittlers (500n) bewegt, der von der zweiten fremden Servervorrichtung (400n) verwaltet wird;
der Hausvermittler (200) ausgelegt ist, eine Information zum Leiten eines Pakets zu aktualisieren, so dass ein Paket, das an den Mobilknoten (600) adressiert ist, zu dem zweiten fremden Vermittler (500n) übertragen wird; und
die Hausservervorrichtung (100) ausgelegt ist, das Diensteprofil zu der zweiten fremden Servervorrichtung (400n) zu verteilen, die das Diensteprofil dann zu dem zweiten fremden Vermittler (500n) schickt.

8. System nach Anspruch 1, wobei:
das Serversystem (100, 400) eine Hausservervorrichtung (100), die ein Zugriffsrecht auf die Datenbank (300) aufweist, um ein Diensteprofil für den Mobilknoten (600) zu extrahieren, und erste und zweite fremde Servervorrichtungen (400n, 400P) umfasst, die ein derartiges Zugriffsrecht nicht aufweisen;
der Mobilknoten (600) ausgelegt ist, den Hausvermittler (200) über eine Ortsregistrierungs-Anforderungsinformation über einen zweiten fremden Vermittler (500n), die zweite fremde Servervorrichtung (400n), die Hausservervorrichtung (100) und die erste fremde Servervorrichtung (400p) zu informieren, wenn er sich von einem Kommunikationsgebiet eines ersten fremden Vermittlers (500p), der von der ersten fremden Servervorrichtung (400P) verwaltet wird, zu einem Kommunikationsgebiet des zweiten fremden Vermittlers (500n) bewegt, der von der zweiten fremden Servervorrichtung (400n) verwaltet wird;
der Hausvermittler (200) ausgelegt ist, eine Information zum Leiten eines Pakets zu aktualisieren, so dass ein Paket, das an den Mobilknoten (600) adressiert ist, zu dem zweiten fremden Vermittler (500n) übertragen wird; und
die Hausservervorrichtung (100) ausgelegt ist, das Diensteprofil zu der zweiten fremden Servervorrichtung (400n) zu verteilen, die das Diensteprofil dann zu dem zweiten fremden Vermittler (500n) schickt.

9. System nach Anspruch 1, wobei:
auf einen Empfang des Pakets hin, das an den Mobilknoten (600) von einem entsprechenden Knoten (700) adressiert ist, der Hausvermittler (200) ausgelegt ist, ein Diensteprofil zum Extrahieren eines Pakets, in welchem der Mobilknoten (600) als ein Ziel eingestellt ist, zu dem entsprechenden Knoten (700) zu verteilen; und
der entsprechende Knoten (700) ausgelegt ist, eine Information zum Übertragen eines Pakets, das gemäß dem verteilten Diensteprofil extrahiert ist, zu dem fremden Vermittler (500) zu übertragen.

10. System nach Anspruch 1, wobei
dann, wenn ein Dienst zum Übertragen, zu einem beliebigen Mobilknoten unter einer Mehrzahl von Mobilknoten, eines Pakets mit einer virtuellen Adresse, die der Mehrzahl von Mobilknoten zugewiesen ist, als ein Ziel bereitgestellt wird:
ein Adress-Proxyserver (800), der das Paket mit der virtuellen Adresse empfängt, angeordnet ist; und
das Serversystem (100, 400) ausgelegt ist, zu dem Adress-Proxyserver (800) ein Diensteprofil zum Extrahieren des Pakets, dem die virtuelle Adresse zugewiesen ist, und zum Übertragen des extrahierten Pakets zu dem bestimmten Mobilknoten unter der Mehrzahl von Mobilknoten zu verteilen, und auch zu einem fremden Vermittler (500) ein Diensteprofil zum Übertragen zu dem bestimmten Mobilknoten, eines Pakets, das an den fremden Vermittler (500) adressiert ist, der den bestimmten Mobilknoten enthält, zu verteilen.

11. Mobilkommunikations-Dienstebereitstellungsverfahren, mit welchem eine Ortsregistrierungs-Anforderungsinformation von einem Mobilknoten (600) zu einem Hausvermittler (200) über einen fremden Vermittler (500) und ein Serversystem (100, 400) übertragen wird, und mit welchem eine Information als Antwort auf die Ortsregistrierungs-Anforderungsinformation von dem Hausvermittler (200) zu dem Mobilknoten (600) über das Serversystem (100, 400) und den fremden Vermittler (500) zurückgegeben wird, so dass ein Ort des Mobilknotens (600) für den Hausvermittler (200) und den fremden Vermittler (500) registriert wird, und ein Mobilkommunikationsdienst auf der Grundlage der Registrierung bereitgestellt wird, **dadurch gekennzeichnet, dass**:
der Hausvermittler (200) und der fremde Vermittler (500) eine Steuereinheit umfasst,, die ein Übertragungsziel eines Pakets bestimmt, wobei das Verfahren umfasst:
Extrahieren, durch das Serversystem (100, 400) eines Diensteprofils, das dem Mobilknoten (600) entspricht, aus einer Datenbank (300) zum Verwalten eines Diensteprofils, das eine Information zum Bereitstellen eines Dienstes gemäß der Ortsregistrierungs-Anforderungsinformation von dem Mobilknoten (600) einschließt, auf der Grundlage eines den Mobilknoten identifizierenden Mobilknoten-Identifizierers, der in der Ortsregistrierungs-Anforderungsinformation enthalten ist;
Editieren, durch das Serversystem (100, 400), des extrahierten Diensteprofils in ein Format, das für die Steuereinheit verfügbar ist, so dass der Hausvermittler und der fremde Vermittler das Diensteprofil verwenden können, ohne es selbst zu editieren; und
Verteilen des editierten Diensteprofils von dem Serversystem (100, 400) zu dem Hausvermittler (200) und dem fremden Vermittler (500), und
wobei der Hausvermittler (200) und der fremde Vermittler (500) einen Dienst unter Verwendung der Steuereinheit gemäß dem Diensteprofil bereitstellen, das von dem Serversystem (100, 400) verteilt wird.

12. Serversystem (100) zur Verwendung in einem Mobilkommunikations-Dienstebereitstellungssystem, in welchem eine Ortsregistrierungs-Anforderungsinformation von einem Mobilknoten (600) zu einem Hausvermittler (200) über einen fremden Vermittler (500) und ein Serversystem (100) übertragen wird, und bei dem eine Information als Antwort auf die Ortsregistrierungs-Anforderungsinformation von dem Hausvermittler (200) zu dem Mobilknoten (600) über das Serversystem (100) und den fremden Vermittler (500) zurückgegeben wird, so dass ein Ort des Mobilknotens für den Hausvermittler (200) und den fremden Vermittler (500) registriert ist, und bei dem ein Mobilkommunikationsdienst auf der Grundlage der Registrierung bereitgestellt ist, **dadurch gekennzeichnet, dass** das Serversystem (100) umfasst:
eine Extraktionseinheit, die ein Diensteprofil für den Mobilknoten (600) aus einer Datenbank (300) zum Verwalten eines Diensteprofils, das eine Information zum Bereitstellen eines Dienstes gemäß der Ortsregistrierungs-Anforderungsinformation von einem Mobilknoten (600) einschließt, auf der Grundlage eines den Mobilknoten (600) identifizierenden Mobilknoten-Identifizierers extrahiert, der in der Ortsregistrierungs-Anforderungsinformation enthalten ist;
eine Diensteverwaltungseinheit, die das Diensteprofil, das von der Extraktionseinheit extrahiert ist, in ein Format editiert, das für eine Steuereinheit verfügbar ist, zum Bestimmen eines Übertragungsziels eines Pakets; und
eine Verteilungseinheit, die das editierte Diensteprofil zu dem Hausvermittler (200) und dem fremden Vermittler (500) verteilt, so dass der Hausvermittler (200) und der fremde Vermittler (500) einen Dienst unter Verwendung der Steuereinheit gemäß dem Diensteprofil bereitstellen, das von der Diensteverwaltungseinheit editiert ist.

13. Vermittlervorrichtung (200, 500) als ein Hausvermittler (200) oder ein fremder Vermittler (500) zur Verwendung in einem Mobilkommunikations-Dienstebereitstellungssystem, in welchem eine Ortsregistrierungs-Anforderungsinformation von einem Mobilknoten (600) zu dem Hausvermittler (200) über den fremden Vermittler (500) und ein Serversystem (100, 400) übertragen wird, und bei dem eine Information als Antwort auf die Ortsregistrierungs-Anforderungsinformation von dem Hausvermittler (200) zu dem Mobilknoten (600) über das Serversystem (100, 400) und den fremden Vermittler (500) zurückgegeben wird, so dass ein Ort des Mobilknotens (600) für den Hausvermittler (200) und den fremden Vermittler (500) registriert ist, und bei dem ein Mobilkommunikationsdienst auf der Grundlage der Registrierung bereitgestellt wird, **dadurch gekennzeichnet, dass** der Vermittler (200, 500) umfasst:
eine Dienste-unabhängige Einheit (204), die ein Verarbeitungsverfahren für ein empfangenes Paket gemäß einer Header-Information des empfangenen Pakets bestimmt;
eine individuelle Dienste-Steuereinheit (203), die die Dienste-unabhängige Einheit (204) gemäß einem Diensteprofil verwendet, das in ein Format, das für die Dienste-unabhängige Einheit (204) verfügbar ist, durch das Serversystem (100, 400) editiert ist; und
eine Paketsteuereinheit (201), die ein Paket gemäß einem Verarbeitungsergebnis einer Verwendung der Diensteunabhängigen Einheit (204) verarbeitet und ein Übertragungsziel eines Pakets bestimmt.

## Revendications

1. Système de fourniture de services de communications mobiles dans lequel une information de demande d'enregistrement de localisation est transmise d'un noeud mobile (600) à un agent nominal (200) via un agent étranger (500) et un système de serveur (100, 400), èt une information en réponse à l'information de demande d'enregistrement de localisation est renvoyée de l'agent nominal (200) au noeud mobile (600) via le système de serveur (100, 400) et l'agent étranger (500), de sorte qu'une localisation du noeud mobile (600) soit enregistrée dans l'agent nominal (200) et l'agent étranger (500), et un service de communications mobiles est fourni sur la base de l'enregistrement, **caractérisé en ce que** :
l'agent nominal (200) et l'agent étranger (500) comprennent une unité de contrôle déterminant une destination de transfert d'un paquet ;
le système de serveur (100, 400) comprend :
une unité d'extraction extrayant un profil de service correspondant au noeud mobile (600) d'une base de données (300) pour gérer un profil de service qui inclut une information pour fournir un service selon l'information de demande d'enregistrement de localisation depuis le noeud mobile (600), sur la base d'un identificateur de noeud mobile identifiant le noeud mobile (600) inclus dans l'information de demande d'enregistrement de localisation ;
une unité de gestion de services éditant le profil de service extrait par ladite unité d'extraction en un format qui est disponible pour ladite unité de contrôle de sorte que l'agent nominal et l'agent étranger puissent utiliser le profil de service sans l'éditer eux-mêmes, et
une unité de distribution distribuant le profil de service édité par ladite unité de gestion de services à l'agent nominal (200) et à l'agent étranger (500), et
l'agent nominal (200) et l'agent étranger (500) fournissent un service en utilisant ladite unité de contrôle selon le profil de service distribué depuis le système de serveur (100, 400).

2. Système selon la revendication 1, dans lequel
le système de serveur (100, 400) est adapté pour distribuer un profil de service à l'agent nominal (200) et à l'agent étranger (500), seulement si le noeud mobile (600) demande un service à valeur ajoutée, et
l'agent nominal (200) et l'agent étranger (500) fournissent un service fondamental selon l'information que l'agent nominal (200) et l'agent étranger (500) génèrent eux-mêmes.

3. Système selon la revendication 1, dans lequel :
une plage d'adresses disponible pour un service prédéterminé est spécifiée à l'avance ;
un profil de service incluant une information représentant la plage d'adresses qui est spécifiée à l'avance est établi dans l'agent nominal (200) et dans l'agent étranger (500) comme une condition pour extraire un paquet correspondant parmi les paquets reçus ; et
le système de serveur (100, 400) affecte une adresse de la plage d'adresses au noeud mobile (600) qui demande le service prédéterminé.

4. Système selon la revendication 1, dans lequel :
le système de serveur (100, 400) comprend un dispositif de serveur nominal (100) qui a un droit d'accès à la base de données (300) afin d'extraire le profil de service pour le noeud mobile (600), et un dispositif de serveur étranger (400) qui n'a pas un tel droit d'accès ; et
le dispositif de serveur nominal (100) est adapté pour distribuer le profil de service à l'agent nominal (200) et au dispositif de serveur étranger (400), et le dispositif de serveur étranger (400) est adapté pour transférer le profil de service à l'agent étranger (500).

5. Système selon la revendication 1, dans lequel :
le système de serveur (100, 400) comprend un dispositif de serveur nominal (100) qui a un droit d'accès à la base de données (300) afin d'extraire le profil de service pour le noeud mobile (600), et un dispositif de serveur étranger (400) qui n'a pas un tel droit d'accès ; et
le dispositif de serveur nominal (100) est adapté pour distribuer le profil de service au dispositif de serveur étranger (400), et le dispositif de serveur étranger (400) est adapté pour transférer le profil de service à l'agent nominal (200) et à l'agent étranger (500).

6. Système selon la revendication 1, dans lequel :
le système de serveur (100, 400) comprend un dispositif de serveur nominal (100) qui a un droit d'accès à la base de données (300) afin d'extraire le profil de service pour le noeud mobile (600), et un dispositif de serveur étranger (400) qui n'a pas un tel droit d'accès ;
le noeud mobile (600) est adapté pour notifier à l'agent nominal (200) une information de demande d'enregistrement de localisation via un second agent étranger (500n) lorsqu'il se déplace d'une zone de communication d'un premier agent étranger (500p) à une zone de communication du second agent étranger (500n) ;
l'agent nominal (200) est adapté pour mettre à jour une information pour acheminer un paquet de sorte qu'un paquet adressé au noeud mobile (600) soit transféré au second agent étranger (500n) ; et
le dispositif de serveur étranger (400) est adapté pour distribuer le profil de service au second agent étranger (500n).

7. Système selon la revendication 1, dans lequel :
le système de serveur (100, 400) comprend un dispositif de serveur nominal (100) qui a un droit d'accès à la base de données (300) afin d'extraire le profil de service pour le noeud mobile (600), et des premier et second dispositifs de serveur étranger (400p, 400n) qui n'ont pas un tel droit d'accès ;
le noeud mobile (600) est adapté pour notifier à l'agent nominal (200) une information de demande d'enregistrement de localisation via un second agent étranger (500n), le second dispositif de serveur étranger (400n), et le dispositif de serveur nominal (100) lorsqu'il se déplace d'une zone de communication d'un premier agent étranger (500p) gérée par le premier dispositif de serveur étranger (400p) à une zone de communication du second agent étranger (500n) gérée par le second dispositif de serveur étranger (400n) ;
l'agent nominal (200) est adapté pour mettre à jour une information pour acheminer un paquet de sorte qu'un paquet adressé au noeud mobile (600) soit transféré au second agent étranger (500n) ; et
le dispositif de serveur nominal (100) est adapté pour distribuer le profil de service au second dispositif de serveur étranger (400n), qui transfère ensuite le profil de service au second agent étranger (500n).

8. Système selon la revendication 1, dans lequel :
le système de serveur (100, 400) comprend un dispositif de serveur nominal (100) qui a un droit d'accès à la base de données (300) afin d'extraire un profil de service pour le noeud mobile (600), et des premier et second dispositifs de serveur étranger (400p, 400n) qui n'ont pas un tel droit d'accès ;
le noeud mobile (600) est adapté pour notifier à l'agent nominal (200) une information de demande d'enregistrement de localisation via un second agent étranger (500n), le second dispositif de serveur étranger (400n), le dispositif de serveur nominal (100), et le premier dispositif de serveur étranger (400p) lorsqu'il se déplace d'une zone de communication d'un premier agent étranger (500p) gérée par le premier dispositif de serveur étranger (400p) à une zone de communication du second agent étranger (500n) gérée par le second dispositif de serveur étranger (400n) ;
l'agent nominal (200) est adapté pour mettre à jour une information pour acheminer un paquet de sorte qu'un paquet adressé au noeud mobile (600) soit transféré au second agent étranger (500n) ; et
le dispositif de serveur nominal (100) est adapté pour distribuer le profil de service au second dispositif de serveur étranger (400n), qui transfère ensuite le profil de service au second agent étranger (500n).

9. Système selon la revendication 1, dans lequel :
à la réception du paquet adressé au noeud mobile (600) provenant d'un noeud correspondant (700), l'agent nominal (200) est adapté pour distribuer au noeud correspondant (700) un profil de service pour extraire un paquet dans lequel le noeud mobile (600) est établi comme une destination ; et
le noeud correspondant (700) est adapté pour générer une information pour transmettre à l'agent étranger (500) un paquet qui est extrait selon le profil de service distribué.

10. Système selon la revendication 1, dans lequel
lors de la fourniture d'un service pour transférer à un noeud mobile arbitraire parmi une pluralité de noeuds mobiles un paquet avec une adresse virtuelle affectée à la pluralité de noeuds mobiles comme une destination :
un serveur mandataire d'adresses (800) recevant le paquet avec l'adresse virtuelle est disposé ; et
le système de serveur (100, 400) est adapté pour distribuer audit serveur mandataire d'adresses (800) un profil de service pour extraire le paquet avec l'adresse virtuelle qui est affectée et transférer le paquet extrait au noeud mobile particulier parmi la pluralité de noeuds mobiles, et distribue également à un agent étranger (500) un profil de service pour transférer au noeud mobile particulier un paquet adressé à l'agent étranger (500) qui loge le noeud mobile particulier.

11. Procédé de fourniture de services de communications mobiles avec lequel une information de demande d'enregistrement de localisation est transmise d'un noeud mobile (600) à un agent nominal (200) via un agent étranger (500) et un système de serveur (100, 400), et une information en réponse à l'information de demande d'enregistrement de localisation est renvoyée de l'agent nominal (200) au noeud mobile (600) via le système de serveur (100, 400) et l'agent étranger (500), de sorte qu'une localisation du noeud mobile (600) soit enregistrée dans l'agent nominal (200) et l'agent étranger (500), et un service de communications mobiles est fourni sur la base de l'enregistrement, **caractérisé en ce que** :
l'agent nominal (200) et l'agent étranger (500) comprennent une unité de contrôle déterminant une destination de transfert d'un paquet, le procédé comprenant :
l'extraction, par le système de serveur (100, 400), d'un profil de service correspondant au noeud mobile (600) d'une base de données (300) pour gérer un profil de service qui inclut une information pour fournir un service selon l'information de demande d'enregistrement de localisation depuis le noeud mobile (600) sur la base d'un identificateur de noeud mobile identifiant le noeud mobile inclus dans l'information de demande d'enregistrement de localisation ;
l'édition, par le système de serveur (100, 400), du profil de service extrait en un format qui est disponible pour l'unité de contrôle de sorte que l'agent nominal et l'agent étranger puissent utiliser le profil de service sans l'éditer eux-mêmes, et
la distribution du profil de service édité du système de serveur (100, 400) à l'agent nominal (200) et à l'agent étranger (500), et
l'agent nominal (200) et l'agent étranger (500) fournissent un service en utilisant l'unité de contrôle selon le profil de service distribué depuis le système de serveur (100, 400).

12. Système de serveur (100) pour l'utilisation dans un système de fourniture de services de communications mobiles dans lequel une information de demande d'enregistrement de localisation est transmise d'un noeud mobile (600) à un agent nominal (200) via un agent étranger (500) et un système de serveur (100), et une information en réponse à l'information de demande d'enregistrement de localisation est renvoyée de l'agent nominal (200) au noeud mobile (600) via le système de serveur (100) et l'agent étranger (500), de sorte qu'une localisation du noeud mobile (600) soit enregistrée dans l'agent nominal (200) et l'agent étranger (500), et un service de communications mobiles est fourni sur la base de l'enregistrement, **caractérisé en ce que** ledit système de serveur (100) comprend :
une unité d'extraction extrayant un profil de service pour le noeud mobile (600) d'une base de données (300) pour gérer un profil de service qui inclut une information pour fournir un service selon l'information de demande d'enregistrement de localisation depuis un noeud mobile (600) sur la base d'un identificateur de noeud mobile identifiant le noeud mobile (600) inclus dans l'information de demande d'enregistrement de localisation ;
une unité de gestion de services éditant le profil de service extrait par ladite unité d'extraction en un format qui est disponible pour une unité de contrôle pour déterminer une destination de transfert d'un paquet de sorte que l'agent nominal et l'agent étranger puissent utiliser le profil de service sans l'éditer eux-mêmes ; et
une unité de distribution distribuant le profil de service édité à l'agent nominal (200) et à l'agent étranger (500) de sorte que l'agent nominal (200) et l'agent étranger (500) fournissent un service en utilisant l'unité de contrôle selon le profil de service édité par ladite unité de gestion de services.

13. Dispositif d'agent (200, 500) comme un agent nominal (200) ou un agent étranger (500) pour l'utilisation dans un système de fourniture de services de communications mobiles dans lequel une information de demande d'enregistrement de localisation est transmise d'un noeud mobile (600) à l'agent nominal (200) via l'agent étranger (500) et un système de serveur (100, 400), et une information en réponse à l'information de demande d'enregistrement de localisation est renvoyée de l'agent nominal (200) au noeud mobile (600) via le système de serveur (100, 400) et l'agent étranger (500), de sorte qu'une localisation du noeud mobile (600) soit enregistrée dans l'agent nominal (200) et l'agent étranger (500), et un service de communications mobiles est fourni sur la base de l'enregistrement, **caractérisé en ce que** ledit agent (200, 500) comprend :
une unité indépendante des services (204) déterminant un procédé de traitement pour un paquet reçu selon une information d'en-tête du paquet reçu ;
une unité de contrôle de services individuelle (203) utilisant ladite unité indépendante des services (204) selon un profil de service qui est édité en un format qui est disponible pour ladite unité indépendante des services (204) par le système de serveur (100, 400) ; et
une unité de contrôle de paquet (201) traitant un paquet selon un résultat de traitement d'utilisation de ladite unité indépendante des services (204), et déterminant une destination de transfert d'un paquet.
